(19) Europäisches Patentamt
European Patent Office
Office européen des brevets

(11) **EP 4 325 652 A2**

(12) **EUROPEAN PATENT APPLICATION**

(43) Date of publication:
**21.02.2024 Bulletin 2024/08**

(21) Application number: **23218081.0**

(22) Date of filing: **19.01.2022**

(51) International Patent Classification (IPC):
***H01M 50/534*** *(2021.01)*

(52) Cooperative Patent Classification (CPC):
**H01M 10/0431; H01M 50/107; H01M 50/152;
H01M 50/167; H01M 50/179; H01M 50/184;
H01M 50/186; H01M 50/188; H01M 50/534;
H01M 50/536; H01M 50/538; H01M 50/545;
H01M 50/586; H01M 50/593;** H01M 50/213; (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 19.01.2021 KR 20210007278
19.02.2021 KR 20210022894
19.02.2021 KR 20210022891
19.02.2021 KR 20210022897
19.02.2021 KR 20210022881
23.02.2021 KR 20210024424
08.03.2021 KR 20210030300
08.03.2021 KR 20210030291
09.04.2021 KR 20210046798
04.05.2021 KR 20210058183
14.06.2021 KR 20210077046
28.06.2021 KR 20210084326
01.10.2021 KR 20210131225
01.10.2021 KR 20210131208
01.10.2021 KR 20210131205
01.10.2021 KR 20210131207
01.10.2021 KR 20210131215
14.10.2021 KR 20210137001
15.10.2021 KR 20210137856
22.10.2021 KR 20210142196
09.11.2021 KR 20210153472
19.11.2021 KR 20210160823
24.11.2021 KR 20210163809
26.11.2021 KR 20210165866
03.12.2021 KR 20210172446
10.12.2021 KR 20210177091
31.12.2021 KR 20210194611
31.12.2021 KR 20210194612
31.12.2021 KR 20210194572
31.12.2021 KR 20210194593
31.12.2021 KR 20210194610
05.01.2022 KR 20220001802

(62) Document number(s) of the earlier application(s) in
accordance with Art. 76 EPC:
**22152237.8 / 4 044 358**

(71) Applicant: **LG ENERGY SOLUTION, LTD.**
Seoul 07335 (KR)

(72) Inventors:
• CHOI, Su-Ji
07335 Seoul (KR)
• HWANGBO, Kwang-Su
07335 Seoul (KR)
• KIM, Do-Gyun
07335 Seoul (KR)
• MIN, Geon-Woo
07335 Seoul (KR)
• JO, Min-Ki
07335 Seoul (KR)
• LIM, Jae-Won
07335 Seoul (KR)
• KIM, Hak-Kyun
07335 Seoul (KR)
• LEE, Je-Jun
07335 Seoul (KR)
• JUNG, Ji-Min
07335 Seoul (KR)
• LIM, Hae-Jin
07335 Seoul (KR)
• KIM, Jae-Woong
07335 Seoul (KR)
• PARK, Jong-Sik
07335 Seoul (KR)
• CHOE, Yu-Sung
07335 Seoul (KR)
• LEE, Byoung-Gu
07335 Seoul (KR)
• RYU, Duk-Hyun
07335 Seoul (KR)
• LEE, Kwan-Hee
07335 Seoul (KR)
• LEE, Jae-Eun
07335 Seoul (KR)
• KANG, Bo-Hyun
07335 Seoul (KR)
• KONG, Jin-Hak
07335 Seoul (KR)

- **LEE, Soon-O**
  **07335 Seoul (KR)**
- **CHOI, Kyu-Hyun**
  **07335 Seoul (KR)**
- **PARK, Pil-Kyu**
  **07335 Seoul (KR)**

(74) Representative: **Goddar, Heinz J.**
  **Boehmert & Boehmert**
  **Anwaltspartnerschaft mbB**
  **Pettenkoferstrasse 22**
  **80336 München (DE)**

Remarks:

This application was filed on 19.12.2023 as a divisional application to the application mentioned under INID code 62.

(54) **BATTERY, CURRENT COLLECTOR FOR A BATTERY, BATTERY PACK AND VEHICLE INCLUDING A BATTERY PACK**

(57) A battery according to an embodiment of the present disclosure includes an electrode assembly formed by winding a first electrode, a second electrode and a separator interposed between the first electrode and the second electrode around a winding axis, wherein the first electrode includes a first uncoated region free of an active material layer, the first uncoated region being disposed adjacent to an edge of the first electrode extending along a winding direction of the electrode assembly, wherein the first uncoated region is exposed from the separator and at least a part of the first uncoated region itself is used as an electrode tab; a housing in which the electrode assembly is arranged; a first current collector including an edge portion arranged on the electrode assembly, a first uncoated region coupling portion extending inward from the edge portion towards the winding axis and coupled with the first uncoated region, and a terminal coupling portion spaced apart from the first uncoated region coupling portion; and a terminal which is coupled with the terminal coupling portion.

**FIG. 6**

**(Cont. next page)**

(52) Cooperative Patent Classification (CPC): (Cont.)
H01M 50/249; H01M 50/503; H01M 2220/20;
Y02E 60/10; Y02P 70/50

**Description**

TECHNICAL FIELD

The present disclosure relates to a battery, a current collector for a battery, a battery pack and a vehicle including a battery pack. More particularly, the present disclosure relates to a battery having a structure for preventing forces from concentrating on a welded portion between components when external impacts or vibrations are applied during the use of a secondary battery, a current collector for use in such a battery, and to a battery pack and a vehicle including the same.

BACKGROUND ART

Secondary batteries are used in a wide range of applications. Among them, for example, battery packs applied to devices such as electric vehicles require high capacity and high output. In addition, the battery pack having high capacity and high output may include, for example, cylindrical batteries as unit battery.

In the case of the cylindrical batteries having high capacity and high output characteristics, to increase the current collection efficiency, electrode tabs may be provided over two surfaces of a jelly roll, and a current collector may be coupled onto each of the two surfaces of the jelly roll. Through the application of this structure, it is possible to maximize the contact area of the electrode tabs and the current collectors, and minimize the resistance at the connected portion between components.

As described above, when the cylindrical batteries is applied to, for example, a device such as a vehicle, external impacts and vibrations may be frequently applied while in used, and as a consequence, a coupled portion for electrical connection between components may be damaged. The damage of the coupled portion causes defects of products.

Alternatively, in case that the coupling area between components reduces due to damage in part of the welded portion even though electrical connection is not completely interrupted when the coupled portion for electrical connection is damaged, an internal short may occur due to excessive heat induced by the increased resistance and the consequential component deformation.

Accordingly, there is a need for development of a cylindrical battery having a structure of preventing forces from concentrating on the coupled portion between components when external impacts and/or vibrations are applied during the use of the cylindrical battery.

In the case of the cylindrical battery, a separator serving as an insulator is interposed between a positive electrode and a negative electrode, and they are wound to form an electrode assembly in the form of a jelly roll, which is inserted into a housing together with an electrolyte to construct a battery. In addition, a strip-shaped electrode tab may be connected to an uncoated region of each of the positive electrode and the negative electrode, and the electrode tab electrically connects the electrode assembly to an electrode terminal exposed to the outside. For reference, the positive electrode terminal is a cap of a sealing structure that closes the opening of the housing, and the negative electrode terminal is the housing.

However, according to the conventional cylindrical battery having such a structure, the current concentrates on the strip-shaped electrode tab coupled to the positive electrode uncoated region and/or the negative electrode uncoated region, resulting in high resistance, a large amount of heat generated, and the consequential low current collection efficiency.

The resistance and heat of small cylindrical batteries with 1865 or 2170 form factor is not a major issue. However, as the form factor increases to apply the cylindrical battery to an electric vehicle, a lot of heat is generated around the electrode tab during the rapid charging process, causing a fire in the cylindrical battery.

In order to solve this problem, a cylindrical battery (a so-called tab-less cylindrical battery) with improved current collection efficiency is proposed, the cylindrical battery designed such that the positive electrode uncoated region and the negative electrode uncoated region are positioned on the top and bottom of the jelly-roll type electrode assembly, respectively, and the current collector is welded to the uncoated region.

DISCLOSURE

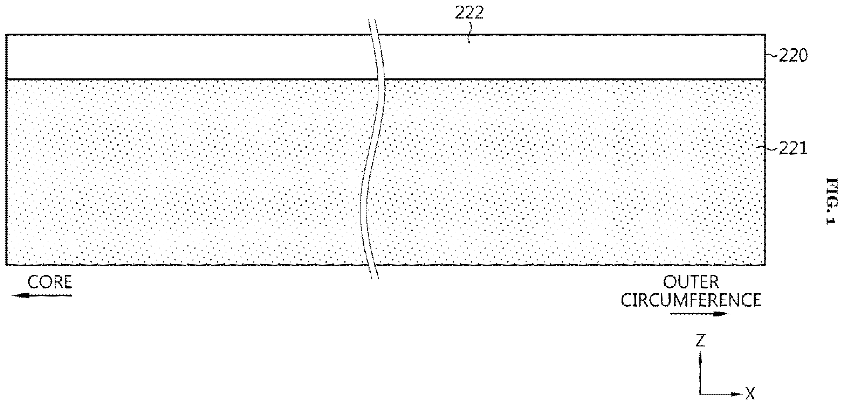

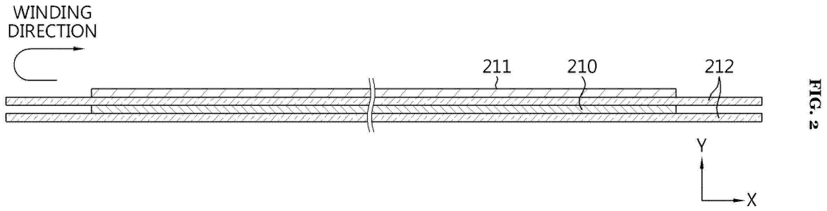

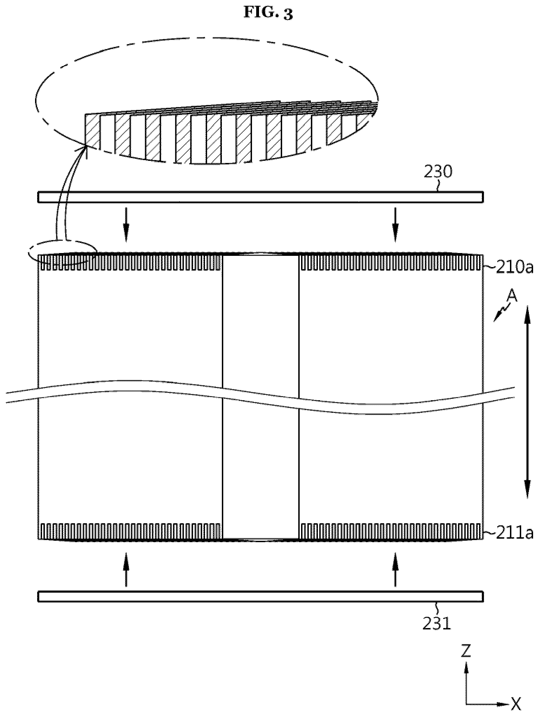

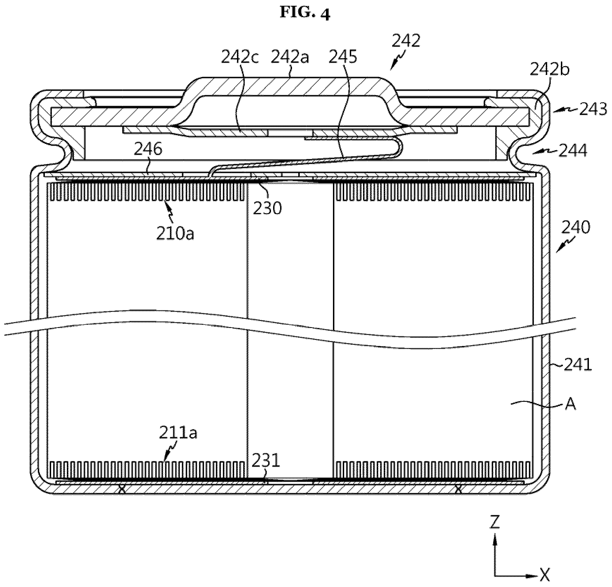

FIGS. 1 to 3 are diagrams showing a process of manufacturing the tab-less cylindrical battery. FIG. 1 shows the structure of the electrode plate, FIG. 2 shows a process of winding the electrode plate, and FIG. 3 shows a process of welding the current collector to a bend surface of the uncoated region. FIG. 4 is a cross-sectional view of the tab-less cylindrical battery, taken along the lengthwise direction Z.

Referring to FIGS. 1 to 4, the positive electrode plate 210 and the negative electrode plate 211 have a structure that the sheet-shaped current collector 220 is coated with the active material 221, and include the uncoated region 222 on one long side along the winding direction X.

The electrode assembly A is manufactured by sequentially stacking the positive electrode plate 210 and the negative electrode plate 211 together with two sheets of separators 212 as shown in FIG. 2 and winding them in one direction X. In this instance, the uncoated region of the positive electrode plate 210 and the uncoated region of the negative electrode plate 211 are arranged in opposite directions.

After the winding process, the uncoated region 210a of the positive electrode plate 210 and the uncoated region 211a of the negative electrode plate 211 are bent toward the core. Afterward, the current collectors 230, 231 are coupled to the uncoated regions 210a, 211a by welding, respectively.

Any electrode tab is not coupled to the positive electrode uncoated region 210a and the negative electrode uncoated region 211a, the current collectors 230, 231 are connected to external electrode terminals, and a current path is formed with a large cross-sectional area along the winding axis direction of the electrode assembly A (see the arrow), thereby reducing the resistance of the battery. This is because the resistance is inversely proportional to the cross-sectional area of the passage through which the current flows.

However, when the form factor of the cylindrical battery increases and the magnitude of the charging current increases during rapid charging, the heat generation problem rises again in the tab-less cylindrical battery.

Specifically, the conventional tab-less cylindrical battery 240 includes the housing 241 and the sealing structure 242 as shown in FIG. 4. The sealing structure 242 includes a cap 242a, a sealing gasket 242b and a connecting plate 242c. The sealing gasket 242b surrounds the edge of the cap 242a and is fixed by a crimping portion 243. In addition, the electrode assembly A is fixed in the housing 241 by a beading portion 244 to prevent vertical movement.

Typically, the positive electrode terminal is the cap 242a of the sealing structure 242, and the negative electrode terminal is the housing 241. Therefore, the current collector 230 coupled to the uncoated region 210a of the positive electrode plate 210 is electrically connected to the connecting plate 242c attached to the cap 242a through a lead 245 in a strip form. In addition, the current collector 231 coupled to the uncoated region 211a of the negative electrode plate 211 is electrically connected to the bottom of the housing 241. The insulator 246 covers the current collector 230 to prevent a short circuit caused by the contact between the housing 241 and the uncoated region 210a of the positive electrode plate 210 having different polarities.

When the current collector 230 is connected to the connecting plate 242c, the lead 245 of a strip form is used. The lead 245 is separately attached to the current collector 230 or is integrally formed with the current collector 230. However, since the lead 245 is in the form of a thin strip, its cross-sectional area is small, and thus, when the rapid charging current flows, a lot of heat is generated. In addition, excessive heat generated from the lead 245 is transferred to the electrode assembly A, causing the separator 212 to shrink, which may cause an internal short circuit that is a main cause of thermal runaway.

The lead 245 occupies a considerable installation space in the housing 241. Accordingly, the cylindrical battery 240 including the lead 245 has low space efficiency, which places limitation on an increase in energy density.

In addition, to connect the conventional tab-less cylindrical batteries 240 in series and/or in parallel, it is necessary to connect busbars to the cap 242a of the sealing structure 242 and the bottom surface of the housing 241, resulting in low space efficiency. A battery pack mounted in an electric vehicle includes a few hundreds of cylindrical batteryies 240. Accordingly, inefficient electrical wiring causes considerable inconvenience in the assembly process of the electric vehicle and maintenance and repair of the battery pack.

Meanwhile, recently, as the cylindrical battery is applied to the electric vehicle, the form factor of the cylindrical battery increases. That is, the diameter and height of the cylindrical battery increase compared to the conventional cylindrical batteries having 1865 and 2170 form factor. The increased form factor improves the energy density, the safety against thermal runaway and the cooling efficiency.

In addition to the increased form factor, when the unnecessary internal space of the housing is minimized, the energy density of the cylindrical battery may further increase. Accordingly, there is a need for the optimal design of components used for electrical insulation between the electrode assembly and the housing or components used to collect the current from the positive electrode plate and the negative electrode plate to increase the capacity of the battery and the overall resistance of the battery.

TECHNICAL PROBLEM

The present disclosure is designed to solve the above-described problem, and therefore an object of the present disclosure is to disperse external impacts and/or vibrations applied to a secondary battery during the use of the secondary battery to prevent the impacts and/or vibrations from concentrating on a specific portion, thereby preventing damage in a coupled portion between components.

Another object of the present disclosure is to enable a current collector itself to perform the current interruption function to rapidly interrupt the current in the event of an overcurrent caused by a short-circuit without an additional installation of a current interruption member, thereby ensuring safety of secondary batteries while in use.

In another aspect, an object of the present disclosure is to provide a battery having a structure in which a positive electrode terminal and a negative electrode terminal are applied in the same direction.

In still another aspect, an object of the present disclosure is to have a sufficient area for welding an electrical connection component, such as busbars, used to manufacture a battery pack with an electrode terminal of a battery by making use of the wide surface of a closed portion of a housing as an electrode terminal when electrically connecting a plurality of batteries in one direction.

In yet another aspect, an object of the present disclosure is to increase the contact area of an electrode assembly and a current collector (a first current collector) and/or the contact area of a terminal and the current collector (the first current collector) through the improved structure of an uncoated region of an electrode assembly, thereby minimizing the resistance of a battery.

However, the technical problem of the present disclosure is not limited to the above-described problem, and other problems not mentioned herein will be clearly understood by those skilled in the art from the following description.

SUMMARY OF THE INVENTION

To solve the above-described problem, a battery according to claim 1, a battery pack according to claim 39, a vehicle according to claim 41 and a current collector for a battery according to claim 42 are provided. Examples thereof are detailed in the dependent claims.

The battery according to the invention may comprise an electrode assembly formed by winding a first electrode, a second electrode and a separator interposed between the first electrode and the second electrode around a winding axis. The first electrode may include a first uncoated region free of an active material layer, the first uncoated region being disposed adjacent to an edge of the first electrode extending along a winding direction of the electrode assembly. The first uncoated region may be exposed from the separator and at least a part of the first uncoated region itself may be used as an electrode tab. The battery may further comprise a housing in which the electrode assembly is arranged and a first current collector. The first current collector may include an edge portion arranged on the electrode assembly, a first uncoated region coupling portion extending inward from the edge portion towards the winding axis and coupled with the first uncoated region, and a terminal coupling portion spaced apart from the first uncoated region coupling portion. The battery may further include a terminal which is coupled with the terminal coupling portion. As far as technically feasible, the battery according to this embodiment may further comprise any combination of the additional features described herein.

The electrode assembly may be formed similar as described above with reference to Figs. 1 to 3. The first electrode, the second electrode and/or the separator may be a planar slab, a sheet or a sheet-like structure. The first electrode, the second electrode and/or the separator may for example be substantially rectangular and may e.g. have a long side/long edges and a short side/short edges. The first electrode, the second electrode and the separator may be stacked on top of each other to form a layered or laminated structure, e.g. similar to the one shown in Fig. 2. The separator may be arranged between the first and second electrode, e.g. such that the first and second electrodes are separated from each other and not in (direct) contact with each other. The first electrode, the second electrode and the separator may be wound or rolled up around the winding axis, e.g. using a winding core, to form the electrode assembly. The electrode assembly may thus comprise a plurality of layers, e.g. an alternating arrangement of a first electrode layer, a separator layer, a second electrode layer, a separator layer and so on.

The direction along which the electrode assembly is wound, e.g. the direction along which the layered structured is rolled up, may also be referred to as the winding direction. The winding direction may be perpendicular to the winding axis, wherein the latter may e.g. be defined by a winding core. Prior to the winding (i.e. prior to assembly of the electrode assembly when the electrodes are still flat or planar), the winding direction may be parallel to an edge of one or both of the electrodes, e.g. parallel to a long edge (long side) of one or both of the electrodes (e.g. parallel to the X-direction in Fig. 1). The winding axis maybe parallel to another edge of one or both of the electrodes, e.g. a short edge (short side) of one or both of the electrodes (e.g. parallel to the Z-direction in Fig. 1).

In the context of this disclosure when referring to the electrode assembly after winding, directions may be defined relative to the winding axis using cylindrical coordinates. An axial direction may refer to a direction parallel to the winding axis. A radial direction may refer to a direction extending radially outward from the winding axis (e.g. substantially perpendicular to the electrode layers and separator layers of the electrode assembly). An azimuthal or circumferential direction may refer to a direction tangential to a concentric circle around the winding axis. The first electrode, the second electrode and the separator may be rolled up to form a respective spiral each when viewed along the winding axis, thereby forming a plurality of layers, wherein each layer may extend approximately along the azimuthal direction.

The electrode assembly may have a cylindrical or substantially cylindrical shape. A cross-section of the electrode assembly perpendicular to the winding axis may for example be circular or elliptical. The electrode assembly may comprise a pair of end faces, e.g. elliptical or circular end faces, which are connected by an outer sidewall (also referred to as an outer circumferential surface). The outer sidewall may the formed by an outermost layer of the rolled-up first electrode, second electrode and separator stack. The end faces may be perpendicular or substantially perpendicular to the winding axis, whereas the sidewall of the electrode assembly may extend parallel or substantially parallel to the winding axis and in some examples also parallel to the azimuthal direction. The end faces may be formed by edges or edge portions of the first electrode, the second electrode and/or the separator extending along the winding direction, e.g. opposite long sides/long edges of the layered structure. The sidewall of the electrode assembly may be formed by edge portions of the first electrode, the second electrode and/or the separator, e.g. a first short edge portion of the layered structure. An opposite edge portion of the first electrode, the second electrode and/or the separator, e.g. a second short edge portion of the layered structure opposite to the first short edge portion, may form a core of the electrode assembly, which is arranged in the vicinity of the winding axis. After winding, i.e. when the electrode assembly is assembled, edges of the first electrode, the second electrode and the separator may each extend along a respective spiral, e.g. from the first short edge portion at the sidewall of the electrode assembly inward to the second short edge portion at the core of the electrode assembly. In some examples, a hole or cavity may extend through the electrode assembly, e.g. through the core of the electrode assembly, along the winding axis. The hole may for example be formed by a winding core around which the layered structure is wound.

The first electrode includes a first uncoated region that is free from an active material layer, i.e. not coated or covered by the active material. A least a part of the first electrode may be coated with the active material layer. The first electrode may be coated with the active material layer on one or both surfaces, e.g. on an inner surface facing towards the winding axis (which may e.g. correspond to an upper surface of the first electrode in the direction of view perpendicular to the unwound first electrode) and/or on an outer surface facing away from the winding axis (which may e.g. correspond to a bottom surface of the first electrode in the direction of view perpendicular to the unwound first electrode). In some examples, the entire remaining part of the first electrode, i.e. all regions of the first electrode apart from the uncoated region, may be coated with the active material layer on one or both surfaces.

The first uncoated region is disposed adjacent to an edge of the first electrode extending along the winding direction. The first uncoated region may for example correspond to an edge portion of the first electrode, in particular a long edge portion of the first electrode, i.e. to the portion of the first electrode adjacent to said edge (e.g. a strip-like portion along said edge). The first uncoated region may for example be at an end of the long side along the winding direction. In other words, the first electrode may be provided with the first uncoated region at a lateral edge with respect to the winding direction. In some examples, the first uncoated region may extend along the entire length of said edge, e.g. along an entire first long side of the first electrode from a first short side of the first electrode to a second short side of the first electrode opposite to the first short side. After winding, the first uncoated region may extend along a spiral from an outer portion (e.g. from the outer sidewall) to an inner portion (core) of the electrode assembly.

The first uncoated region is exposed from the separator. In other words, at least a part of the first uncoated region is not in contact with or covered by the separator, but exposed to outside of the separator. The first uncoated region may for example extend beyond the separator, in particular along the winding axis. The first uncoated region may for example extend beyond the separator at said edge of the first electrode adjacent to which the first uncoated region is disposed (e.g. at the long edge). At least a portion of the first uncoated region, in some examples the entire first uncoated region may extend beyond or protrude from an edge of the separator, e.g. from a long edge of the separator. Prior to winding, a length of the first electrode along the winding axis may be longer than a length of the separator along the winding axis, e.g. such that the separator, when placed on the first electrode, only covers a part of the first electrode, e.g. a coated region of the first electrode, but not the first uncoated region.

At least a part of the uncoated region may be used as an electrode tab for electrically contacting the first electrode. In other words, the uncoated region provides an electrical connection to the electrode assembly and in particular to the first electrode. For this, the first uncoated region coupling portion of the first current collector may be coupled with the first uncoated region, e.g. by welding.

The battery may include a housing in which the electrode assembly is accommodated. The housing may comprise a first end face and a second end face opposite to the first end face. The first and second end faces may for example be perpendicular or substantially perpendicular to the winding axis. The first and second end faces may be connected by a sidewall of the housing, wherein the sidewall may e.g. extend parallel to the winding axis. The housing may for example have a cylindrical or substantially cylindrical shape. The housing may also be referred to as a battery can. The housing may enclose or define an inside of the battery, which is separated from an outside of the battery by the housing. In the following, a surface facing towards the inside of the battery and/or away from the outside of the battery (e.g. towards the winding axis and/or towards the electrode assembly) may also be referred to as an inner surface, whereas a surface facing towards the outside of the battery and/or away from the inside of the battery (e.g. towards an inner surface of a wall of the housing and/or away from the electrode assembly) may also be referred to as an outer surface.

One or both end faces may be closed completely or at least in part. In other words, one or both end faces or a part thereof may be formed by a respective wall of the housing, which may e.g. extend perpendicular to the winding axis. In some examples, one or both of the end faces may have an opening, e.g. in the respective wall of the housing, for example an opening for inserting the electrode assembly into the housing or an opening in which the terminal can be arranged. In some examples, one or both of the end faces may be completely open, i.e. may not be closed by a wall of the housing. Instead, the respective opening may for example be closed by a cap that is separate from the housing.

In other words, the first and second end faces of the housing do not necessarily refer to a mechanical or physical structure such as a wall, but may also be used in a geometric or mathematical sense and may e.g. refer to the area enclosed by an edge or a circumference of the sidewall of the housing.

In some examples, an end face of the housing, for example the second end face, has an opening for inserting the electrode assembly into the housing. Dimensions of the opening may be chosen such that the housing is configured to receive the electrode assembly through the respective end face. This end face, e.g. the second end face, may thus also be referred to as an open portion of the housing. In some examples, another end face of the housing, for example the first end face, is at least partially closed by a wall of the housing. This end face, e.g. the first end face, may thus also be referred to as a closed portion of the housing. In the following, the first end face may also be referred to as the top or upper portion of the housing and the second end face may also be referred to as the bottom or lower portion of the housing, e.g. because the battery may be arranged in a battery pack such that the first end face faces upwards and the second end face faces downwards. Accordingly, a surface may for example be referred to as a bottom/lower surface or a top/upper surface if the respective surface faces in the direction from the first end face to the second end face (downwards) and in the direction from the second end face to the first end face (upwards), respectively.

The battery may include the first current collector, e.g. for electrically connecting the electrode assembly, in particular the electrode tab formed by the first uncoated region of the first electrode, to the terminal. In some examples, the first current collector may be a current collector for electrically connecting an electrode assembly of a battery to a terminal of the battery according to any one of the embodiments of the present invention described below. The first current collector may comprise an edge portion that is arranged or positioned on the electrode assembly. The edge portion may for example be an outer portion (e.g. a distal or circumferential portion) of the first current collector as seen from the winding axis, for example a portion that is adjacent to the sidewall of the housing. The edge portion may extend around the winding axis at least in part, in some examples completely (i.e. by 360° around the winding axis).

The first current collector may further comprise the first uncoated region coupling portion, which may also be referred to as the first electrode tab coupling portion. The first uncoated region coupling portion extends inwards from the edge portion, in particular towards the winding axis. The first uncoated region may for example extend inward along the radial direction, i.e. may extend radially inwards. The first uncoated region is coupled with the first uncoated region, e.g. by welding.

The terminal coupling portion of the first current collector is spaced apart from the first uncoated region coupling portion, e.g. such that there is no direct contact between the terminal coupling portion and the first uncoated coupling portion, but the respective portions are separated by a finite (non-zero) distance. The terminal coupling portion may be connected to the edge portion and thereby to the first uncoated region coupling portion. The edge portion may provide an electrical connection between the terminal coupling portion and the first uncoated region coupling portion.

The terminal may provide - via the first current collector - an electrical connection to the electrode assembly, in particular to the first electrode, from the outside, i.e. from outside of the battery housing. The terminal may be exposed from the housing at least in part and may e.g. comprise one or more electrically conductive surfaces that can be contacted from the outside. The terminal may pass or extend through a wall of the housing, for example through an end face of the housing, in particular through the first end face.

According to an embodiment of the present invention, a battery includes an electrode assembly which defines a core and an outer circumferential surface by winding a first electrode, a second electrode and a separator interposed between the first electrode and the second electrode around a winding axis, wherein the first electrode includes a first uncoated region at an end of a long side along a winding direction, the first uncoated region in which an active material layer is not coated is exposed to outside of the separator, and at least part of the first uncoated region itself is used as an electrode tab; a housing including an open portion on one side, and configured to receive the electrode assembly through the open portion; a first current collector including an edge portion positioned on the electrode assembly, a first uncoated region coupling portion extending inward from the edge portion and coupled with the first uncoated region, and a terminal coupling portion spaced apart from the first uncoated region coupling portion; and a terminal which is coupled with the terminal coupling portion. As far as technically feasible, the battery according to this embodiment may further comprise any combination of the additional features described herein.

The edge portion may have a shape of a rim extending around an inner space (which may also be referred to as empty internal space). In other words, the edge portion may have a shape of a rim having an empty internal space. The rim may for example extend around the winding axis at least in part, e.g. such that the winding axis extends through the inner space. In one example, the rim extends along the azimuthal direction. The edge portion may fully enclose the inner space, e.g. extend along a closed loop around the inner space. The rim may for example be an annular rim (i.e. may be ring-shaped extending along a circular or elliptical loop), a polygonal rim or a rectangular rim.

The first uncoated region coupling portion and the terminal coupling portion may be electrically connected by the edge portion.

The terminal coupling portion may be disposed within the inner space (internal space) of the edge portion, in particular at a center of the inner space (internal space) of the edge portion. In one example, the terminal coupling portion is arranged on the winding axis, e.g. such that the winding axis extends through the terminal coupling portion.

The first current collector may further include a connecting portion extending inward from the edge portion and connected to the terminal coupling portion. The connecting portion may in particular extend inward from the edge portion towards the winding axis, e.g. along the radial direction. The connecting portion may provide an electrical connection between the edge portion and the terminal coupling portion.

At least a part of the connecting portion may have a smaller cross-section area than the first uncoated region coupling portion, i.e. at least part of the connecting portion may be smaller in cross-sectional area than the first uncoated region coupling portion. The cross-sectional area may for example be measured in a plane that is perpendicular to an inward direction along which the connecting portion extends, e.g. perpendicular to the radial direction (and thus parallel to the winding axis).

At least a part of the connecting portion has a smaller width and/or a smaller thickness than the first uncoated region coupling portion. In other words, at least part of the connecting portion may be smaller in at least one of width or thickness than the first uncoated region coupling portion. The width may for example be measured perpendicular to the winding axis (and perpendicular to the inward direction, e.g. along the azimuthal direction) and the thickness may for example be measured parallel to the winding axis.

The connecting portion may include a tapered portion (or taper portion) in which a width of the connecting portion decreases continuously or gradually (e.g. step-wise) along a direction from the edge portion toward the terminal coupling portion. For example, the connecting portion may include a taper portion in which width of the connection portion is continuously or gradually reduced along a direction from an inner surface of the edge portion toward the terminal coupling portion.

In some examples, the connecting portion between the edge portion and the terminal coupling portion does not have a welded portion, i.e. the connecting portion is not welded to any other element. In some examples, the connecting portion may only be connected to the edge portion and the terminal coupling portion.

A plurality of first uncoated region coupling portions may be provided. In other words, the first current collector may comprise a plurality of uncoated region coupling portions. Each of the plurality of first uncoated region coupling portions may extend inward from the edge portion towards the winding axis, e.g. radially inward, and/or may be coupled with the first uncoated region. The first current collector may for example comprise two, three, four or more uncoated region coupling portions.

The plurality of first uncoated region coupling portions may be arranged equidistantly (i.e. with a constant or uniform spacing) along the edge portion. In other words, the plurality of first uncoated region coupling portions may be regularly arranged along an extension direction of the edge portion. For example, the plurality of first uncoated region coupling portions may be arranged such that the distance between a pair of adjacent first uncoated region coupling portions is the same for all pairs of adjacent first uncoated region coupling portions.

A length of each of the plurality of first uncoated region coupling portions may be substantially equal. In other words, an extended length of each of the plurality of first uncoated region coupling portions may be substantially equal to each other. The length may for example measured inward from the edge portion, e.g. inward from the edge portion towards the winding axis, in particular along the radial direction. In some examples, the plurality of first uncoated region coupling portions may have identical shapes or substantially identical shapes, e.g. when viewed along the winding axis.

A cross-sectional area of each of the plurality of first uncoated region coupling portions may be substantially equal. The cross-sectional area may for example be measured in a plane perpendicular to an inward direction along which the respective first uncoated region coupling portion extends from the edge portion, e.g. in a plane perpendicular to the radial direction.

A width and thickness of each of the plurality of first uncoated region coupling portions may be substantially equal. The width may for example be measured in the azimuthal direction and the thickness may for example be measured perpendicular to the winding axis.

The terminal coupling portion may be arranged or positioned such that the terminal coupling portion is surrounded by the plurality of first uncoated region coupling portions. For example, the plurality of first uncoated region coupling portions may be arranged along the azimuthal direction around the winding axis. The terminal coupling portion may for example be arranged at the center of the first current collector, e.g. such that the winding axis extends through the terminal coupling portion.

The connecting portion may be disposed between a pair of adjacent first uncoated region coupling portions.

The connecting portion may be arranged at a same distance or a substantially same distance to each of the pair of adjacent first uncoated region coupling portions along the edge portion. In other words, a distance from the connecting portion to one of the pair of adjacent first uncoated region coupling portions along an extension direction of the edge portion may be substantially equal to a distance to the other one.

A plurality of connecting portions may be provided. In other words, the first current collector may comprise a plurality of connecting portions. Each of the connecting portions may extend inward from the edge portion, for example towards the winding axis, e.g. along the radial direction. Each of the connecting portions may be connected to the terminal coupling portion. The first current collector may for example comprise two, three, four or more connecting portions.

Each of the plurality of connecting portions may be positioned between a pair of adjacent first uncoated region coupling portions. The first current collector may comprise a plurality of first uncoated region coupling portions extending inward from the edge portion towards the winding axis and each of the plurality of connecting portions may be arranged between a respective pair of adjacent first uncoated region coupling portions. A distance along the edge portion from each of the plurality of connecting portions to one of the respective pair of adjacent first uncoated region coupling portions is substantially equal to a distance to the other one of the respective pair of adjacent first uncoated region coupling portions. In other words, a distance from each of the plurality of connecting portions to one of the pair of adjacent first uncoated region coupling portions along an extension direction of the edge portion may be substantially equal to a distance to the other one.

The plurality of connecting portions may be arranged equidistantly along the edge portion. For example, the plurality of connecting portions may be regularly arranged along an extension direction of the edge portion. For example, the plurality of connecting portions may be arranged such that the distance between a pair of adjacent connecting portions is the same for all pairs of adjacent connecting portions.

The connecting portion may include a current interruption portion having a smaller cross-sectional area than adjacent portions of the connecting portion. In other words, the connecting portion may include a current interruption portion configured to reduce a cross-sectional area of the connecting portion. In some examples, the current interruption portion may have a smaller cross-sectional area than a remaining portion of the connecting portion, e.g. a smaller cross-sectional area than any other portion of the connecting portion. The current interruption portion may for example be configured to break when a current through the interruption portion exceeds a predefined value, e.g. to interrupt the current flow.

The current interruption portion may be a portion of the connecting portion which has a smaller width and/or a smaller thickness than adjacent portions of the connecting portion, in some examples than any other portion of the connecting portion. In other words, the current interruption portion may be or correspond to a region which is smaller in at least one of width or thickness than a remaining region of the connecting portion.

The current interruption portion may include at least one of a notch, a groove or a through-hole formed on at least one surface of the connecting portion.

A plurality of current interruption portions may be provided along a length of the connecting portion, e.g. a pair of current interruption portions, three current interruption portions, four current interruption portions or more. In other words, the connecting portion may include a plurality of current interruption portions arranged along a length of the connecting portion. The plurality of current interruption portions may for example be arranged equidistantly along the length of the connecting portion.

In some examples, a hole or cavity may extend through the electrode assembly, in particular through a core of the electrode assembly, along the winding axis. The hole may e.g. result from a winding core on which the electrode assembly is wound and/or may be used for circulating an electrolyte. The hole may extend from a first/upper end face of the electrode assembly, e.g. adjacent to the first end face of the housing, to the second/bottom end face of the electrode assembly, e.g. adjacent to the second end face of the housing, i.e. the hole may be a through-hole. The hole may for example have a circular, elliptical or polygonal cross-section perpendicular to the winding axis.

The terminal coupling portion may be disposed at a location corresponding to a hole formed at a winding center of the electrode assembly. The terminal coupling portion may be aligned with the hole extending through the electrode assembly along the winding axis, e.g. such that the terminal coupling portion overlaps with (or covers) the hole at least in part or completely when viewed along the winding axis and/or such that a center of the terminal coupling portion overlaps with a center of the hole when viewed along the winding axis.

The terminal coupling portion may be configured to cover a hole formed at a winding center of electrode assembly to prevent the hole formed at the winding center of the electrode assembly from being exposed to outside of the terminal coupling portion. The terminal coupling portion may for example cover an opening of the hole extending through the electrode assembly to prevent the hole from being exposed. The opening of the hole may be arranged on an end face of the electrode assembly, i.e. may be the opening at which the hole opens from or extends through the respective end face.

A diameter of the terminal coupling portion may be equal to or larger than a diameter of the hole formed at the winding center of the electrode assembly. In other words, a diameter of the terminal coupling portion may be equal to or larger than a diameter of the hole extending through the electrode assembly, e.g. such that the terminal coupling portion may completely cover an opening of the hole.

The first uncoated region coupling portion may be coupled onto a coupling surface formed by bending an end of the first uncoated region along a direction parallel to the first current collector. For example, the first uncoated region coupling portion may be coupled onto a coupling surface formed by bending the first uncoated region such that a distal end of the first uncoated region extends along a direction parallel to a sideface of the first current collector and/or along a direction perpendicular to the winding axis, e.g. along the radial direction. The first current collector may for example be flat or substantially flat. The first current collector may for example have its largest extent perpendicular to the winding axis. The sideface of the first current collector may for example be a side or a surface of the first current collector that extends perpendicular to the winding axis. The sideface of the first current collector may face the electrode assembly, in particular an end face of the electrode assembly. After winding the first electrode, the second electrode and the separator to form the electrode assembly, the first uncoated region of the first electrode may protrude from the electrode assembly along the winding direction, e.g. extend beyond an edge of the separator along the winding direction. To form the coupling surface, the first uncoated region may for example be bent inwards, e.g. towards the winding axis, for example such that a distal end thereof (i.e. the portion of the first uncoated region that is farthest away from a coated portion of the first electrode and/or from the separator) extends along the radial direction towards the winding axis, thereby forming a coupling surface that is substantially perpendicular to the winding axis.

The housing may comprise a first end face (closed portion) and a second end face (open portion) opposite to the first end face, e.g. as detailed above. The second end face may have an opening for inserting the electrode assembly into the housing, i.e. an opening that is configured such that the electrode assembly can be received in the housing through the second end face. For example, a radial extent, e.g. a diameter, of the opening may be equal to or larger than a radial extent, e.g. a diameter, of the electrode assembly.

The first uncoated region may extend toward a closed portion disposed on a side opposite to the open portion of the housing. In other words, the first uncoated region may extend from the electrode assembly toward the first end face. For example, at least a portion of the first uncoated region, e.g. a proximal end or portion of the first uncoated region adjacent to the coated region of the first electrode and/or to the separator, may extend from the electrode assembly (e.g. beyond the edge of the separator) parallel to the winding axis toward the first end face.

The battery may further include a cap to seal the opening for inserting the electrode assembly into the housing (i.e. to seal the open portion of the housing). The cap may be separate from the housing and may for example be placed in or on the opening after the electrode assembly has been inserted into the housing to close the opening, for example to seal an inside of the housing from an environment of the battery.

The cap may not be electrically connected to the electrode assembly and may have no polarity. In other words, the cap may neither be electrically connected to a positive terminal of the battery nor to a negative terminal of the battery, but may e.g. be floating, i.e. may not be connected to any voltage source or reference. In some examples, the cap may be electrically insulating.

The housing may include a beading portion adjacent to the second end face. The beading portion may protrude inward toward an inside of the housing. For example, the beading portion may form a protrusion on an inner surface of a sidewall of the housing, e.g. such that an inner diameter of the inside of the housing is smaller in the beading portion than in an adjacent portion of the housing, in particular in a portion of the housing in which the electrode assembly is arranged. The protrusion may for example extend along the azimuthal direction around the winding axis. The beading portion may for example comprise a constriction, a fold or a beading in a sidewall of the housing that protrudes inward toward an inside of the housing. The beading portion may for example be configured to hold the electrode assembly in place, e.g. to fix a position of the electrode assembly within the housing. The beading portion may for example be press-fit toward an inner side of the housing. On an outer surface of the sidewall of the housing, the beading portion may comprise a groove, a recess or an indentation, e.g. such that an outer diameter of the housing is smaller in the beading portion than in an adjacent portion of the housing.

Additionally or alternatively, the housing may include a crimping portion, wherein the crimping portion may in particular be arranged between the beading portion and the second end face. The crimping portion may surround circumferential edges of the cap sealing the opening for inserting the electrode assembly into the housing. The crimping portion may be configured to hold the cap in place. The crimping portion may for example clasp or clench the circumferential edges of the cap.

In one example, the housing may include a beading portion formed adjacent to the open portion and press-fit toward an inner side of the housing; and a crimping portion formed below the beading portion, and extended and bent such that the crimping portion surrounds circumferential edges of the cap.

The battery may further include a sealing gasket positioned or arranged in the crimping portion, and interposed between the housing and the cap.

The terminal may be configured to pass through a closed portion disposed on a side opposite to the open portion of the housing. The terminal may for example pass through or extend through the first end face of the housing. The terminal may for example be arranged in a corresponding opening in the first end face, e.g. such that an inner portion of the terminal is exposed to an inside of the housing and an outer portion of the terminal is exposed to an outside of the housing.

The terminal may pass through or be configured to pass through a center of the closed portion (first end face).

The terminal may be insulated from the housing.

An insulation gasket may be interposed between the housing and the terminal.

The battery may further comprise an insulator interposed between the first end face and the first current collector.

In other words, the battery may include an insulator interposed between a closed portion disposed on a side opposite to the open portion of the housing and the first current collector.

The insulator may have a thickness equal to or corresponding to a distance between an inner surface of the closed portion (first end face) of the housing and the first current collector.

The terminal may be coupled with the terminal coupling portion of the first current collector through a hole formed in the insulator. The terminal and/or the terminal coupling portion may for example extend through the insulator at least in part

An inner end or portion of the terminal coupled with the terminal coupling portion may be disposed at a distance from the first end face that is equal to or smaller than a distance from the first end face to an inner surface of the insulator, e.g. to a (lower) surface of the insulator facing away from the first end face towards the first current collector. Put differently, a lower end of the terminal coupled with the terminal coupling portion may be disposed at a height that is equal to or higher than a lower surface of the insulator.

The insulator may be interposed between the first uncoated region and a sidewall of the housing. For example, a portion of the insulator that extends parallel to the winding axis may be interposed between the first uncoated region and the sidewall of the housing.

An outer surface of the insulator, e.g. an (upper) surface of the insulator facing away from the first current collector towards the first end face, may contact an inner surface of the first end face of the housing and an inner surface of the insulator may contact an outer surface (e.g. an upper surface) of the first current collector. In other words, an upper surface of the insulator may contact an inner surface of the closed portion disposed on the side opposite to the open portion of the housing, and a lower surface of the insulator may contact an upper surface of the first current collector.

The second electrode may further include a second uncoated region. The second uncoated region may be formed similarly as the first uncoated region. The second uncoated region may be free of the active material layer. At least a part of the second electrode or the entire remaining part of the second electrode may be coated with the active material layer. The second uncoated region may be disposed adjacent to an edge of the second electrode that extends along the winding direction, in particular an edge of the second electrode that is arranged opposite to the edge of the first electrode adjacent to which the first uncoated region is disposed. For example, the first uncoated region may extend along a first long edge of the first electrode (which may e.g. be associated with a first/upper end face of the electrode assembly), whereas the second uncoated region may extend along a second long edge of the second electrode opposite to the first long edge (wherein the second long edge may e.g. be associated with a second/lower end face of the electrode assembly). The second uncoated region may be exposed from the separator. The second uncoated region may for example extend beyond or protrude from the separator at said edge. The second uncoated region may also be used as an electrode tab.

In one example, the second electrode may include a second uncoated region in which the active material layer is not coated at the end of the long side along the winding direction, and the second uncoated region may extend in a direction opposite to the first uncoated region and may be exposed to the outside of the separator.

The housing may be electrically connected to the second uncoated region.

The battery may further include a second current collector coupled to each of the second uncoated region and the housing to electrically connect the second uncoated region to the housing.

The second current collector may have a second current collector hole aligned with a hole extending through the electrode assembly along the winding axis, e.g. such that hole through the second current collector overlaps at least in part or completely with the hole extending through the electrode assembly when viewed along the winding axis. In other words, the second current collector may have a second current collector hole formed in an area corresponding to a hole formed at a winding center of the electrode assembly.

The second current collector hole may have a diameter that is equal to or larger than a diameter of the hole extending through the electrode assembly to not cover the hole extending through the electrode assembly. Put differently, the second current collector hole may have a diameter that is equal to or larger than the hole formed at the winding center of the electrode assembly not to cover the hole formed at the winding center of the electrode assembly.

The second current collector hole may have a diameter that is smaller than the diameter of the hole extending through the electrode assembly. When the diameter of the hole extending through the electrode assembly is R3, the diameter of the second current collector hole may for example be 0.5*R3 or more and less than R3, preferably 0.7*R3 or more and less than R3, e.g. as detailed below.

The second current collector may include a second uncoated region coupling portion coupled with the second uncoated region; and a housing coupling portion coupled with the housing.

The second uncoated region and the second uncoated region coupling portion may be coupled to each other by welding.

The housing and the housing coupling portion may be coupled to each other by welding.

The housing may include a beading portion which is formed adjacent to the open portion and press-fit inward. In one example, the housing includes a beading portion adjacent to a second end face of the housing having an opening for inserting the electrode assembly into the housing, wherein the beading portion protrudes inward toward an inside of the housing, e.g. as detailed above.

The housing coupling portion may be electrically coupled to a surface of the beading portion, in particular to a lower surface of the beading portion, wherein the lower surface may for example be a surface facing the second end face of the housing and/or facing away from the electrode assembly.

A distance from a center of the first current collector to an outermost side of the edge portion may be longer than a distance from a center of the second current collector to an outermost side of the second uncoated region coupling portion.

The distance from the center of the second current collector to the outermost side of the second uncoated region coupling portion may be equal to or shorter than one half of an inner diameter at an area in which the beading portion of the housing is formed, e.g. equal to or shorter than one half of an inner diameter of the housing in an area in which the beading portion is formed.

At least part of the first uncoated region may include a plurality of segments split or spaced apart from each other along the winding direction of the electrode assembly. The plurality of segments may be bent along a radial direction of the electrode assembly. For example, the plurality of segments may be bent inward such that distal ends of the plurality of segments extend along a radial direction of the electrode assembly towards the winding axis. Each of the segments may for example protrude from or extend beyond an edge of the separator. Each of the segments may e.g. form a finger, a strip or a flap, which may for example serve as a separate tab for contacting the first electrode. The segments may be separated from each other, e.g. by forming corresponding cutouts in the first uncoated region. Prior to winding the electrode assembly, the plurality of segments in the first uncoated region may for example form a comb-like structure with each of the plurality of segments corresponding to a tooth of the comb-like structure.

The plurality of bent segments may overlap in multiple layers. Put differently, the plurality of bent segments may overlap with each other to form multiple overlapping layers. At a given position, portions of multiple bent segments may be stacked on top of each other along the winding axis, thereby forming a multilayer structure.

The electrode assembly may have a (first) welding target area in which the number of overlaps of the segments of the first uncoated region is uniformly maintained along the radial direction of the electrode assembly. In other words, the electrode assembly may have a first welding target area in which the number of overlapping layers formed by the plurality of bent segments of the first uncoated region is uniformly maintained along the radial direction of the electrode assembly, i.e. the number of overlapping layers stays the same and does not change along the radial direction. The first welding target area may for example have a substantially uniform thickness parallel to the winding axis.

At least part of the second uncoated region may include a plurality of segments split or spaced apart along the winding direction of the electrode assembly, and the plurality of segments may be bent along a radial direction of the electrode assembly, e.g. as described above for the first uncoated region. For example, at least a part of the second uncoated region includes a plurality of segments that are spaced apart from each other along the winding direction of the electrode assembly with the plurality of segments being bent inward such that distal ends of the plurality of segments extend along a radial direction of the electrode assembly towards the winding axis.

The plurality of bent segments may overlap in multiple layers, e.g. as described above for the first uncoated region.

The electrode assembly may have a (second) welding target area in which the number of overlaps of the segments of the second uncoated region is uniformly maintained along the radial direction of the electrode assembly, e.g. as described above for the first uncoated region.

The first current collector may further include a bridge portion connecting at least one of the following: between the adjacent first uncoated region coupling portions (i.e. connecting a pair of adjacent first uncoated region coupling portions), between the first uncoated region coupling portion and the connecting portion adjacent to each other (i.e. connecting a first uncoated region coupling portion and a connecting portion adjacent to each other), and between the adjacent connecting portions (i.e. connecting a pair of adjacent connecting portions). In some examples, the bridge portion may connect a plurality of first uncoated region coupling portions, e.g. all of the plurality of first uncoated region coupling portions, and/or a plurality of connecting portions, e.g. all of the connecting portions. The bridge portion may for example be a rim, e.g. an annular rim, extending around the winding axis and/or around the terminal coupling portion. In one example, the edge portion and the bridge portion are concentric rings, which may e.g. be centered on the winding axis.

The bridge portion may be disposed at an inner position than the edge portion. In other words, the bridge portion may be disposed closer to the winding axis than the edge portion. The bridge portion may for example be arranged between the edge portion and the winding axis. The bridge portion may have a smaller diameter than the edge portion.

The first current collector may have an impregnation hole between the edge portion and the bridge portion.

The impregnation hole may have a shape of a slit extending along an extension direction of the edge portion. Put differently, the impregnation hole may have a slit-like shape extending along a portion of the edge portion. The impregnation hole may for example extend between adjacent structures connected by the bridge portion.

A ratio of a non-contact area between the first current collector and an upper surface of the electrode assembly to an area of a circle having an outer diameter of the electrode assembly as a diameter may be 20% or more and less than 100%. In other words, a ratio of a non-contact area between the first current collector and a surface of the electrode assembly facing the first current collector to an area of a circle having a diameter equal to an outer diameter of the electrode assembly is 20% or more and less than 100%, for example 30% or more, 40% or more or 50% or more and/or 90% or less, 80% or less or 70% or less.

The number of connecting portions may be one or two. In other examples, the number of connecting portions may e.g. be three or four.

The cross-sectional area of the connecting portion in an area in which the current interruption portion may be formed is 0.6 to 0.9 compared to the cross-sectional area of the connecting portion in an area adjacent to the area in which the current interruption portion is formed, for example more than 0.7 and/or less than 0.8.

The cross-sectional area of the connecting portion may be 0.2 to 1.0 compared to a cross-sectional area of the first uncoated region coupling portion, for example more than 0.3, more than 0.4 or more than 0.5 and/or less than 0.9, less than 0.8 or less than 0.7.

An outer diameter of the first current collector may range from 33% to 98.5% compared to an inner diameter of the housing (i.e. may be between 33% and 98.5% of the inner diameter of the housing). The outer diameter may for example be more than 40%, more than 50% or more than 60% of the inner diameter and/or less than 90%, less than 80% or less than 70% of the inner diameter.

The welding target area may be an area in which the number of overlapping layers of the plurality of bent segments is maintained at a maximum. For example, the first welding target area may be an area in which the number of overlapping layers formed by the plurality of bent segments of the first uncoated region is maintained at a maximum (i.e. the number of overlapping layers may be at least as high or higher in the first welding target area than in other areas) and/or the second welding target area may be an area in which the number of overlapping layers formed by the plurality of bent segments of the second uncoated region is maintained at a maximum.

The first current collector may be welded to the first uncoated region by or having at least 50% overlap with the (first) welding target area, in some examples at least 60% overlap, in one example at least 70% overlap.

The second current collector may be welded to the second uncoated region by or having at least 50% overlap with the (second) welding target area, in some examples at least 60% overlap, in one example at least 70% overlap.

A resistance measured between a positive electrode and a negative electrode may be 4 milliohm (m$\Omega$, mOhm) or less, in some examples 3 milliohm or less, in one example 2 milliohm or less and in one example 1 milliohm or less. Additionally or alternatively, the resistance measured between the positive electrode and the negative electrode may be 0.25 milliohm or more, in some examples 0.5 milliohm or more, in one example 1 milliohm or more.

The current interruption portion may be formed 40% to 90% away from the core of the electrode assembly on the basis of a radius of the electrode assembly along a radial direction. Put differently, a distance between the current interruption portion and the winding axis may be between 40% and 90% of a radius of the electrode assembly along the radial direction, for example more than 50% or more than 60% of the radius and/or less than 80% or less than 70% of the radius.

At least part of the first uncoated region may include a plurality of segments split along the winding direction of the electrode assembly, the plurality of segments may be bent along a radial direction of the electrode assembly and overlap in multiple layers, and the current interruption portion may be provided in an area corresponding to the welding target area in which the number of overlaps of the segments of the first uncoated region is uniformly maintained along the radial direction of the electrode assembly. For example, at least a part of the first uncoated region may include a plurality of segments that are spaced apart from each other along the winding direction of the electrode assembly, the plurality of segments may be bent inward such that distal ends of the plurality of segments extend along the radial direction of the electrode assembly towards the winding axis and the plurality of bent segments may overlap with each other to form multiple overlapping layers, e.g. as detailed above. The current interruption portion may be arranged such that the current interruption portion, when viewed along the winding axis, overlaps with the first welding target area in which the number of overlapping layers formed by the plurality of bent segments of the first uncoated region is uniformly maintained along the radial direction of the electrode assembly.

A tape may be coupled to the current interruption portion.

The tape may be made of polyimide.

The tape may be configured to surround the connecting portion in an area in which the current interruption portion is formed.

When an outer diameter of the first current collector is T, an outer diameter of the electrode assembly is JR, and a height of the segment disposed on an outermost side in the radial direction of the electrode assembly (e.g. a length of the outermost segment in the first uncoated region) is F, the battery may be configured to satisfy JR - 2*F $\leq$ T < JR. In other words, the outer diameter T of the first current collector may be chosen such that the current collector, when viewed along the winding axis, overlaps with the (radially) outermost segments in the first uncoated region at least in part when the outermost segments are bent inward toward the winding axis.

The terminal coupling portion of the first current collector may be welded to the terminal, in particular to an inner surface of the terminal, e.g. by forming a welding bead on a surface of the terminal coupling portion. The inner surface may for example be the innermost surface of the terminal as seen from within the housing of the battery, e.g. the surface of the terminal that is closest to the electrode assembly. The inner surface of the terminal may be exposed to an inside of the housing of the battery. The inner surface of the terminal may face the inside of the housing, in particular the terminal coupling portion. At least a part of the inner surface of the terminal, e.g. a flat portion thereof, may for example extend perpendicular to the winding axis. In some examples, the inner surface of the terminal may be a bottom surface of the terminal, e.g. a surface of the bottommost portion of the terminal.

A welding bead formed on a surface of the terminal coupling portion of the first current collector may extend around a center of the inner surface of the terminal. For example, a welding pattern formed by a welding bead formed on one surface of the terminal coupling portion of the first current collector may run around a center of a bottom surface of the terminal.

The welding pattern and/or the welding bead may be continuously or discontinuously formed. The welding pattern and/or the welding bead may for example comprise a plurality of portions that are separated or spaced apart from each other. In another example, the welding pattern and/or the welding bead may for example extend along a closed loop, e.g. along a circle.

A tensile strength of a welded portion formed between the terminal coupling portion of the first current collector and a bottom surface (an inner surface) of the terminal may be 2 kgf or more, in some examples 3 kgf or more, in some examples 4 kgf or more, in one example 5 kgf or more and in one example 10 kgf or more. The unit "kgf' (kilogram-force) denotes the magnitude of the gravitational force exerted on one kilogram of mass (corresponding to about 9.81 Newton). In other words, the welded portion may be formed such that the welded portion has the tensile strength specified above.

A diameter of a welding bead formed on a surface of the terminal coupling portion of the first current collector and/or a converted diameter of a welding pattern formed by a welding bead formed on one surface of the terminal coupling portion of the first current collector may be 2 mm or more, in some examples 3 mm or more, in one example 4 mm or more and in one example 5 mm or more.

The inner surface (bottom surface) of the terminal may comprise a flat portion, wherein a diameter of the flat portion may be between 3 mm and 14 mm, e.g. more than 4 mm, more than 5 mm or more than 6 mm and/or less than 13 mm, less than 12 mm or less than 10 mm. In other words, a flat portion formed on the bottom surface of the terminal may be 3 mm to 14 mm in diameter.

A ratio of an area enclosed or circumscribed by a welding bead and/or an area of a welding pattern formed by a welding bead formed on the surface of the terminal coupling portion of the first current collector compared to an area of a flat portion formed on a bottom surface of the terminal (the flat portion of the inner surface) may be 2.04% to 44.4% (i.e. between 2.04% and 44.4%), for example more than 3%, in some examples more than 5%, in one example more than 10% and/or less than 40%, in some examples less than 30%, in one example less than 20%.

The second current collector hole may be smaller in diameter than the hole formed at the winding center of the electrode assembly.

When the diameter of the winding hole is R3, the diameter of the second current collector hole may be 0.5*R3 or more and less than R3.

When the diameter of the winding hole is R3, the diameter of the second current collector hole may be 0.7*R3 or more and less than R3. The diameter of the second current collector hole may for example be 0.5*R3 or more, 0.6*R3 or more, 0.7*R3 or more or 0.8*R3 or more and/or 0.98*R3 or less, 0.95*R3 or less, 0.9*R3 or less or 0.8*R3 or less.

A form factor ratio obtained by dividing a diameter of the battery by a height may be larger than 0.4. The height of the battery may e.g. be measured along the winding axis. The diameter of the battery may e.g. be measured along the radial direction. The form factor ratio may for example be between 0.4 and 0.8, e.g. more than 0.45 or more than 0.5 and/or less than 0.7 or less than 0.65. In one example, the form factor ratio is between 0.55 and 0.6, e.g. 0.575.

A radial extent, e.g. a length along the radial direction, of a welded portion coupling the first uncoated region coupling portion and the first uncoated region may be longer than a radial extent, e.g. a length along the radial direction, of a welded portion coupling the second uncoated region coupling portion and the second uncoated region. A length of the welded portion extended along the radial direction of the electrode assembly in the coupling between the first uncoated region coupling portion and the first uncoated region may be longer than a length of the welded portion extended along the radial direction of the electrode assembly in the coupling between the second uncoated region coupling portion and the second uncoated region.

With respect to the core of the electrode assembly, a distance to a start point of the welded portion which couples the first uncoated region coupling portion and the first uncoated region and a distance to a start point of the welded portion which couples the second uncoated region coupling portion and the second uncoated region may be substantially equal. For example, a distance from the winding axis to a start point of the welded portion which couples the first uncoated region coupling portion and the first uncoated region and a distance from the winding axis to a start point of the welded portion which couples the second uncoated region coupling portion and the second uncoated region may be substantially equal

A plurality of current interruption portions may be provided along a lengthwise direction of the connecting portion.

A connected portion between the edge portion and the terminal may not have a welded portion.

The present invention further provides a battery pack. A battery pack according to an embodiment of the present disclosure includes a plurality of batteries according to any one of the embodiments described herein; and a pack housing to accommodate the plurality of batteries.

The plurality of batteries may be arranged in one or more columns, e.g. in a predetermined number of columns and/or in a plurality of columns. The terminal of each battery and the outer surface of the closed portion of the housing disposed on the side opposite to the opening of the housing may be positioned upward. In other words, the terminal of each battery and a first end face of the housing may be positioned upward (i.e. facing upwards), e.g. facing a top cover of the pack housing, wherein the first end face is opposite to a second end face of the housing having an opening for inserting the electrode assembly into the housing. The second end face of the housing of each battery may be positioned downward (i.e. facing downwards), e.g. facing a bottom plate of the pack housing.

The battery pack may include a plurality of busbars connecting the plurality of batteries in series and in parallel. The plurality of busbars may be arranged or positioned on the plurality of batteries. Each busbar may include a body portion extending between the terminals of the adjacent batteries, e.g. a body portion extending in a space between the terminals of adjacent batteries. Each busbar may further include a plurality of first busbar terminals extending in one direction of the body portion (e.g. in a first direction from the body portion) and electrically coupled to the terminal of the battery disposed in the said direction (e.g. to the terminal of a respective battery disposed in said first direction from the body portion). Each busbar may further include a plurality of second busbar terminals extending in the other direction of the body portion (e.g. in a second direction from the body portion opposite to the first direction) and electrically coupled to the outer surface of the closed portion of the housing of the battery disposed in the other direction (e.g. to the first end face of the housing of a respective battery disposed in said second direction from the body portion).

A vehicle according to an embodiment of the present disclosure includes the battery pack according to any one of the embodiments described herein.

The invention further provides a current collector for electrically connecting an electrode assembly of a battery to a terminal of the battery. The current collector is configured to be interposed between the electrode assembly and a first end face of a housing of the battery accommodating the electrode assembly. The current collector is further configured to be coupled with a first electrode tab on a surface of the electrode assembly facing the first end face. The current collector comprises an edge portion configured to be arranged on the surface of the electrode assembly facing the first end face. The current collector further comprises a first electrode tab coupling portion extending inward from the edge portion towards a center of the current collector and configured to be coupled with the first electrode tab. The current collector also comprises a terminal coupling portion spaced apart from the first electrode tab coupling portion and configured to be coupled with the terminal

The current collector may be configured for use with or in a battery according to any one of the embodiments described herein. The current collector may in particular comprise any combination of the features described with regard to the first current collector and/or the second current collector of the battery according to any one of the embodiments described herein. Detailed description thereof is thus omitted in the following for the sake of brevity. The battery that the current collector is used in may for example be similar to the battery according to any one of the embodiments described above. The electrode assembly, the housing and/or the terminal of the battery may for example be similar as described above. In particular, the electrode tab that the current collector is to be coupled to may be formed by the first uncoated region of the first electrode (i.e. the first electrode tab coupling portion may correspond to the first uncoated region coupling portion). In the following, the terms "first electrode tab coupling portion" and "first uncoated region coupling portion" may thus be used synonymously. This, however, does not imply that the electrode tab that the current collector is to be coupled to is necessarily formed by a first uncoated region of a first electrode as described above.

The current collector may for example be shaped such that when the current collector is arranged on the electrode assembly (e.g. interposed between the electrode assembly and the first end face), the edge portion may be arranged adjacent to a sidewall of the housing of the battery. The center of the current collector, which may e.g. be surrounded or enclosed by the edge portion, may be arranged adjacent to or on the winding axis. The first electrode tap coupling portion (first uncoated region coupling portion) and/or the terminal coupling portion may be arranged adjacent to and/or at the center of the current collector and thus adjacent to and/or on the winding axis. In some examples, the current collector may possess a rotational symmetry around its center, in particular a discrete rotational symmetry, for example a twofold rotational symmetry (180°), a three-fold rotational symmetry (120°), and/or a four-fold rotational symmetry (90°).

According to one example, a current collector is provided which is applied to a battery including an electrode assembly having a first uncoated region and a second uncoated region, a housing which accommodates the electrode assembly through an open portion (second side face) formed on one side, and is electrically connected to the second uncoated region, and a terminal electrically connected to the first uncoated region. The current collector is interposed between the closed portion (first side face) of the housing disposed on a side opposite to the open portion and the electrode assembly, and is coupled onto one surface of the electrode assembly, The current collector comprises an edge portion positioned on one surface of the electrode assembly, a first uncoated region coupling portion (first electrode tab coupling portion) extending inward from the edge portion and coupled with the first uncoated region (first electrode tab), and a terminal coupling portion spaced apart from the first uncoated region coupling portion and coupled with the terminal.

The edge portion may for example be an outer, distal or circumferential portion of the current collector, which may e.g. face outwards as seen from the center of the current collector. The edge portion may surround or enclose the center of the current collector at least in part, in some examples completely (e.g. extending 360° around the center). In some examples, the center of the current collector may be a geometric center of the current collector and/or a center of mass of the current collector.

The edge portion may have a shape of a rim extending around an inner space, e.g. as described above for the battery according to the present invention. Put differently, the edge portion may have a shape of a rim having an empty internal space. The terminal coupling portion may be disposed in the inner space (internal space) of the edge portion, in particular at a center of the inner space (internal space) of the edge portion, e.g. as described above. The first uncoated region coupling portion (first electrode tab coupling portion) and the terminal coupling portion may be electrically connected by the edge portion, e.g. as described above.

The current collector may further comprise a connecting portion extending inward from the edge portion, e.g. towards the center of the current collector, and connected to the terminal coupling portion.

At least a part of the connecting portion may have a smaller cross-sectional area than the first uncoated region coupling portion. In other words, at least part of the connecting portion may be smaller in cross-sectional area than the first uncoated region coupling portion.

At least a part of the connecting portion may have a smaller width and/or a smaller thickness than the first uncoated region coupling portion. In other words, at least part of the connecting portion may be smaller in at least one of width or thickness than the first uncoated region coupling portion. The width and the thickness may for example be measured in directions perpendicular to a direction from the edge portion toward the terminal coupling portion, which may coincide with the radial direction.

The connecting portion may include a tapered portion (or taper portion) in which a width of the connection portion decreases continuously or gradually (e.g. step-wise) along the direction from the edge portion toward the terminal coupling portion. Put differently, the connecting portion may include a taper portion in which width of the connection portion is continuously or gradually reduced along a direction from an inner surface of the edge portion toward the terminal coupling portion.

The current collector may comprise a plurality of connecting portions. In some examples, the number of connecting portions may be one or two.

A plurality of first uncoated region coupling portions may be provided. In other words, the current collector may comprise a plurality of first uncoated region coupling portions. Each of the plurality of first uncoated region coupling portions may extend inward from the edge portion, e.g. towards the center of the current collector, and may be configured to be coupled with the first electrode tab (e.g. the first uncoated region).

The plurality of first uncoated region coupling portions may be arranged equidistantly along the edge portion. Put differently, the plurality of first uncoated region coupling portions may be regularly arranged along an extension direction of the edge portion.

A length or an extended length of each of the plurality of first uncoated region coupling portions may be substantially equal to each other. The length may for example be measured inward from the edge portion towards the center of the current collector, e.g. along the radial direction.

A cross-sectional area of each of the plurality of first uncoated region coupling portions may be substantially equal. A width and thickness of each of the plurality of first uncoated region coupling portions may be substantially equal. The terminal coupling portion may be arranged or positioned such that the terminal coupling portion is surrounded by the plurality of first uncoated region coupling portions. The connecting portion may be disposed between a pair of adjacent first uncoated region coupling portions. The connecting portion may be arranged at a same distance or a substantially same distance to each of the pair of adjacent first uncoated region coupling portions along the edge portion. In other words, a distance from the connecting portion to one of the pair of first uncoated region coupling portions along an extension direction of the edge portion may be substantially equal to a distance to the other one.

A plurality of connecting portions may be provided, i.e. the current collector may comprise a plurality of connecting portions. Each of the plurality of connecting portions may be arranged or positioned between a pair of adjacent first uncoated region coupling portions. The plurality of connecting portions may be arranged equidistantly along the edge portion, e.g. may be regularly arranged along an extension direction of the edge portion. A distance along the edge portion from each of the plurality of connecting portions to one of the respective pair of adjacent first uncoated region coupling portions is substantially equal to a distance to the other one of the respective pair of adjacent first uncoated region coupling portions. In other words, a distance from each of the plurality of connecting portions to one of the pair of adjacent first uncoated region coupling portions along an extension direction of the edge portion may be substantially equal to a distance to the other one.

The connecting portion may include a current interruption portion configured to reduce a cross-sectional area of the connecting portion, e.g. having a smaller cross-sectional area than adjacent portions of the connecting portion. The current interruption portion may be a portion of the connecting portion which has a smaller width and/or a smaller thickness than adjacent portions of the connecting portion. Put differently, the current interruption portion may be area region which is smaller in at least one of width or thickness than a remaining region of the connecting portion. The current interruption portion may include at least one of a notch, a groove or a through-hole formed on at least one surface of the connecting portion.

The current collector may further comprise a bridge portion connecting at least one of the following: between the adjacent first uncoated region coupling portions (i.e. connecting a pair of adjacent first electrode tab coupling portions), between the first uncoated region coupling portion and the connecting portion adjacent to each other (i.e. connecting a first electrode tab coupling portion and a connecting portion adjacent to each other), and between the adjacent connecting portions (i.e. connecting a pair of adjacent connecting portions). The bridge portion may be disposed at an inner position than the edge portion. In other words, the bridge portion may be disposed closer to a center of the current collector than the edge portion. An impregnation hole may be formed between the edge portion and the bridge portion. The impregnation hole may have a shape of a slit extending along an extension direction of the edge portion. In other words, the impregnation hole may have a slit-like shape extending along a portion of the edge portion.

The cross-sectional area of the connecting portion in an area in which the current interruption portion is formed may be 0.6 to 0.9 compared to the cross-sectional area of the connecting portion in an area adjacent to the area in which the current interruption portion is formed, e.g. as detailed above for the battery according to the invention. A cross-sectional area of the connecting portion may be 0.2 to 1.0 compared to a cross-sectional area of the first uncoated region coupling portion, e.g. as detailed above for the battery according to the invention.

A tape may be coupled to the current interruption portion. The tape may be made of polyimide. The tape may surround or may be configured to surround the connecting portion in the area in which the current interruption portion is formed.

ADVANTAGEOUS EFFECTS

According to an aspect of the present disclosure, it is possible to disperse external impacts and/or vibrations applied to the secondary battery during the use of the secondary battery to prevent the impacts and/or vibrations from concentrating on a specific portion, thereby preventing damage in the coupled portions between components.

According to another aspect of the present disclosure, the current collector itself performs the current interruption function without an additional installation of a current interruption member, and accordingly it is possible to rapidly interrupt the current in the event of an overcurrent caused by a short-circuit, thereby ensuring safety of secondary batteries while in use.

According to another aspect of the present disclosure, the sectional area of the current path is increased by improving the structure of the electrode terminal of the battery, thereby solving the problem of internal heat generated during rapid charging.

According to another aspect of the present disclosure, an electrical wiring operation for connecting batteries in serial and/or in parallel may be performed on one side of the batteries.

According to another aspect of the present disclosure, when electrically connecting a plurality of batteries in one direction, the wide surface of the closed portion of the housing is used as an electrode terminal, thereby having a sufficient area for welding an electrical connection component, such as busbars, used to manufacture a battery pack with electrode terminals of the batteries.

According to another aspect of the present disclosure, it is possible to increase the contact area of the electrode assembly and the current collector (first current collector) and/or the contact area of the terminal and the current collector (first current collector) through the improved structure of the uncoated region of the electrode assembly, thereby minimizing the resistance of the battery.

However, the technical effects that can be obtained through the present disclosure are not limited to the above-described effect, and these and other effects will be clearly understood by those skilled in the art from the following description.

DESCRIPTION OF DRAWINGS

The accompanying drawings illustrate a preferred embodiment of the present disclosure, and together with the detailed description of the present disclosure described below, serve to provide a further understanding of the technical aspects of the present disclosure, and thus the present disclosure should not be construed as being limited to the drawing.

FIG. 1 is a plan view showing a structure of an electrode plate used in a conventional tab-less cylindrical battery.

FIG. 2 is a diagram showing a process of winding an electrode assembly included in a conventional tab-less cylindrical battery.

FIG. 3 is a diagram showing a process of welding a current collector to a bend surface of an uncoated region in the electrode assembly of FIG. 2.

FIG. 4 is a cross-sectional view showing a conventional tab-less cylindrical battery, taken along a lengthwise direction Z.

FIG. 5 is a diagram showing an appearance of a cylindrical battery according to an embodiment of the present disclosure.

FIG. 6 is a cross-sectional view showing an internal structure of a cylindrical battery according to an embodiment of the present disclosure.

FIG. 7 is a partial cross-sectioned view showing an upper structure of a cylindrical battery according to an embodiment of the present disclosure.

FIG. 8 is an enlarged diagram showing an upper part of an electrode assembly of the present disclosure.

FIG. 9 is an enlarged diagram showing an upper part of an uncoated region of FIG. 8.

FIGS. 10 and 11 are top views showing a coupled portion of a first current collector and a terminal, when viewed along the arrow direction of FIG. 7.

FIGS. 12 to 15 are diagrams exemplarily showing various shapes of a current collector (a first current collector) according to an embodiment of the present disclosure.

FIGS. 16 to 20 are diagrams exemplarily showing various shapes of a current collector (a first current collector) according to another embodiment of the present disclosure (a current collector with a current interruption portion).

FIG. 21 is a diagram exemplarily showing various shapes of a current collector (a first current collector) according to a still another embodiment of the present disclosure (a current interruption portion to which a cover member is applied).

FIG. 22 is a diagram showing a current collector (a first current collector) having a different structure from the current collectors (first current collectors) shown in FIGS. 12 to 15 (a structure in which a bridge portion is additionally applied).

FIG. 23 is a partial cross-sectioned view showing a lower structure of a cylindrical battery according to an embodiment of the present disclosure.

FIG. 24 is a diagram showing a lower surface of a cylindrical battery according to an embodiment of the present disclosure.

FIG. 25 is a diagram showing an exemplary shape of a second current collector which is applied to the present disclosure.

FIG. 26 is a plan view exemplarily showing an electrode structure according to a preferred embodiment of the present disclosure.

FIG. 27 is a cross-sectional view showing an electrode assembly in which an uncoated region segment structure of a first electrode is also applied to a second electrode according to an embodiment of the present disclosure, taken along a lengthwise direction Z.

FIG. 28 is a cross-sectional view showing an electrode assembly with a bent uncoated region according to an embodiment of the present disclosure, taken along a lengthwise direction Z.

FIG. 29 is a perspective view showing an electrode assembly with a bent uncoated region according to an embodiment of the present disclosure.

FIG. 30 is a top plan view showing a plurality of cylindrical batteries according to an embodiment of the present disclosure, connected in series and in parallel using busbars.

FIG. 31 is a diagram showing a schematic configuration of a battery pack including cylindrical batteries according to an embodiment of the present disclosure.

FIG. 32 is a diagram showing a schematic configuration of a vehicle including a battery pack according to an embodiment of the present disclosure.

EXAMPLES

Hereinafter, examples of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation. Therefore, the embodiments described herein and illustrations shown in the drawings are just some of the most preferred embodiments of the present disclosure, but not intended to fully describe the technical aspects of the present disclosure, so it should be understood that a variety of other equivalents and modifications could have been made thereto at the time that the application was filed.

In addition, to help the understanding of the present disclosure, the accompanying drawings may illustrate some elements in exaggerated dimensions, not in actual scale. Furthermore, the same element in different embodiments may be given the same reference numeral.

The term equal refers to 'substantially equal'. Accordingly, substantially equal may include the deviation regarded as a low level in the corresponding technical field, for example, the deviation of 5% or less. In addition, uniformity of a certain parameter in a predetermined region may mean uniformity in terms of an average.

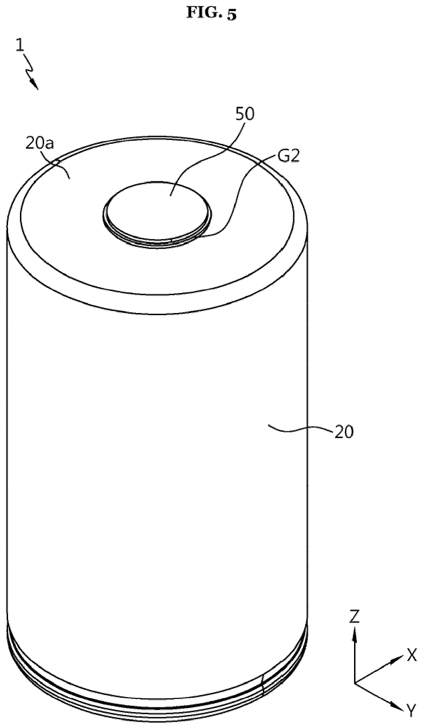

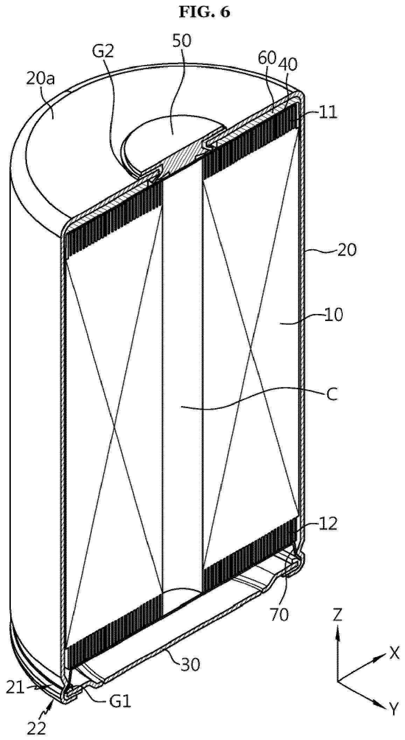

Referring to FIGS. 5 and 6, a cylindrical battery 1 according to an embodiment of the present disclosure includes an electrode assembly 10, a housing 20, a cap 30, a current collector (a first current collector) 40 and a terminal 50. In addition to the above-described components, the cylindrical battery 1 may further include a sealing gasket G1 and/or an insulation gasket G2 and/or an insulator 60 and/or a second current collector 70.

The electrode assembly 10 includes a first electrode having a first polarity, a second electrode having a second polarity, and a separator interposed between the first electrode and the second electrode. The first electrode is a positive electrode or a negative electrode, and the second electrode corresponds to an electrode having the opposite polarity to the first electrode.

The electrode assembly 10 may have, for example, a jelly-roll structure. That is, the electrode assembly 10 may be manufactured by forming a stack by stacking a first electrode current collector and a second electrode current collector having a sheet shape at least once with the separator interposed between, and winding the stack around a winding center C in a direction. In this case, an additional separator may be provided on an outer circumferential surface of the electrode assembly 10 for insulation from the housing 20. Any well-known jelly-roll structure may be applied to the present disclosure without limitations.

The first electrode includes the first electrode current collector and a first electrode active material coated on one or two surfaces of the first electrode current collector. There is an uncoated region, in which the first electrode active material is not coated, at one end of the first electrode current collector in the widthwise direction (parallel to the Z axis). The uncoated region serving as a first electrode tab is hereinafter referred to as a first uncoated region 11. The first uncoated region 11 is provided on the electrode assembly 10 received in the housing 20 in the heightwise direction (parallel to the Z axis). That is, the first electrode current collector includes the first uncoated region 11 in which the active material layer is not coated and is exposed to the outside of the separator at the end of the long side, and part of the first uncoated region 11 itself is used as an electrode tab. The first uncoated region 11 may be, for example, a positive electrode tab.

Meanwhile, at least part of the first uncoated region 11 may include a plurality of segments segmented along the winding direction of the electrode assembly 10. In this case, the plurality of segments may be bent along the radial direction of the electrode assembly 10. The plurality of bent segments may overlap in multiple layers. In this case, a first uncoated region coupling portion 32 as described below may be coupled to an area in which the plurality of segments overlap in multiple layers.

The second electrode includes the second electrode current collector and a second electrode active material coated on one or two surfaces of the second electrode current collector. There is an uncoated region, in which the second electrode active material is not coated, at the other end of the second electrode current collector in the widthwise direction (parallel to the Z axis). The uncoated region serving as a second electrode tab is hereinafter referred to as a second uncoated region 12. The second uncoated region 12 is provided below the electrode assembly 10 received in the housing 20 in the heightwise direction (parallel to the Z axis). That is, the second electrode current collector includes the second uncoated region 12 in which the active material layer is not coated and is exposed to the outside of the separator at the end of the long side, and at least part of the second uncoated region 12 itself is used as an electrode tab. The second uncoated region 12 may be, for example, a positive electrode tab. Meanwhile, at least part of the second uncoated region 12 may include a plurality of segments segmented along the winding direction of the electrode assembly 10. In this case, the plurality of segments may be bent along the radial direction of the electrode assembly 10. The plurality of bent segments may overlap in multiple layers. In this case, a second current collector 70 as described below may be coupled to an area in which the plurality of segments overlaps in multiple layers.

The first uncoated region 11 and the second uncoated region 12 extend in the opposite directions along the heightwise direction (parallel to the Z axis) of the cylindrical battery 1. The first uncoated region 11 extends toward a closed portion of the housing 20, and the second uncoated region 12 extends toward an open portion of the housing 20.

In the present disclosure, a positive electrode active material coated on the positive electrode plate and a negative electrode active material coated on the negative electrode plate may include any well-known active material without limitation.

In an example, the positive electrode active material may include an alkali metal compound represented by a general formula $A[A_xM_y]O_{2+z}$ (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru and Cr; $x \geq 0$, $1 \leq x+y \leq 2$, $-0.1 \leq z \leq 2$; and the stoichiometric coefficients x, y and z are selected to keep the compound electrically neutral).

In another example, the positive electrode active material may include an alkali metal compound $xLiM1O_2-(1-x)Li_2M2O_3$ disclosed in US6,677,082, US6,680,143, et al., wherein M1 includes at least one element having an average oxidation state of 3; M2 includes at least one element having an average oxidation state of 4; $0 \leq x \leq 1$).

In still another example, the positive electrode active material may include lithium metal phosphate represented by a general formula $LiaM1_xFe1-xM2_yP1-yM3_zO4-z$ (M1 includes at least one selected from the Ti, Si, Mn, Co, Fe, V, Cr, Mo, Ni, Nd, Al, Mg and Al; M2 includes at least one selected from Ti, Si, Mn, Co, Fe, V, Cr, Mo, Ni, Nd, Al, Mg, Al, As, Sb, Si, Ge, V and S; M3 includes a halogen group element optionally including F; $0 < a \leq 2$, $0 \leq x \leq 1$, $0 \leq y < 1$, $0 \leq z < 1$; the stoichiometric coefficients a, x, y and z are selected to keep the compound electrically neutral), or $Li_3M2(PO_4)_3$ (M includes at least one selected from Ti, Si, Mn, Fe, Co, V, Cr, Mo, Ni, Al, Mg and Al).

Preferably, the positive electrode active material may include primary particles and/or secondary particles formed by agglomeration of the primary particles.

In an example, the negative electrode active material may include carbon materials, lithium metal or lithium metal compounds, silicon or silicon compounds and tin or tin compounds. In addition, the negative electrode active material may include metal oxides such as $TiO_2$ and $SnO_2$ with a potential of less than 2V. The carbon material may include a low-crystalline carbon and a high-crystalline carbon.

The separator may include a porous polymer film, for example, a porous polymer film made of a polyolefin-based polymer such as ethylene homopolymer, propylene homopolymer, ethylene/butene copolymer, ethylene/hexene copolymer and ethylene/methacrylate copolymer, used singly or in stack. As another example, the separator may include a commonly used porous nonwoven fabric, for example, a nonwoven fabric made of high melting point glass fibers and polyethylene terephthalate fibers.

A coating layer of inorganic particles may be included on at least one surface of the separator. The separator itself may be a coating layer of inorganic particles. The particles in the coating layer may be coupled with a binder such that there is interstitial volume between adjacent particles.

The inorganic particles may be an inorganic material having a dielectric constant of 5 or more. A non-limiting example of the inorganic particles may include at least one selected from the group consisting of $Pb(Zr,Ti)O_3$ (PZT), $Pb1-xLaxZr1-yTiyO_3$ (PLZT), $PB(Mg_3Nb_{2/3})O_3-PbTiO_3$ (PMN-PT), $BaTiO_3$, hafnia ($HfO_2$), $SrTiO_3$, $TiO_2$, $Al_2O_3$, $ZrO_2$, $SnO_2$, $CeO_2$, MgO, CaO, ZnO and $Y_2O_3$.

An electrolyte may be a salt having a structure of $A^+B^-$. Here, $A^+$ includes an alkali metal cation such as $Li^+$, $Na^+$ and $K^+$, or a combination thereof. $B^-$ includes at least one anion selected from the group consisting of $F^-$, $Cl^-$, $Br^-$,

I-, NO3-, N (CN)2-, BF4-, ClO4-, AlO4-, AlCl4-, PF6-, SbF6-, AsF6-, BF2C2O4-, BC4O8-, (CF3)2PF4-, (CF3)3PF3-, (CF3)4PF2-, (CF3)5PF-, (CF3)6P-, CF3SO3-, C4F9SO3-, CF3CF2SO3-, (CF3SO2)2N-, (FSO2)2N-, CF3CF2 (CF3)2CO-, (CF3SO2)2CH-, (SF5)3C-, (CF3SO2)3C-, CF3 (CF2)7SO3-, CF3CO2-, CH3CO2-, SCN- and (CF3CF2SO2)2N-.

The electrolyte may be dissolved in an organic solvent. The organic solvent may include at least one of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC) or γ-butyrolactone.

Referring to FIGS. 6, 7 and 23, the housing 20 is a substantially cylindrical container having an opening on the lower side, and is made of, for example, a material having conductive properties such as a metal. The material of the housing 20 may include, for example, steel, stainless steel or nickel-plated steel. The upper surface disposed on the side opposite to the opening will be referred to as a closed portion. The sidewall portion and the closed portion of the housing 20 may be integrally formed. Alternatively, the sidewall portion and the closed portion of the housing 20 may be provided separately from each other and be coupled to each other, for example, by welding. The upper surface of the housing 20 (a surface parallel to the X-Y plane) or an outer surface 20a of the closed portion, may have an approximately flat shape. The housing 20 accommodates the electrode assembly 10 through the opening formed on the lower side, and also accommodates the electrolyte together.

The housing 20 is electrically connected to the electrode assembly 10. The housing 20 is electrically connected to, for example, the second uncoated region 12 of the electrode assembly 10. In this case, the housing 20 has the same polarity as the second uncoated region 12.

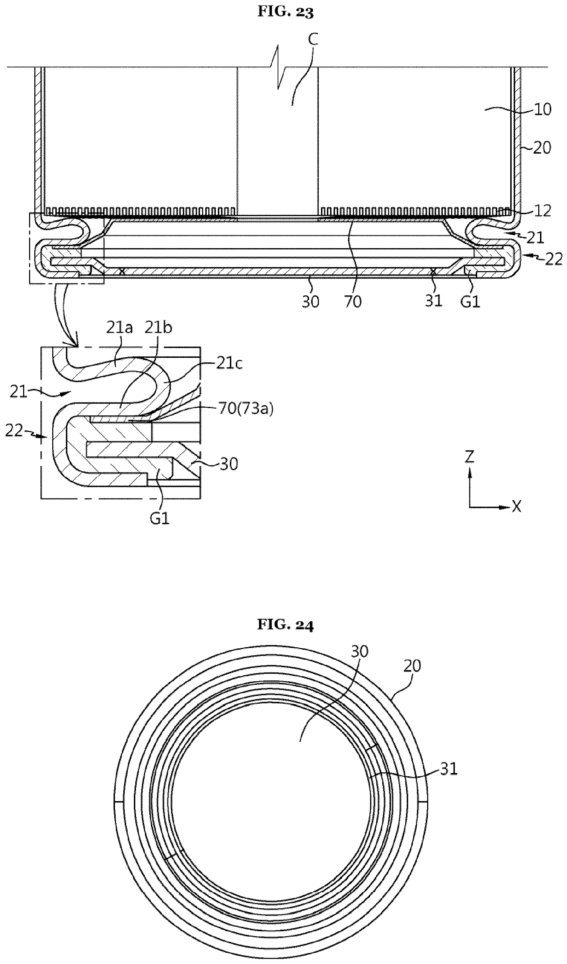

Referring to FIGS. 6 and 23, the housing 20 may include a beading portion 21 and a crimping portion 22 formed at the lower end thereof. The beading portion 21 is disposed below the electrode assembly 10. The beading portion 21 is formed by press-fitting the periphery of the outer circumferential surface of the housing 20. An upper beading portion 21a and a lower beading portion 21b disposed at upper and lower positions, respectively, with respect to an innermost portion 21c of the beading portion 21 disposed on the innermost side along the pressing-fitting direction may have an asymmetrical shape. This asymmetrical shape may be formed in the process of compressing the housing 20 along the height direction (parallel to the Z-axis) through a sizing process. The sizing process is a process of conforming the height of the cylindrical battery 1 to the design form factor by pressing the housing 20 along the winding axis direction of the electrode assembly 10.

The lower beading portion 21b may include a flat portion approximately parallel to the closed portion of the housing 20. Meanwhile, due to the asymmetrical shape, the upper beading portion 21a may be inclined upward, at least in part, along a direction toward the innermost portion 21c. Accordingly, the upper beading portion 21a may press the lower part of the electrode assembly 10 to fix the electrode assembly 10. The beading portion 21 prevents the electrode assembly 10 having a size approximately corresponding to the inner diameter of the housing 20 from slipping through the opening formed at the lower end of the housing 20, and may function as a support portion on which the cap 30 is seated. In addition to the cap 30, the lower beading portion 21b may function as a support portion for fixing the contact portion 73a of the second current collector 70 and the sealing gasket G1 as described below.

The crimping portion 22 is formed below the beading portion 21. The crimping portion 22 extends from the lower beading portion 21. The crimping portion 22 is extended and bent to surround the outer circumferential surface of the cap 30 disposed below the beading portion 21 and a part of the lower surface of the cap 30. In addition to the cap 30, the crimping portion 22 may fix the sealing gasket G1.

However, the present disclosure does not exclude the case where the housing 20 does not include the beading portion 21 and/or the crimping portion 22. In the present disclosure, in case that the housing 20 does not include the beading portion 21 and/or the crimping portion 22, fixing the electrode assembly 10 and/or fixing the cap 30 and/or sealing the housing 20 may be realized by, for example, additionally applying a component serving as a stopper for the electrode assembly 10 and/or additionally applying a structure on which the cap 30 is seated and/or welding the housing 20 and the cap 30.

Meanwhile, the housing 20 may have different thicknesses for each location. The housing 20 may include the sidewall portion that is thinner than the closed portion. In this case, the electrode assembly 10 may have a larger diameter, thereby providing an energy density advantage.

The housing 20 may be, for example, about 0.4 mm to 1.2 mm, and more preferably about 0.6 mm to 1.0 mm in thickness at the area of the closed portion or the upper surface. In case that the thickness of the closed portion of the housing 20 is too small, there may be a high likelihood that the internal pressure rises or the housing 20 deforms when welded. On the contrary, in case that the thickness of the closed portion of the housing 20 is too large, it is not good for the processing of the housing 20, and losses of energy density may increase. Therefore, it is necessary to manage the thickness of the closed portion of the housing 20 at an appropriate level.

Meanwhile, the housing 20 may be about 0.3 mm to 0.8 mm, and more preferably about 0.4 mm to 0.6 mm in thickness at the sidewall portion that forms the outer circumferential surface. If the thickness of the sidewall portion of the housing 20 is too small, there is a high likelihood that a fire spreads to neighboring cylindrical batteries 1 when the fire and explosion occurs in the cylindrical battery 1. For example, when a fire and explosion occur due to a malfunction of a cylindrical battery 1 in a battery pack including a plurality of cylindrical batteries 1, in case that the thickness of the sidewall portion of the housing 20 is too small, a pin hole may be formed, and as a consequence, the likelihood of a chain ignition and explosion may increase. In contrast, in case that the thickness of the sidewall portion of the housing 20 is too large, it is not good for the processing of the housing 20 and losses of energy density may increase. Therefore, it is necessary to manage the thickness of the sidewall portion of the housing 20 at an appropriate level. Meanwhile, the housing 20 may have a plating layer. In this case, the plating layer may include, for example, nickel (Ni). The plating layer may be about 1.5 $\mu$m to 6.0 $\mu$m in thickness.

Referring to FIGS. 6 and 23, the cap 30 may be made of, for example, a metal material to ensure rigidity. The cap 30 closes the opening (or the open end) formed at the lower end of the housing 20. That is, the cap 30 forms the lower surface of the cylindrical battery 1. In the cylindrical battery 1 of the present disclosure, the cap 30 made of a metal material having conductive properties may have no polarity. The cap 30 has no polarity may means that the cap 30 is not electrically connected to the electrode assembly 10. When the cap 30 is not electrically connected to the electrode assembly 10, the cap 30 does not function as a positive electrode terminal or a negative electrode terminal. That is, in the present disclosure, the cap 30 does not need to be electrically connected to the electrode assembly 10 and the housing 20, and its material is not necessarily limited to the conductive metal.

When the housing 20 of the present disclosure includes the beading portion 21, the cap 30 may be supported by the lower surface of the beading portion 21 formed in the housing 20. In addition, when the housing 20 of the present disclosure includes the crimping portion 22, the cap 30 is fixed by the crimping portion 22. That is, the upper surface of the cap 30 may be supported by the beading portion 21, and the outer circumferential surface and the lower surface of the cap 30 may be supported by the crimping portion 22. The sealing gasket G1 may be interposed between the cap 30 and the crimping portion 22 of the housing 20 to ensure sealability of the housing 20. Meanwhile, as described above, the housing 20 of the present disclosure may not include the beading portion 21 and/or the crimping portion 22, and in this case, the sealing gasket G1 may be interposed between a structure for fixing provided at the opening of the housing 20 and the cap 30 to ensure sealability of the housing 20.

Referring to FIGS. 23 and 24, the cap 30 may further include a venting portion 31 to prevent the internal pressure from rising over a preset value due to a gas generated inside the housing 20. The preset internal pressure value may be about 15 kgf/cm2 to 35 kgf/cm2. The venting portion 31 corresponds to a region having a smaller thickness than the peripheral region of the cap 30. The venting portion 31 is more structurally vulnerable than the peripheral region. Accordingly, in case that the internal pressure of the housing 20 rises over a certain level due to a malfunction of the cylindrical battery 1, the venting portion 31 blows to force gas generated inside the housing 20 out. The venting portion 31 may be formed, for example, by notching on one or two surfaces of the cap 30 to partially reduce the thickness of the housing 20.

The cylindrical battery 1 according to an embodiment of the present disclosure may have a structure in which both the positive electrode terminal and the negative electrode terminal are provided at the upper part thereof as described below, and thus the upper structure is more complicated than the lower structure. Accordingly, the cap 30 that forms the lower surface of the cylindrical battery 1 may include the venting portion 31 to force gas generated inside the housing 20 out. As shown in FIG. 23, the lower end of the cap 30 is preferably disposed higher than the lower end of the housing 20. In this case, even in case that the lower end of the housing 20 contacts the ground or the bottom surface of the housing for constructing a module or pack, the cap 30 does not contact the ground or the bottom surface of the housing for constructing a module or pack. Accordingly, it is possible to prevent the pressure required for the blowing of the venting portion 31 from deviating from a design value due to the weight of the cylindrical battery 1, thereby allowing the venting portion 31 to blow smoothly.

Meanwhile, the venting portion 31 may extend continuously or discontinuously to surround the central region of the cap 30. In this case, a longer distance from the center of the cap 30 to the venting portion 31 causes the venting portion 31 to blow more easily when the internal pressure rises. This is because under the equal internal pressure applied, with the increasing distance from the center point of the cap 30 to the venting portion 31, a greater force acts on the venting portion 31, thereby allowing the venting portion 31 to blow more easily. In addition, with the increasing distance from the center point of the cap 30 to the venting portion 31, the open area by venting increases, thereby allowing the venting gas to smoothly exit. From this point of view, the venting portion 31 may be preferably formed along the edges of the central region having an approximately flat shape extending in a downward direction (in FIG. 23) among the entire region of the cap 30.

Although FIGS. 23 and 24 show that the venting portion 31 is continuously formed on the cap 30 in an approximately circular shape, the present disclosure is not limited thereto. The venting portion 31 may have an approximately elliptical shape or any other geometric shape including the center point of the cap 30 therein. In addition, the venting portion 31 may be formed discontinuously, rather than continuously.

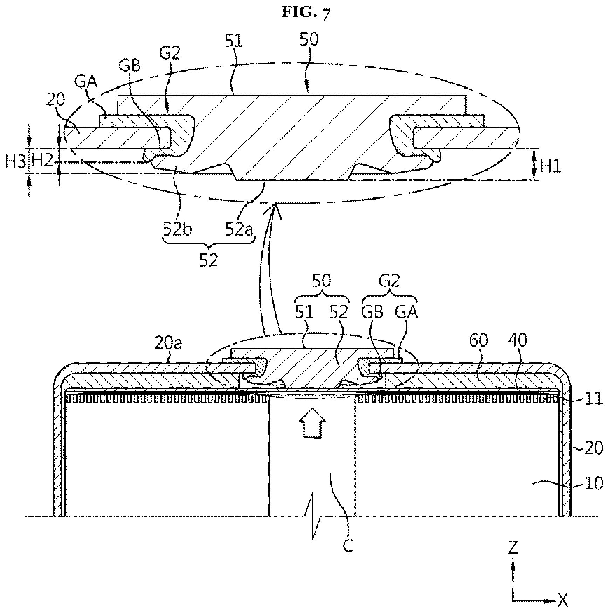

Referring to FIG. 7, the current collector (the first current collector) 40 is coupled to the upper part of the electrode assembly 10. The current collector 40 is made of a metal having conductive properties, and is connected to the first uncoated region 11.

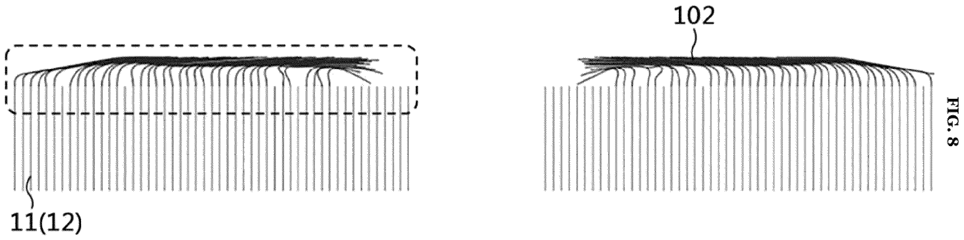

Referring to FIGS. 7 and 8, the current collector 40 may be coupled onto a coupling surface (a bend surface) 102 formed by bending the end of the first uncoated region 11 in parallel to the current collector 40. The bending direction of the first uncoated region 11 may be the radial direction of the electrode assembly 10. The bending direction of the first uncoated region 11 may be, for example, a direction facing the winding center C of the electrode assembly 10. When the first uncoated region 11 has the bent shape as described above, the space occupied by the first uncoated region 11 reduces, thereby improving the energy density. In addition, the coupling area between the first uncoated region 11 and the current collector 40 increases, thereby improving the coupling strength and reducing the contact resistance.

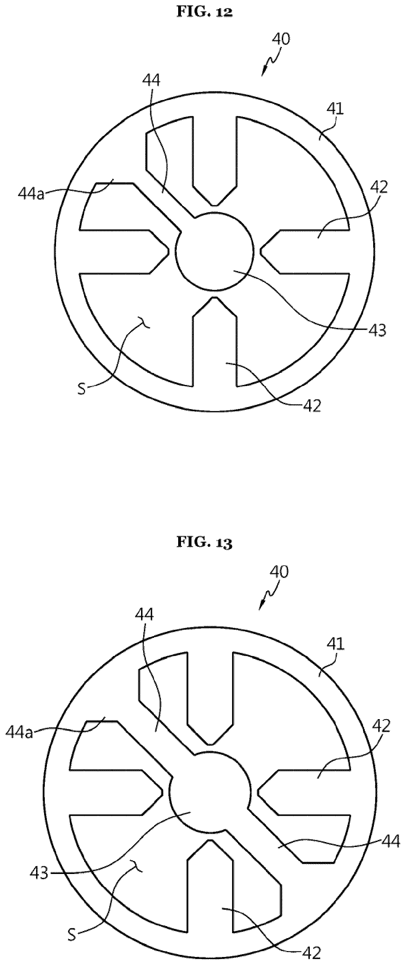

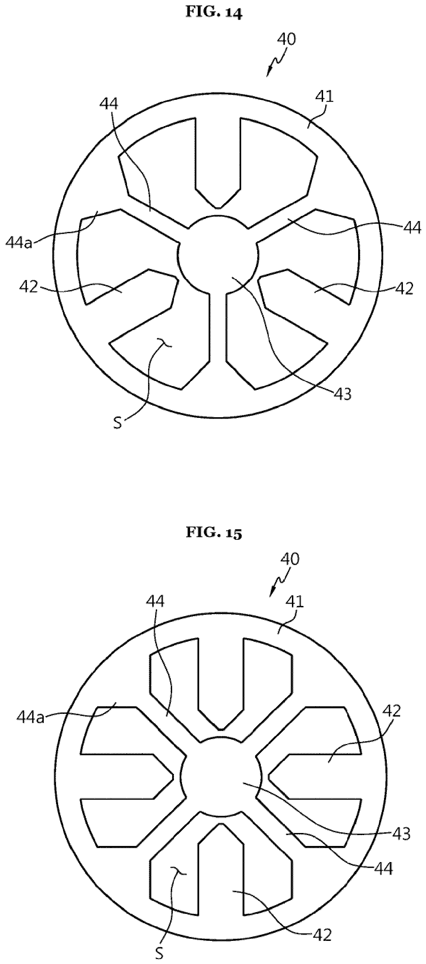

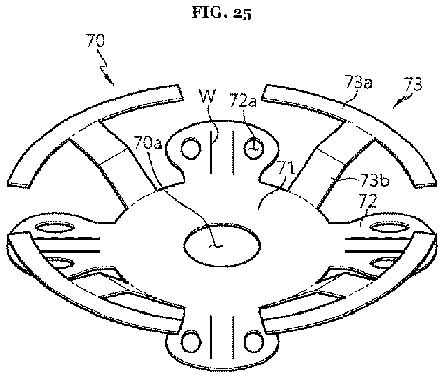

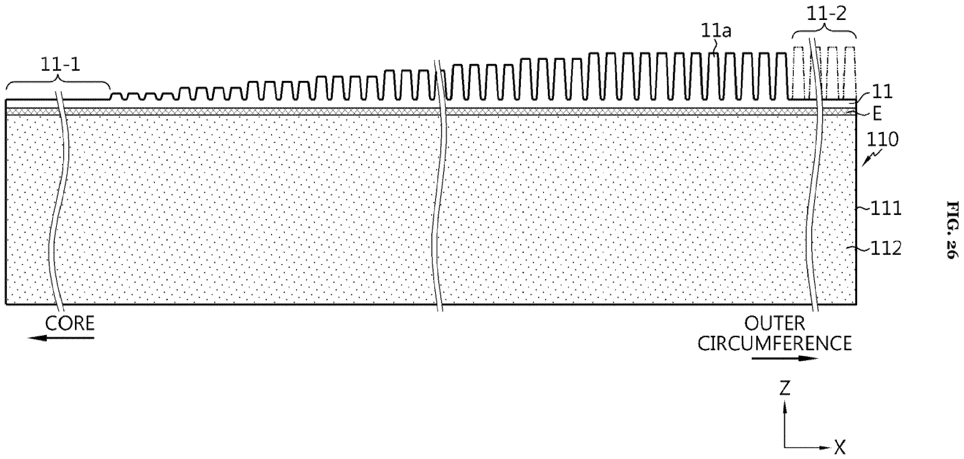

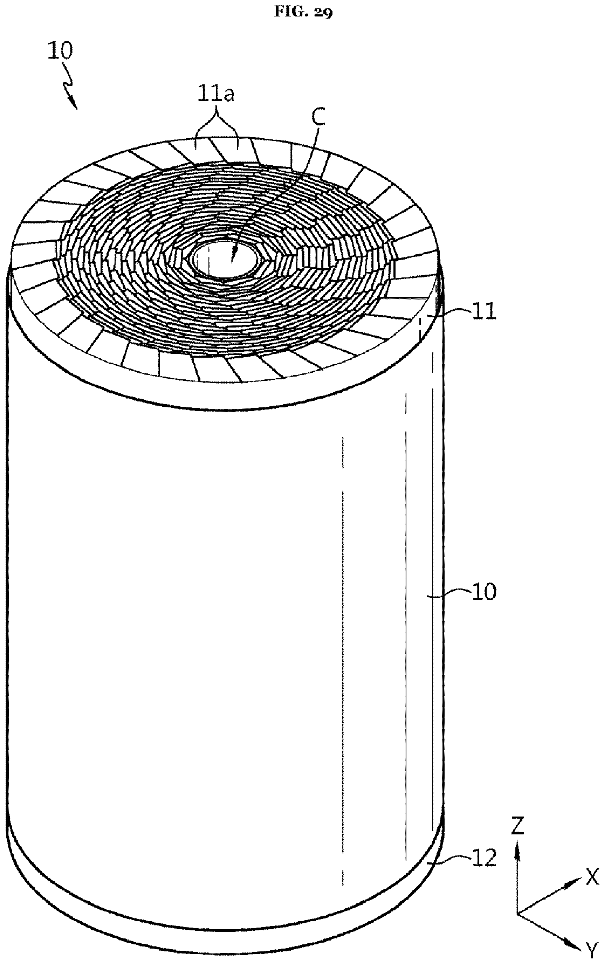

Referring to FIGS. 7 to 9, at least part of the first uncoated region 11 and/or the second uncoated region 12 may include the plurality of segments (see 11a in FIGS. 26 and 29) split along the winding direction of the electrode assembly 10. In this case, the plurality of segments may be bent along the radial direction of the electrode assembly 10. The plurality of bent segments may overlap in multiple layers. In this case, the first uncoated region coupling portion 42 (see FIGS. 12 to 15) of the current collector (the first current collector) 40 and/or a second uncoated region coupling portion 72 (see FIG. 25) of the current collector (the second current collector) 70 as described below may be coupled to an area in which the plurality of segments overlap in multiple layers.

Referring to FIGS. 7 to 9, as the first uncoated region 11 and/or the second uncoated region 12 is bent from the outer circumference of the electrode assembly 10 to the electrode core, there is a zone in which the segments overlap in ten or more layers.

When the plurality of segments overlap by bending the segments of the first uncoated region 11 and/or the second uncoated region 12 from the outer circumference of the electrode assembly 10 to the core, the number of overlapping layers of the segments gradually increases from the outer circumference to the core. The number of overlapping layers of the segments is uniformly maintained when it reaches a specific zone after it gradually increases.

The zone where the number of overlapping layers of the segments is approximately at the maximum and is approximately uniformly maintained is defined as a welding target area. The number of overlapping layers at the welding target area may be, for example, approximately ten or more. The first current collector 40 and/or the second current collector 70 as described below may be coupled with the first uncoated region 11 and/or the second uncoated region 12 by welding to overlap with the welding target area at least 50% or more. It is desirable to increase the output of a laser to sufficiently ensure the weld strength when welding the first current collector 40 and/or the second current collector 70 onto the approximately flat coupling surface 102 formed by bending the first uncoated region 11 and/or the second uncoated region 12. When the output of the laser increases, the laser penetrates into the electrode assembly 10 through the area in which the first uncoated region 11 and/or the second uncoated region 12 overlaps, causing damage to the separator and the active material layer. Accordingly, to prevent the laser from passing through, it is desirable to increase the number of overlapping layers of the first uncoated region 11 and/or the second uncoated region 12 above a predetermined level. To increase the number of overlapping layers of the first uncoated region 11 and/or the second uncoated region 12, it is necessary to increase the height of the segment. However, when the height of the segment increases, swell may occur in the first uncoated region 11 and/or the second uncoated region 12 in the process of manufacturing the electrode plate. Accordingly, it is desirable to adjust the height of the segment to an appropriate level.

As described above, when it is designed such that the radial direction length of the zone in which the number of overlapping layers of the segments of the first uncoated region 11 and/or the second uncoated region 12 is ten or more is approximately 25% or more compared to the radius of the electrode assembly 10, and welding is carried out in the welding target area, even though the output of the laser increases, the overlapping portion of the first uncoated region 11 and/or the second uncoated region 12 sufficiently masks the laser, thereby preventing damage of the separator and the active material layer by the laser.

Referring to FIGS. 6 and 7, the current collector (the first current collector) 40 is coupled to the upper part of the electrode assembly 10. In addition, the current collector 40 is coupled with the terminal 50. That is, the current collector 40 electrically connects the first uncoated region 11 of the electrode assembly 10 to the terminal 50. The first current collector 40 is made of a metal having conductive properties.

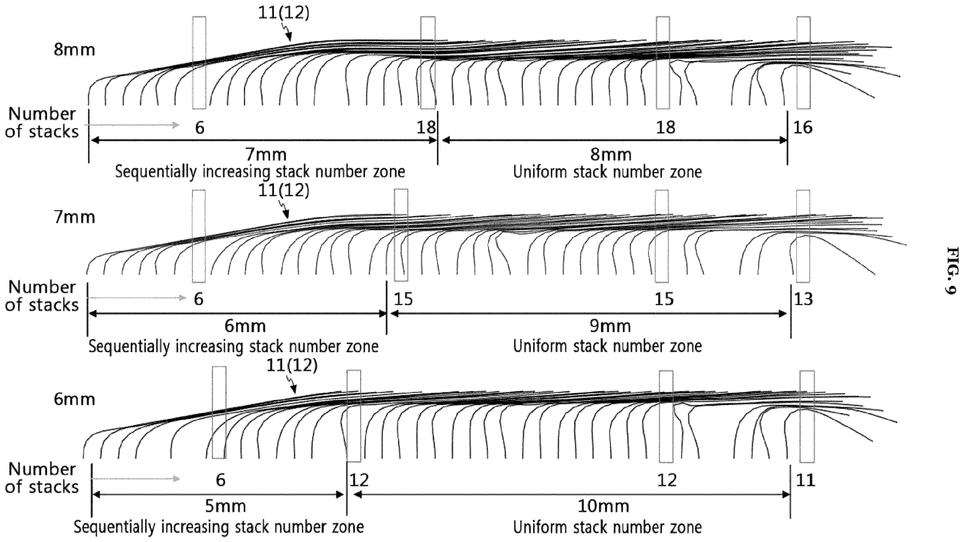

Referring to FIGS. 8 and 9 together with FIGS. 6 and 7, the current collector 40 may be coupled onto the coupling surface (the bend surface) 102 formed by bending the end of the first uncoated region 11 in parallel to the current collector 40. The bending direction of the first uncoated region 11 may be, for example, a direction facing the winding center C of the electrode assembly 10 or the core. When the first uncoated region 11 has the bent shape as described above, the space occupied by the first uncoated region 11 reduces, thereby improving the energy density. In addition, when the first uncoated region 11 has the bent shape as described above, the coupling area between the first uncoated region 11 and the current collector 40 increases, thereby improving the coupling strength and reducing the resistance.

Referring to FIGS. 12 to 15 together with FIGS. 6 and 7, the current collector 40 includes an edge portion 41, an uncoated region coupling portion (a first uncoated region coupling portion) 42 and a terminal coupling portion 43.

The edge portion 41 may be positioned on the electrode assembly 10, and have an approximately rim shape having an empty space S inside. Although the drawings of the present disclosure show the edge portion 41 having an approximately circular rim shape, the present disclosure is not limited thereto. The edge portion 41 may have an approximately square rim shape, a hexagonal rim shape, an octagonal rim shape, or any other rim shape as opposed to those shown in the drawings.

The uncoated region coupling portion (the first uncoated region coupling portion) 42 extends inward from the edge portion 41 and is coupled with the first uncoated region 12. As described above, the coupling between the current collector 40 and the first uncoated region 11 preferably has at least approximately 50% overlap with the welding target area or the zone where the number of overlapping layers of the segments is approximately at the maximum and is approximately uniformly maintained. That is, the uncoated region coupling portion 42 of the current collector 40 may be coupled with the first uncoated region 11 such that it overlaps with the welding target area at least approximately 50%.

The terminal coupling portion 43 is disposed on the inner side of the edge portion 41, apart from the uncoated region coupling portion 42. The terminal coupling portion 43 may be coupled with the terminal 50 as described below by welding. To ensure the welding area for coupling with the flat portion formed on the bottom surface of the terminal 50, the terminal coupling portion 43 may have the diameter that is substantially equal or larger than the diameter of the flat portion formed on the bottom surface of the terminal 50. The terminal coupling portion 43 may be disposed, for example, at approximately the center of the internal space surrounded by the edge portion 41. The terminal coupling portion 43 may be positioned at a location corresponding to a hole formed at the winding center C of the electrode assembly 10. The terminal coupling portion 43 maybe configured to cover the hole formed at the winding center C of the electrode assembly 10 to prevent from the hole formed at the winding center C of the electrode assembly 10 being exposed to the outside of the terminal coupling portion 43. When the hole formed at the winding center C of the electrode assembly 10 is covered as described above, it is possible to prevent the separator disposed in the hole from being damaged due to the flow rate of the electrolyte solution passing through the hole and the consequential exposure of the electrode. To this end, the terminal coupling portion 43 may have a larger diameter or width than the hole formed at the winding center C of the electrode assembly 10.

The uncoated region coupling portion 42 and the terminal coupling portion 43 are not directly connected to each other, and they are spaced apart from each other and electrically connected by the edge portion 41. Since the current collector 40 according to an embodiment of the present disclosure has a structure in which the uncoated region coupling portion 42 and the terminal coupling portion 43 are not directly connected to each other and they are connected through the edge portion 41, when impacts and/or vibrations occur in the cylindrical battery 1, it is possible to disperse the impacts applied to the coupled portion between the uncoated region coupling portion 42 and the first uncoated region 12 and the coupled portion between the terminal coupling portion 43 and the terminal 50. Accordingly, the current collector 40 of the present disclosure may minimize or prevent damage of the welded portion by external impacts. The current collector 40 of the present disclosure may have a structure in which stress concentrates on the connected portion of the edge portion 41 and the terminal coupling portion 43 when external impacts are transmitted to the inside of the battery 1 through the terminal 50. However, the connected portion is not a portion in which the welded portion for coupling between components is formed. Accordingly, in the present disclosure, it is possible to effectively prevent defects of products caused by the damage of the welded portion due to external impacts.

The current collector 40 may further include a connecting portion 44 which extends inward from the edge portion 41 and is connected to the terminal coupling portion 43. The connecting portion 44 may include a taper portion 44a in which the width becomes narrower along a direction from the inner surface of the edge portion 41 to the terminal coupling portion 43. That is, the taper portion 44a may be configured such that the width becomes wider along a direction from the connected portion between the terminal coupling portion 43 and the edge portion 41 to the edge portion 41. The width change of the taper portion 44a may include a continuous change and a gradual change. When the taper portion 44a is provided, it is possible to increase the rigidity of the component at the connected portion between the connecting portion 44 and the edge portion 41. When the taper portion 44a is provided, it is possible to transfer the current collector 40 and/or an assembly of the current collector 40 and the electrode assembly 10 easily and safely, for example, by a transport device and/or an operator who holds the taper portion 44a, in the process of manufacturing the cylindrical battery 1. That is, when the taper portion 44a is provided, it is possible to prevent defects of products that may occur when holding a component to be welded with other component, such as the uncoated region coupling portion 42 or the terminal coupling portion 43.

Meanwhile, the plurality of first uncoated region coupling portions 42 may be provided. When the plurality of first uncoated region coupling portions 42 is provided, the plurality of uncoated region coupling portions 42 may be arranged, for example, in a radial pattern, a crisscross pattern or a combined pattern with respect to the center of the terminal coupling portion 43. Although the drawings of the present disclosure show three first uncoated region coupling portions 42 and four first uncoated region coupling portions 42, the present disclosure is not limited thereto. The number of the first uncoated region coupling portions 42 may be variously determined considering the resistance level required for the cylindrical battery 1 and the open ratio of the first current collector 40. The plurality of first uncoated region coupling portions 42 may be regularly arranged along the extension direction of the edge portion 41. For example, the plurality of first uncoated region coupling portions 42 may be arranged at the substantially equal interval along the extension direction of the edge portion 41. The extended length of each of the plurality of first uncoated region coupling portions 42 may be substantially equal to each other. The first uncoated region coupling portion 42 may be coupled with the first uncoated region 11 by welding.

The terminal coupling portion 43 may be positioned such that it is surrounded by the plurality of first uncoated region coupling portions 42. The terminal coupling portion 43 may be coupled with the terminal 50 by welding. The connecting portion 44 may be disposed between a pair of adjacent first uncoated region coupling portions 42. In this case, the distance from the connecting portion 44 to one of the pair of first uncoated region coupling portions 42 along the extension direction of the edge portion 41 may be substantially equal to the distance from the connecting portion 44 to the other of the pair of first uncoated region coupling portions 42 along the extension direction of the edge portion 41. The cross-sectional area of each of the plurality of first uncoated region coupling portions 42 may be substantially equal to each other. The width and thickness of each of the plurality of first uncoated region coupling portions 42 may be substantially equal to each other.

The plurality of connecting portions 44 may be provided. The number of connecting portions 44 may be determined, considering the resistance level required for the cylindrical battery 1 and the open ratio of the first current collector 40. Each of the plurality of connecting portions 44 may be positioned between the pair of adjacent first uncoated region coupling portions 42. The plurality of connecting portions 44 may be regularly arranged along the extension direction of the edge portion 41. For example, the plurality of connecting portions 44 may be arranged at the substantially equal interval along the extension direction of the edge portion 41. Meanwhile, the distance from each of the plurality of connecting portions 44 to one of the pair of adjacent first uncoated region coupling portions 42 along the extension direction of the edge portion 41 may be substantially equal to the distance to the other first uncoated region coupling portion 42.

In case that the plurality of first uncoated region coupling portions 42 and/or the plurality of connecting portions 44 is provided as described above, when the distance between the first uncoated region coupling portions 42 and/or the distance between the connecting portions 44 and/or the distance between the first uncoated region coupling portion 42 and the connecting portion 44 are formed approximately uniformly, it is possible to form a smooth flow of current from the first uncoated region coupling portion 42 toward the connecting portion 44 or from the connecting portion 44 toward the first uncoated region coupling portion 42.

The coupling between the current collector 40 and the first uncoated region 11 may be made by welding. In this case, for example, laser welding, ultrasonic welding and spot welding may be used.

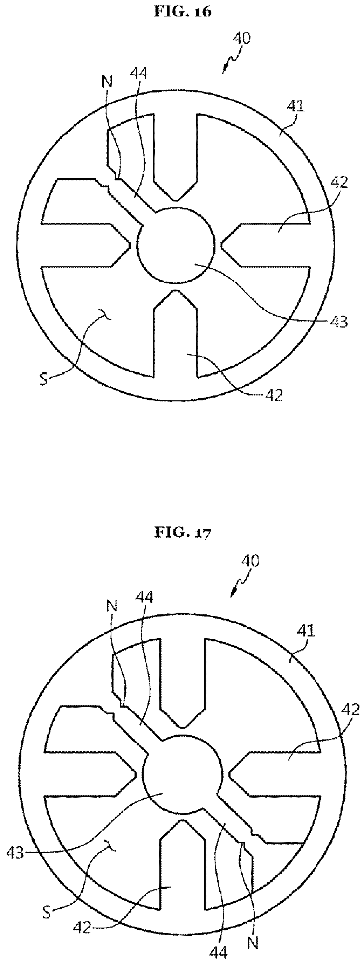

Referring to FIGS. 16 to 20, the connecting portion 44 may include current interruption portions N, G, T to partially reduce the cross-sectional area of the connecting portion 44. The reduction in the cross-sectional area of the connecting portion 44 at an area in which the current interruption portion is formed may be realized, for example, through a partial reduction in the width and/or thickness of the connecting portion 44. When the current interruption portion is provided, the electrical resistance at the area in which the current interruption portion is formed increases, and in the event of an overcurrent, the current interruption portion blows, thereby achieving rapid current interruption. The plurality of current interruption portions may be provided along the lengthwise direction of the connecting portion. When the plurality of connecting portions 44 is provided, the current interruption portion may be provided in at least one of the plurality of connecting portions 44. For example, the current interruption portion may include at least one of a notch, a groove or a through-hole.

When the connecting portion 44 includes the taper portion 44a, the current interruption portion may be disposed closer to the taper portion 44a than the terminal coupling portion 43. A larger amount of heat is generated at the narrowest part of the taper portion 44a, and the current interruption portion close to the taper portion 44a may rapidly interrupt an overcurrent.

Meanwhile, to prevent impurities such as welding spatter produced when blown from entering the electrode assembly 10, the current interruption portion is preferably provided in an area corresponding to the welding target area of the electrode assembly 10 described above. In this area, the number of overlapping layers of the segments of the first uncoated region 11 is maintained at the maximum, and the overlapping segments may act as a mask. The current interruption portion may be formed, for example, at a location approximately 40% to 90% away from the core of the electrode assembly 10 along the radial direction of the electrode assembly 10 on the basis of the radius of the electrode assembly along the radial direction. Preferably, the current interruption portion may be disposed at the approximately center between the core and the outermost side of the electrode assembly 10.

Referring to FIGS. 16 and 17, the current interruption portion may include a notch N formed on at least one surface of the connecting portion 44. The notch N may gradually decrease in width as it goes inward from the surface of the connecting portion 44. The notch N may be formed on the side and/or the upper surface and/or the lower surface of the connecting portion 44. When the plurality of connecting portions 44 is provided as shown in FIG. 17, the notch N may be formed in at least one of the plurality of connecting portions 44.

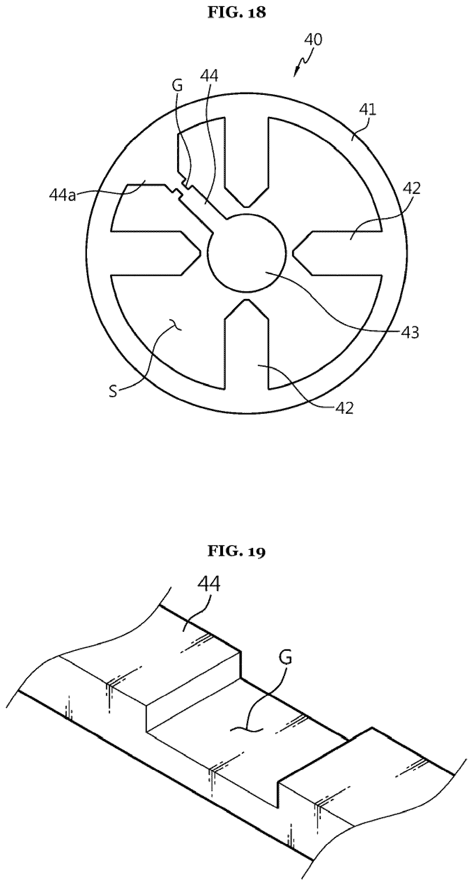

Referring to FIGS. 18 and 19, the current interruption portion may include a groove G formed on at least one surface of the connecting portion 44. The groove G may be formed on the side and/or the upper surface and/or the lower surface of the connecting portion 44. Although not shown in the drawings, when the plurality of connecting portions 44 is provided, the groove G may be formed in at least one of the plurality of connecting portions 44.

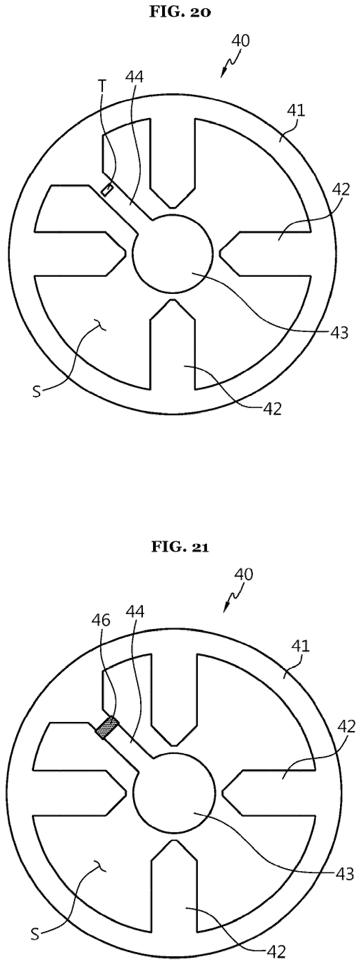

Referring to FIG. 20, the current interruption portion may include a through-hole T formed on at least one surface of the connecting portion 44. The through-hole T may pass through the upper surface and the lower surface of the connecting portion 44 and/or the side of the connecting portion 44. Although not shown in the drawings, when the plurality of connecting portions 44 is provided, the through-hole T may be formed in at least one of the plurality of connecting portions 44.

Although not shown in the drawings, when the plurality of connecting portions 44 is provided and the current interruption portion is provided in at least two of the connecting portions 44, the plurality of current interruption portions may have approximately the same shape or different shapes. For example, the plurality of current interruption portions may include at least two of a notch N, a groove G or a through-hole T.

Referring to FIG. 21, a tape 46 may be coupled to the current interruption portion. The tape 46 may be configured such that it surrounds the circumference of the connecting portion 44 in the area in which the current interruption portion is formed. The tape 46 may be made of a variety of materials, and for example, may be made of polyimide (PI) which does not easily deform by heat. However, the material of the tape 46 of the present disclosure is not limited thereto.

When the tape 46 is applied, heat generated from the current interruption portion does not easily exit. Accordingly, the temperature rises fast at the current interruption portion, and the current interruption portion rapidly blows to interrupt an overcurrent. In addition, when the tape 46 is applied, it is possible to prevent impurities, such as molten metal, produced when the current interruption portion blows from splattering to other components.

The cross-sectional area of the connecting portion 44 in the area in which the current interruption portion is formed may range from about 0.6 to 0.9 compared to the cross-sectional area of the connecting portion 44 in the area in which the current interruption portion is not formed. For example, when the current interruption portion is provided such that it reduces the width of the connecting portion 44 while maintaining the thickness of the connecting portion 44, the width of the connecting portion 44 in the area in which the current interruption portion is formed may range from about 0.6 to 0.9 compared to the width of the connecting portion 44 in the area in which the current interruption portion is not formed. This is the same with the case in which the current interruption portion is provided such that it reduces the thickness of the connecting portion 44 while maintaining the width of the connecting portion 44. When the cross-sectional area reduces too much by the current interruption portion, the resistance of the cylindrical battery 1 is too high, and when the cross-sectional area reduces just a little bit, it is difficult to achieve the overcurrent interruption.

In another aspect, the number of connecting portions 44 may be one or two. This is for rapid overcurrent interruption. When there are too many connecting portions 44, the flow of current is dispersed and the fusing function may not normally work. When the perspective of ensuring the rigidity of the current collector 40 is taken into account together, the number of connecting portions 44 may be two. In another aspect, the cross-sectional area of the connecting portion 44 may range from about 0.2 to 1.0 compared to the cross-sectional area of the uncoated region coupling portion 42. For example, when the thickness of the connecting portion 44 is substantially equal to the thickness of the uncoated region coupling portion 42, the width of the connecting portion 44 may range from about 0.2 to 1.0 compared to the width of the uncoated region coupling portion 42. When the cross-sectional area of the connecting portion 44 is too large, it is difficult to achieve the overcurrent interruption, and when the cross-sectional area of the connecting portion 44 is too small, the overall resistance value of the cylindrical battery 1 may be excessively large.

In still another aspect of the present disclosure, a ratio of the non-contact area between the current collector 40 and the upper surface of the electrode assembly 10 to the area of a circle having the outer diameter of the electrode assembly 10 as the diameter may be defined as the open ratio of the current collector 40. The open ratio may be calculated by the following equation.

Open ratio (%)

= 1 - (contact area between the current collector and the upper surface of the electrode assembly)/(area of a circle having the outer diameter of the electrode assembly as the diameter)

= (non-contact area between the current collector and the upper surface of the electrode assembly)/(area of a circle having the outer diameter of the electrode assembly as the diameter)

The open ratio of the current collector 40 may be, for example, approximately 20% or more and less than 100%, and preferably approximately 30% or more and less than 100%. Describing that the current collector 40 shown in FIG. 12 is placed on and coupled to the electrode assembly 10 for illustrative purposes, the contact area between the current collector 40 and the electrode assembly 10 may be the edge portion 41, the uncoated region coupling portion 42, and the connecting portion 44. That is, the ratio of the contact area between the current collector 40 and the electrode assembly 10 to the area of a circle having the diameter of the same length as the outer diameter of the electrode assembly 10 may be approximately 80 % or less, and preferably approximately 70 % or less. When the open ratio of the current collector 40 is in the above-described range, the wetting of the electrolyte solution may be smoothly carried out. That is, there is a gap near the terminal coupling portion 43 disposed at the center of the current collector 40, and the electrolyte solution radially spreads through the gap, moves to the open space, and then permeates through the electrode assembly 10.

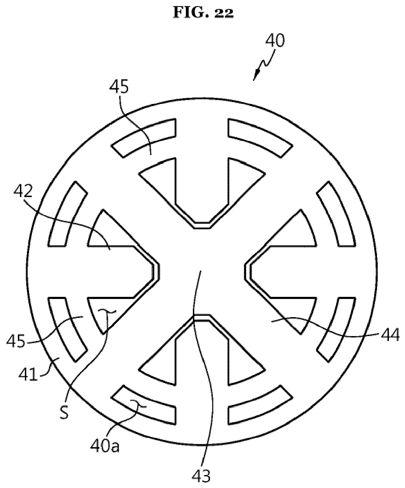

Referring to FIG. 22, in addition to the embodiments shown in FIGS. 5 to 10, the current collector (the first current collector) 40 further includes a bridge portion 45 connecting at least one of the following: between the adjacent first uncoated region coupling portions 42, between the first uncoated region coupling portion 42 and the connecting portion 44 adjacent to each other, and between the adjacent connecting portions 44. The bridge portion 45 is disposed at the inner position than the edge portion 41. The current collector 40 may have an impregnation hole 40a between the edge portion 41 and the bridge portion 45. The impregnation hole 40a may have, for example, an approximately slit shape extending along the extension direction of the edge portion 41. The impregnation hole 40a may increase the ratio of the empty space S formed inside the edge portion 41 to facilitate the circulation of the electrolyte solution injected into the housing 20, thereby improving the wettability.

Referring to FIGS. 5 to 7, the terminal 50 is made of a metal material having conductive properties. The material of the terminal 50 may include, for example, aluminum (Al). When the material of the terminal 50 is aluminum, it is easy to rivet as described below, and 10 series aluminum having a relatively low electrical resistance may be applied. The terminal 50 penetrates the upper surface of the housing 20 or the surface (parallel to the XY plane) disposed on the opposite side to the opening of the housing 20. The terminal 50 is electrically connected, for example, to the first uncoated region 11 of the electrode assembly 10. In this case, the terminal 50 has the first polarity. Accordingly, the terminal 50 may serve as a first electrode terminal in the cylindrical battery 1 of the present disclosure. When the terminal 50 has the first polarity, the terminal 50 is electrically insulated from the housing 20 having the second polarity. The electrical insulation between the terminal 50 and the housing 20 may be realized in various ways. For example, the insulation may be realized by interposing the insulation gasket G2 between the terminal 50 and the housing 20. Alternatively, the insulation may be realized by forming an insulating coating layer on a portion of the terminal 50. Alternatively, any method of fixing the terminal 50 structurally firmly to prevent the terminal 50 from coming into contact with the housing 20 may be applied. Alternatively, two or more of the above-described methods may be applied together.

The terminal 50 includes a terminal exposure portion 51 and a terminal insert portion 52. The terminal insert portion 52 may include an electrical connection portion 51a and a flange portion 52b. The terminal exposure portion 51 is exposed to the outside of the housing 20. The terminal exposure portion 51 may be disposed at the approximately center of the closed portion of the housing 20. The maximum width of the terminal exposure portion 51 may be larger than the maximum width of the hole formed in the housing 20 for the insertion of the terminal 50. The terminal insert portion 52 may pass through approximately the center of the closed portion of the housing 20, and the electrical connection portion 52a of the terminal insert portion 52 may be electrically connected to the first uncoated region 11. When the cylindrical battery 1 of the present disclosure includes the insulator 60, the terminal insert portion 52 may be surrounded by the insulator 60 to prevent the side from being exposed. The flange portion 52b of the terminal insert portion 52 is formed around the electrical connection portion 52a, and may be coupled onto the inner surface of the closed portion of the housing 20 by riveting. That is, the flange portion 52b of the terminal insert portion 52 may have a curved shape that curves toward the inner surface of the closed portion of the housing 20. Therefore, the maximum width of the terminal insert portion 52 after the riveting process for fixing the terminal 50 may be larger than the maximum width of the hole formed in the housing 20 to allow the terminal insert portion 52 to pass through.

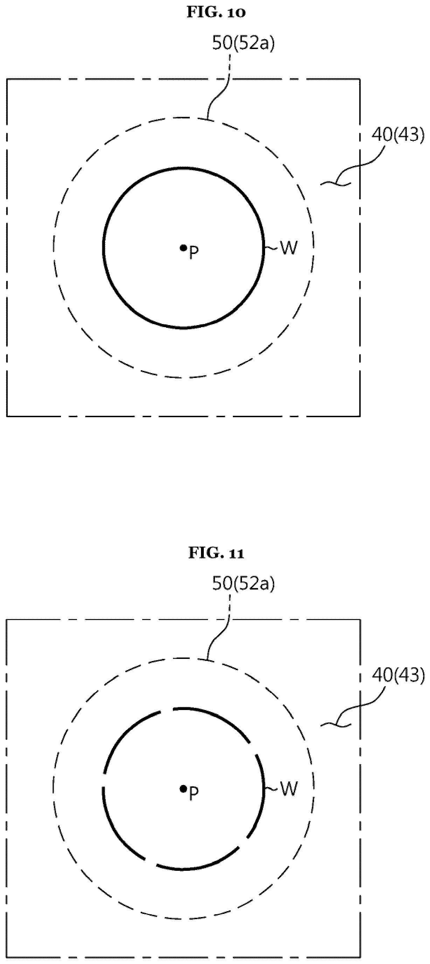

Referring to FIGS. 10 to 12 together with FIGS. 5 to 7, the electrical connection portion 52a of the terminal insert portion 52 may be coupled with the terminal coupling portion 43 of the current collector (the first current collector) 40. The electrical connection portion 52a of the terminal insert portion 52 may have, for example, an approximately cylindrical shape. The shape of the electrical connection portion 52a of the terminal insert portion 52 is not limited thereto. The electrical connection portion 52a of the terminal insert portion 52 may have various shapes, for example, a cylindrical shape having an elliptical cross section, a square prism shape, a hexagonal prism shape and an octagonal prism shape. The bottom surface of the electrical connection portion 52a of the terminal insert portion 52 may be approximately flat at least in part.

Referring to FIGS. 9 and 10 together with FIG. 7, the coupling between the bottom surface of the central region of the terminal insert portion 42 and the current collector (the first current collector) 40 may be made by, for example, laser welding, spot welding or ultrasonic welding.

The welding may be performed by laser irradiation through the hole formed at the winding center C of the electrode assembly 10 or inserting a tool for ultrasonic welding or spot welding to form a welding bead W on one surface (a surface facing the hole formed at the winding center C of the electrode assembly 10) of the current collector 40. A guide pipe (not shown) for welding may be inserted into the hole formed at the winding center C. When welding is carried out in a state where the guide pipe is inserted, it is possible to reduce the damage risk of the separator which forms the inner wall of the hole formed at the winding center C.

The welding pattern formed by the welding bead W formed on one surface of the terminal coupling portion 43 of the current collector 40 may run around the center P of the bottom surface of the electrical connection portion 52a of the terminal insert portion 52. The welding pattern may be, for example, approximately circular, and alternatively, the welding pattern may have an approximately elliptical shape, or a polygonal shape such as approximately square, hexagonal and octagonal shapes. The welding pattern formed by the welding bead W may be formed continuously (see FIG. 10) or discontinuously (see FIG. 11). The exemplary circular, elliptical and polygonal shapes of the welding pattern formed by the welding bead W do not refer to geometrically perfect circular, elliptical and polygonal shapes.

Meanwhile, the diameter of the flat portion formed on the bottom surface of the electrical connection portion 52a of the terminal insert portion 52 may be determined, considering the weld strength with the current collector 40. The tensile strength of the welded portion between the flat portion and the current collector (the first current collector) 40 may be at least about 2 kgf or more, or 3 kgf or more, or 4 kgf or more, or 5 kgf or more, or 6 kgf or more, or 7 kgf or more, or 8 kgf or more, or 9 kgf or more, or 10kgf or more. It is preferable to increase the tensile strength of the welded portion as much as possible within an allowable range by optimally selecting a welding method.

The diameter (or the maximum width) of the welding pattern formed on the flat portion to satisfy the tensile strength requirement of the welded portion may be at least about 2 mm. The diameter of the welding pattern may be defined as the diameter $(2*(S/\pi)^{0.5})$ of the circle when the area S of the welding bead W found on the surface of the welded portion is converted to the area $(\pi r^2)$ of the circle.

The flat portion formed on the bottom surface of the electrical connection portion 52a of the terminal insert portion 52 corresponds to a weldable region. The diameter of the weldable region may be approximately 3 mm to 14 mm. When the diameter of the weldable region is less than about 3 mm, it is difficult to form the welding pattern having the (converted) diameter of 2 mm or more. In particular, in the case of the welding pattern using laser welding, it is difficult to form the welding pattern having the diameter of 2 mm or more due to laser beam interference. When the diameter of the weldable region is larger than approximately 14 mm, the diameter of the terminal exposure portion 51 of the terminal 50 becomes larger, and thus it is difficult to have a sufficient area of the outer surface 20a of the housing 20 that will be used as an electrode terminal having the opposite polarity to the terminal 50.

When considering the diameter requirement of the welding pattern and the diameter requirement of the weldable region, the ratio of the area of the welding pattern to the area of the weldable region necessary for the tensile strength of the welded portion of at least about 5 kgf is preferably approximately 2.04% (corresponding to a ratio of $\pi 1^2/\pi 7^2$, i.e. a ratio of the respective diameters of 1:7) to 44.4% (corresponding to a ratio of $\pi 1^2/\pi 1.5^2$, i.e. a ratio of the respective diameters of 1:1.5).

In an example, when the flat portion formed on the bottom surface of the electrical connection portion 52a of the terminal insert portion 52 and the current collector 40 are welded by a laser while forming the welding bead W along a continuous or discontinuous line in an approximately arc pattern, the diameter of the arc welding pattern is about 2 mm or more, and preferably about 4 mm or more. When the diameter of the arc welding pattern meets the corresponding requirement, it is possible to ensure a sufficient weld strength by increasing the tensile strength of the welded portion to about 5 kgf or more.

In another example, when the flat portion formed on the bottom surface of the electrical connection portion 52a of the terminal insert portion 52 and the current collector 40 are welded by ultrasonic waves in a circular pattern, the diameter of the circular welding pattern is preferably about 2 mm or more. When the diameter of the circular welding pattern meets the corresponding requirement, it is possible to ensure a sufficient weld strength by increasing the tensile strength of the welded portion to about 2 kgf or more.

The diameter of the flat portion formed on the bottom surface of the terminal 50 corresponding to the weldable region may be adjusted in the range of approximately 3 mm to 14 mm. When the radius of the flat portion is less than about 3 mm, it is difficult to form the welding pattern having the diameter of about 2 mm or more using the laser welding tool and the ultrasonic welding tool.

Meanwhile, the cylindrical battery 1 according to an embodiment of the present disclosure has a structure in which the bottom surface of the electrical connection portion 52a of the terminal insert portion 52 is coupled onto the current collector 40 by welding as described above, thereby maximizing the coupling area between the current collector 40 and the terminal 50. That is, the bottom surface of the electrical connection portion 52a is flat at least in part, thereby maximizing the coupling area between the terminal 50 and the current collector 40. Therefore, the cylindrical battery 1 according to an embodiment of the present disclosure may guarantee a smooth flow of current at the coupled portion of the current collector 40 and the terminal 50 when a large amount of current flows during rapid charging, thereby reducing the charging time and lessening the amount of heat generated.

The insulation gasket G2 includes a gasket exposure portion GA and a gasket insert portion GB. The gasket exposure portion GA is interposed between the terminal exposure portion 51 of the terminal 50 and the housing 20. The gasket exposure portion GA may extend longer than the terminal exposure portion 51, and thus may be exposed to the outside of the terminal exposure portion 51 when the cylindrical battery 1 is viewed from the top. The gasket insert portion GB is interposed between the terminal insert portion 52 of the terminal 50 and the housing 20. When riveting the flange portion 52b of the terminal insert portion 52, the gasket insert portion GB may deform together and come into close contact with the inner surface of the closed portion of the housing 20. The insulation gasket G2 may be made of, for example, a resin material having insulation and elastic properties.

Referring to FIGS. 6, 7 and 12 together, the insulator 60 may be provided between the current collector (the first current collector) 40 and the inner surface of the housing 20. The insulator 60 prevents the contact between the current collector 40 and the housing 20. The insulator 60 may be also interposed between the top of the outer circumferential surface of the electrode assembly 10 and the inner surface of the housing 20. That is, the insulator 60 may be also interposed between the first uncoated region 11 and the inner surface of the sidewall portion of the housing 20. It is to prevent the contact between the first uncoated region 11 extending toward the closed portion of the housing 20 and the inner circumferential surface of the housing 20.

When the cylindrical battery 1 of the present disclosure includes the insulator 60, the terminal 50 is coupled to the current collector 40 through the insulator 60. To allow the terminal 50 to pass through, the insulator 60 may have a hole formed at the approximately center thereof. The hole formed in the insulator 60 may be formed at a location corresponding to the terminal coupling portion 43 of the current collector 40. The hole formed in the insulator 60 may be formed at a location corresponding to the hole formed at the winding center C of the electrode assembly 10. The hole formed in the insulator 60 may be formed at a location corresponding to the electrical connection portion 52a of the terminal insert portion 52 provided in the terminal 50. Accordingly, the electrical connection portion 52a of the terminal insert portion 52 may be coupled with the terminal coupling portion 43 of the current collector 40 through the hole formed in the insulator 60.

Meanwhile, in case that the welded portion between the terminal 50 and the first current collector 40 is disposed in the hole formed at the winding center C of the electrode assembly 10, the electrode assembly 10 may be damaged. To prevent this, the lower end of the terminal 50 coupled to the terminal coupling portion 43 may be disposed at a height that is substantially equal to or higher than the lower surface of the insulator 60. In this case, the welded portion between the terminal 50 and the first current collector 40 is disposed outside the hole formed at the winding center C of the electrode assembly 10.

In view of this, the thickness of the insulator 60 may be substantially equal to or greater than the distance from the inner surface of the closed portion of the housing 20 to the flat portion provided at the lower end of the terminal 50. Meanwhile, the insulator 60 may have a thickness corresponding to the distance between the inner surface of the closed portion of the housing 20 and the current collector 40 to fill up the space between the inner surface of the closed portion of the housing 20 and the current collector 40 along the heightwise direction (parallel to the Z axis) so that there is no room for movement of the electrode assembly 10 can move. In another aspect, the upper surface of the insulator 60 may contact the inner surface of the closed portion of the housing 20, and the lower surface of the insulator 60 may contact the upper surface of the current collector 40.

Referring to FIGS. 23 and 25, the current collector (the second current collector) 70 is coupled to the lower part of the electrode assembly 10. The current collector 70 is made of a metal having conductive properties, and is coupled with the second uncoated region 12. In addition, the current collector 70 is electrically connected to the housing 20. The current collector 70 electrically connects the second uncoated region 12 to the housing 20. At least part of the circumferential edge area of the current collector 70 may be interposed and fixed between the lower surface (the seating surface) of the beading portion 21 of the housing 20 and the sealing gasket G1. In this case, the current collector 70 may be welded onto the seating surface formed by the beading portion 21 of the housing 20. The sealing gasket G1 is positioned in the crimping portion 22 and interposed between the housing 20 and the cap 30.

The current collector 70 may include a second current collector hole 70a in an area corresponding to the hole formed at the winding center C of the electrode assembly 10. The winding center hole of the electrode assembly 10 and the second current collector hole 70a in communication with each other may serve as a passage for inserting a welding rod for welding between the terminal 50 and the terminal coupling portion 43 of the first current collector 40 or laser beam irradiation. The second current collector hole 70a may have a diameter that is equal to or larger than the hole formed at the winding center C of the electrode assembly 10 not to cover the hole formed at the winding center C of the electrode assembly 10. In case that the diameter of the second current collector hole 70a is too smaller than the diameter of the hole formed at the winding center C, the hole formed at the winding center C is covered, thus the efficiency of the electrolyte injection process maybe reduced, and it maybe difficult to have a sufficient space for inserting a device or tool for welding or laser irradiation.

As opposed to the above-described embodiment, according to another embodiment of the present disclosure, the diameter of the second current collector hole 70a may be smaller than the diameter of the hole formed at the winding center C provided in the core of the electrode assembly 10. For example, when the diameter of the hole formed at the winding center C is R3, the diameter of the second current collector hole 70a may be 0.5*R3 or more and less than R3, and preferably 0.7*R3 or more and less than R3.

In general, when vented, the separator or the uncoated region at the winding center may slip from the lower surface of the electrode assembly 10 by strong pressure of gas coming out at the winding center. In this instance, when the diameter of the second current collector hole 70a is smaller than the diameter of the hole provided in the core of the electrode assembly 10, it is possible to prevent the separator or the uncoated region at the winding center from slipping from the lower surface of the electrode assembly 10. However, in which the diameter of the second current collector hole 70a is too small, it may be difficult to inject the electrolyte solution, and since it is necessary to have a space for welding between the second current collector 70 and the terminal 50, the diameter of the second current collector hole 70a is preferably 0.5*R3 or more, and more preferably 0.7*R3 or more.

The second current collector 70 may include a second uncoated region coupling portion 72 coupled with the second uncoated region 12 and a housing coupling portion 73 coupled with the housing 20. The second current collector 70 may further include a support portion 71. The second uncoated region 12 and the second uncoated region coupling portion 72 may be coupled to each other by welding. The housing 20 and the housing coupling portion 73 may be coupled to each other by welding. The housing coupling portion 73 may be electrically coupled to the lower surface of the beading portion 21.

The support portion 71 is positioned below the electrode assembly 10. When the support portion 71 is provided, the second uncoated region coupling portion 72 may extend along the approximately radial direction of the electrode assembly 10 from the support portion 71 and may be coupled with the second uncoated region 12. In addition, the housing coupling portion 73 may extend along the approximately radial direction of the electrode assembly 10 from the support portion 71 and may be coupled onto the inner surface of the housing 20. The second uncoated region coupling portion 72 and the housing coupling portion 73 is not directly connected to each other, and may be indirectly connected through the support portion 71. In this case, when external impacts are applied to the cylindrical battery 1, it is possible to minimize the likelihood that damage occurs in the coupled portion of the second current collector 70 and the electrode assembly 10 and the coupled portion of the second current collector 70 and the housing 20. However, the second current collector 70 of the present disclosure is not limited to the indirectly connected structure of the second uncoated region coupling portion 72 and the housing coupling portion 73. For example, the second current collector 70 may have a structure in which there is no support portion 71 indirectly connecting the second uncoated region coupling portion 72 to the housing coupling portion 73 and/or a structure in which the second uncoated region coupling portion 72 and the housing coupling portion 73 are directly connected to each other.

Meanwhile, not only the second uncoated region coupling portion 72 but also the support portion 71 may be coupled with the second uncoated region 12. When the housing 20 has the beading portion 21, the support portion 71 and the second uncoated region coupling portion 72 are disposed higher than the beading portion 21.

A plurality of second uncoated region coupling portions 72 may be provided. When the plurality of second uncoated region coupling portions 72 is provided, the plurality of second uncoated region coupling portions 72 may extend toward the sidewall of the housing 20 approximately radially from the support portion 71 of the second current collector 70. Each of the plurality of second uncoated region coupling portions 72 may be spaced apart from each other along the circumference of the support portion 71.

A plurality of housing coupling portions 73 may be provided. In this case, the plurality of housing coupling portions 73 may extend toward the sidewall of the housing 20 approximately radially from the center of the second current collector 70. Accordingly, the electrical connection between the second current collector 70 and the housing 20 may be made at a plurality of points. When the coupling for electrical connection is made at the plurality of points, it is possible to maximize the coupling area and minimize the electrical resistance. Each of the plurality of housing coupling portions 73 may be spaced apart from each other along the circumference of the support portion 71. At least one housing coupling portion 73 may be disposed between the adjacent second uncoated region coupling portions 72. The plurality of housing coupling portions 73 may be coupled to, for example, the beading portion 21 in the inner surface of the housing 20. The housing coupling portions 73 may be coupled especially to the lower surface of the beading portion 21.

The housing coupling portion 73 may include a contact portion 73a coupled onto the inner surface of the housing 20 and an extension portion 73b connecting the support portion 71 to the contact portion 73a.

The contact portion 73a is coupled onto the inner surface of the housing 20. When the housing 20 includes the beading portion 21, the contact portion 73a may be coupled onto the beading portion 21 as described above. More specifically, the contact portion 73a may be electrically coupled to the flat portion formed on the lower surface of the beading portion 21 formed in the housing 20, and may be interposed between the lower surface of the beading portion 21 and the sealing gasket G1. In this case, for stable contact and coupling, the contact portion 73a may extend from the beading portion 21 by a predetermined length along the circumferential direction of the housing 20.

Referring to FIGS. 8 and 9 together with FIGS. 23 and 25, the current collector 70 may be coupled onto the coupling surface formed by bending the end of the second uncoated region 12 in parallel to the current collector 70. The bending direction of the second uncoated region 12 may be the radial direction of the electrode assembly 10, and for example, a direction toward the winding center C of the electrode assembly 10. When the second uncoated region 12 has the bent shape as described above, the space occupied by the second uncoated region 12 reduces, thereby improving the energy density. In addition, it is possible to improve the coupling strength between the second uncoated region 12 and the current collector 70 and reduce the contact resistance. In the same way as the first uncoated region coupling portion 42 of the first current collector 40 described above, also in the case of the second uncoated region coupling portion 72 of the second current collector 70, the welding target area or a zone in which the number of overlapping layers formed by the bends of the segments of the second uncoated region 12 is approximately uniformly maintained may be coupled with the second uncoated region 12 by at least approximately 50% of overlap.

Meanwhile, referring to FIGS. 7, 23 and 25 together, the distance (the outer diameter of the first current collector 40) from the center of the first current collector 40 to the outermost side of the edge portion 41 may be longer than the distance (the outer diameter of the second current collector 70) from the center of the second current collector 70 to the outermost side of the second uncoated region coupling portion 72. The first current collector 40 may have the diameter close to the inner diameter of the housing 20. The first current collector 40 may have the outer diameter ranging from about 33% to 98.5% compared to the inner diameter of the housing 20. The minimum value of the outer diameter of the first current collector 40 is a numerical value for preventing the resistance from increasing too much. The maximum value of the outer diameter of the first current collector 40 takes into account, for example, the tolerance of the outer diameter of the first current collector 40 that may occur in the manufacture of the current collector 40, the assembly tolerance that occurs when coupling the electrode assembly 10 and the first current collector 40, the tolerance of the inner diameter of the housing 20 that may occur in the manufacture of the housing 20 and the positional tolerance that may occur when inserting the assembly of the electrode assembly 10 and the first current collector 40 into the housing 20. In the present disclosure, when the insulator 60 is applied and the insulator 60 covers to the top of the outer circumferential surface of the electrode assembly 10, it is necessary to further consider a space for insertion of the insulator 60, and thus a ratio of the outer diameter of the first current collector 40 to the inner diameter of the housing 20 is smaller than the maximum value. However, in view of the tolerance, the outer diameter of the first current collector 40 is limited at a slightly smaller level than the inner diameter of the housing 20, while in the case of the second current collector 70, the diameter may be further limited to avoid interference that may occur in the sizing process. To avoid interference, the distance from the center of the second current collector 70 to the outermost side of the second uncoated region coupling portion 72 may be equal to or shorter than the half of the inner diameter in the area in which the beading portion 21 of the housing 20 is formed.

Meanwhile, the length L1 of the welded portion extended along the radial direction of the electrode assembly 10 in the coupling between the first uncoated region coupling portion 42 of the first current collector 40 and the first uncoated region 11 coupled to each other may be longer than the length L2 of the welded portion extended along the radial direction of the electrode assembly 10 in the coupling between the second uncoated region coupling portion 72 of the second current collector 70 and the second uncoated region 12 coupled to each other. For example, in case that the first current collector 40 is an aluminum positive electrode current collector and the second current collector 70 is a copper negative electrode current collector, when the length L1 is longer than the length L2, the welded portion of the positive electrode current collector having lower electrical conductivity is larger in size, leading to the balanced flow of current in each of the positive electrode current collector and the negative electrode current collector. Here, the extended length of the welded portion coupling the current collectors 40, 70 and the uncoated regions 11, 12 refers to the extended length of the welding bead formed by welding.

On the basis of the core of the electrode assembly 10, the distance to the start point of the welded portion coupling the first uncoated region coupling portion 42 of the first current collector 40 and the first uncoated region 11 may be substantially equal to the distance to the start point of the welded portion coupling the second uncoated region coupling portion 72 and the second uncoated region 12. Here, substantially equal may refer to two equal distances or two distances, for example, having the deviation of approximately 5% or less.

In another aspect of the present disclosure, the ratio of the non-contact area between the current collector (the second current collector) 70 and the lower surface of the electrode assembly 10 to the area of a circle having the outer diameter of the electrode assembly 10 as the diameter may be defined as the open ratio of the current collector 70. The open ratio may be calculated by the following equation.

$$\text{Open ratio (\%)}$$

$$= 1 - \text{(contact area between the current collector and the lower surface of the electrode assembly)/(area of a circle having the outer diameter of the electrode assembly as the diameter)}$$

$$= \text{(non-contact area between the current collector and the lower surface of the electrode assembly)/(area of a circle having the outer diameter of the electrode assembly as the diameter)}$$

The open ratio of the current collector 70 may be, for example, approximately 30% or more and less than 100%, and preferably approximately 60% or more and less than 100%. Describing that the current collector 70 shown in FIG. 25 is placed on and coupled to the electrode assembly 10 for illustrative purposes, the contact area between the current collector 70 and the electrode assembly 10 may be the support portion 71 and the uncoated region coupling portion (the second uncoated region coupling portion) 72. That is, the ratio of the contact area between the current collector 70 and the electrode assembly 10 to the area of a circle having the diameter of the same length as the outer diameter of the electrode assembly 10 may be approximately 70% or less, and preferably approximately 40% or less. When the open ratio of the current collector 70 is in the above-described range, the electrolyte solution may smoothly permeate the electrode assembly 10 through the area not covered with the current collector 70 when injecting the electrolyte solution. That is, when the open ratio of the current collector 70 is in the above-described range, the electrolyte solution permeates the electrode assembly 10 through the hole formed at the winding center C provided in the electrode assembly 10, and in particular, the electrolyte solution may smoothly permeate the electrode assembly 10 by capillarity through the small gap between the overlapping surfaces of the segments 11a and between the pitches.

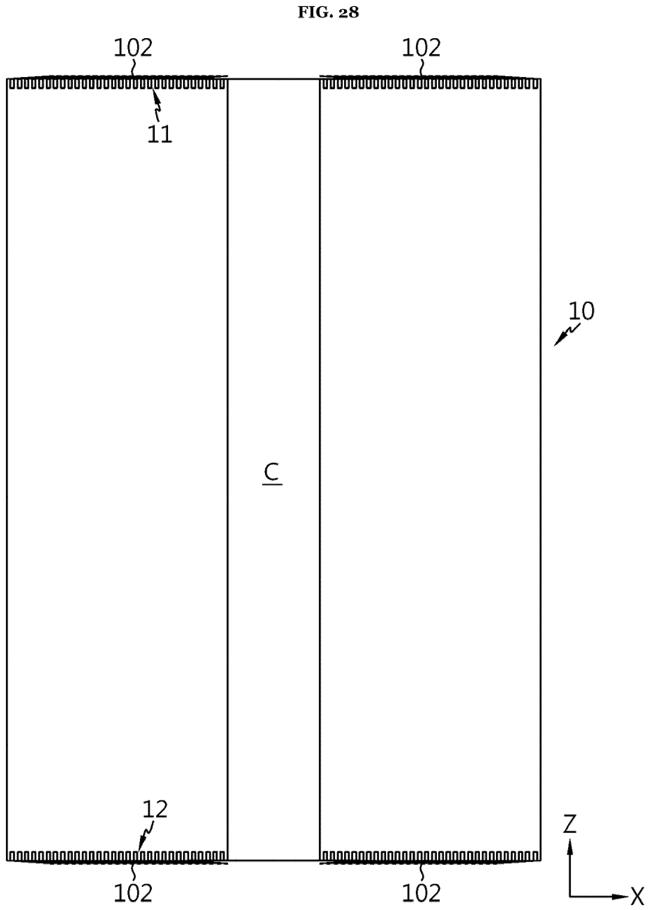

The structure of the electrode assembly 10 will be described in more detail with reference to FIGS. 26 to 29. In the following description, the first electrode will be described as an example among the first and second electrodes described above, but the structure of the first electrode may be equally applied to the second electrode.

Referring to FIGS. 26 to 29, the first electrode 110 includes a first electrode current collector 111 of a sheet shape made from a conductive foil, a first active material layer 112 formed on at least one surface of the first electrode current collector 111, and a first uncoated region 11 not coated with an active material at the end of the long side of the first electrode current collector 111.

Preferably, the first uncoated region 11 may include a plurality of notched segments 11a. The plurality of segments 11a forms a plurality of groups, and the height (the length in the Z-axis direction) and/or the width (the length in the X-axis direction) and/or the pitch of the segments 11a in each group may be substantially equal to each other. The number of segments 11a in each group may be smaller or larger than those shown in the drawings. The segment 11a has a geometric shape of a combination of at least one straight line and/or at least one curve. Preferably, the segment 11a may have a trapezoidal shape, and modification may be made to the shape, for example, a rectangular, parallelogram, semicircular or a semi-elliptical shape.

Preferably, the height of the segment 11a may gradually increase along a direction parallel to the winding direction of the electrode assembly 10, for example, from the core toward the outer circumference. Also, a core-side uncoated region 11-1 adjacent to the core of the electrode assembly 10 may not include the segment 11a, and the height of the core-side uncoated region 11-1 may have be lower than the uncoated region of other region. In addition, an outer circumferential uncoated region 11-2 adjacent to the outer circumference of the electrode assembly 10 may not include the segment 11a, and the height of the outer circumferential uncoated region 11-2 may be lower than other uncoated region.

Optionally, the first electrode 110 may include an insulation coating layer E that covers the boundary between the active material layer 112 and the first uncoated region 11. The insulation coating layer E includes a polymer resin having insulation properties, and may optionally further include an inorganic filler. The insulation coating layer E may function to prevent the end of the active material layer 112 from contacting the active material layer of the opposite polarity on the opposite side of the separator, and structurally support the bending of the segment 11a. To this end, when the first electrode 110 is wound to form the electrode assembly 10, at least a part of the insulation coating layer E is preferably exposed from the separator to the outside.

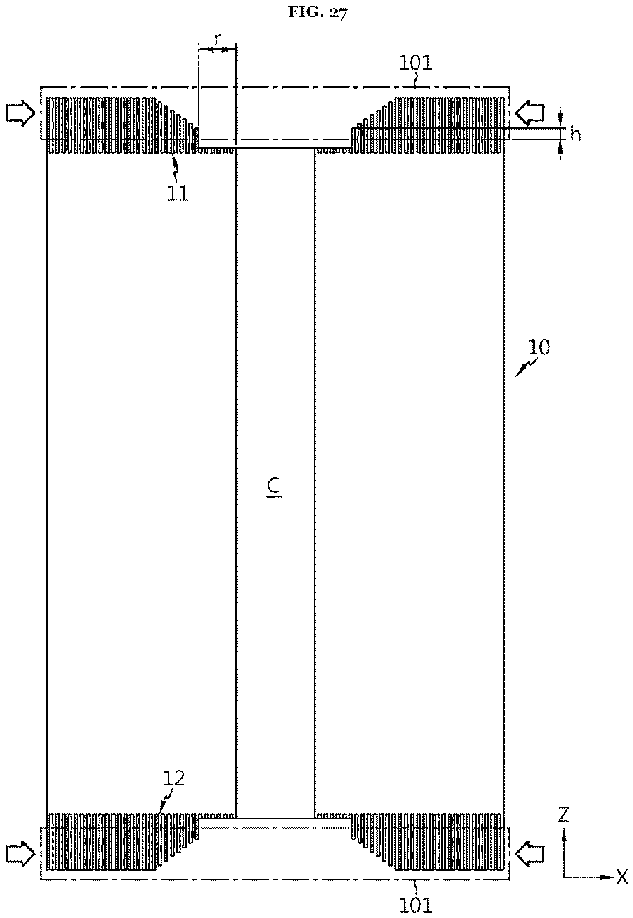

Referring to FIGS. 26 and 27, the electrode assembly 10 may be manufactured by the winding method described through FIG. 2. For convenience of description, the protrusion structure of the uncoated regions 11, 12 extending out of the separator are illustrated in detail, and the illustration of the winding structure of the first electrode, the second electrode and the separator is omitted. The first uncoated region 11 protruding upward extends from the first electrode, and the second uncoated region 12 protruding downward extends from the second electrode.

The pattern of change in the height of the uncoated regions 11, 12 is schematically shown. That is, the height of the uncoated regions 11, 12 may irregularly change depending on where the cross section is taken. For example, when the side of the trapezoidal segment 11a is cut, the height of the uncoated region in cross section is lower than the height of the segment 11a. Therefore, it should be understood that the height of the uncoated regions 11, 12 shown in the cross-sectional view of the electrode assembly 10 correspond to an average height of the uncoated regions included in each winding turn.

Referring to FIGS. 26 to 29, the uncoated regions 11, 12 may be bent along the radial direction of the electrode assembly 10, for example from the outer circumference toward the core. In the uncoated regions 11, 12, an area in which bending occurs is indicated by the dotted line box in FIG. 27. When the uncoated regions 11, 12 are bent, the bend surface 102 in which adjacent segments in the radial direction overlap in multiple layers is formed on top and bottom of the electrode assembly 10. In this instance, the core-side uncoated region 11-1 (FIG. 26) is not bent due to its small height, and the height h of the segment 11a bent at the innermost side is approximately equal to or smaller than the sum of the radial length R of the winding area formed by the core-side uncoated region 11-1 having no segment structure and 10% of the winding hole diameter. Therefore, the hole formed at the core C of the electrode assembly 10 is not closed. As the hole is not closed, there is no difficulty in the electrolyte injection process, thereby improving the electrolyte injection efficiency. In addition, it is possible to easily weld the terminal 50 and the first current collector 40 by inserting the welding tool through the hole (see FIG. 7).

Meanwhile, when the outer diameter of the first current collector 40 and/or the second current collector 70 is T, the outer diameter of the electrode assembly 10 is JR, and the height of the outermost segment of the first uncoated region 11 and/or the outermost segment of the second uncoated region 12 is F, the following relation equation may be satisfied. Here, the outer diameter of the first current collector 40 is twice the distance from the center of the first current collector 40 to the end of the first uncoated region coupling portion 42, and the outer diameter of the second current collector 70 is twice the distance from the center of the second current collector 70 to the end of the second uncoated region coupling portion 72.

$$JR - 2*F \leq T < JR$$

Preferably, the outer diameter T of the first current collector 40 and/or the second current collector 70 may be equal to or larger than the length obtained by subtracting twice the height F of the segment 11a of the first uncoated region 11 and/or the segment of the second uncoated region 12 from the outer diameter JR of the electrode assembly 10. When this relation equation is satisfied, the first uncoated region coupling portion 42 and/or the second uncoated region coupling portion 72 covers the end of the outermost segment 11a. That is, the first current collector 40 and/or the second current collector 70 may have the outer diameter enough to cover the end of the segment bent at the last winding turn of the first electrode. In this case, all the segments 11a that form the bend surface 102 where the first uncoated region coupling portion 42 and/or the second uncoated region coupling portion 72 is coupled may be welded in a state that they are uniformly pressed by the current collector 40, and after the welding, the closely stacked state of the segments 11a may be maintained well. The closely stacked state refers to no gap, in substance, between the segments as shown in FIG. 8. The closely stacked state contributes to the reduction in the resistance of the cylindrical battery 1 below the suitable level (for example, 4 mOhm) for rapid charging.

In another aspect, the outer diameter T of the first current collector 40 and/or the second current collector 70 may be smaller than the outer diameter JR of the electrode assembly 10. When the outer diameter T of the first current collector 40 and/or the second current collector 70 is larger than the outer diameter JR of the electrode assembly 10, a dead space in the housing 20 increases, which may adversely affect the energy density of the cylindrical battery 1. Accordingly, preferably, the outer diameter T of the first current collector 40 and/or the second current collector 70 is smaller than the outer diameter JR of the electrode assembly 10.

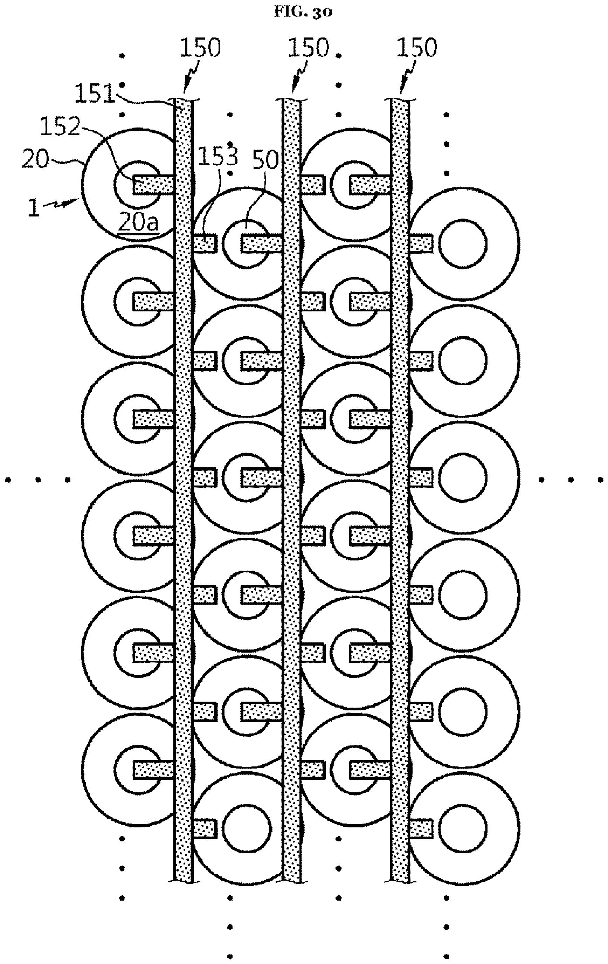

Meanwhile, referring to FIG. 30, the plurality of cylindrical batteries 1 may be connected in series and in parallel using a busbar 150 on the cylindrical batteries 1. The number of cylindrical batteries 1 may be smaller or larger, considering the capacity of the battery pack.

In each cylindrical battery 1, the terminal 50 may have the positive polarity, and the outer surface 20a of the closed portion of the housing 20 may have the negative polarity, and vice versa. The terminal 50 of the cylindrical battery 1 and the outer surface 20a of the closed portion disposed opposite the opening of the housing 20 may be positioned upward.

Preferably, the plurality of cylindrical batteries 1 may be arranged in a plurality of columns and rows. The column is a vertical direction with respect to FIG. 30, and the row is a horizontal direction with respect to the FIG. 30. In addition, in order to maximize the space efficiency, the cylindrical batteries 1 maybe arranged in a closest packing structure. The closest packing structure is formed by connecting the centers of the terminal exposure portions 51 of the terminal 50 exposed to the outside of the housing 20 to each other into a shape of a triangle, for example a right triangle or an equilateral triangle. Preferably, the busbar 150 may be positioned on the plurality of cylindrical batteries 1, more preferably between adjacent columns. Alternatively, the busbar 150 may be positioned between adjacent rows.

Preferably, the busbar 150 connects in parallel the cylindrical batteries 1 arranged in the same column, and connects in series the cylindrical batteries 1 arranged in two adjacent columns.

Preferably, the busbar 150 may include a body portion 151, a plurality of first busbar terminals 152 and a plurality of second busbar terminals 153 for serial and parallel connection.

The body portion 151 may extend between the terminals 50 of the adjacent cylindrical batteries 1, preferably between the columns of the cylindrical batteries 1. Alternatively, the body portion 151 may extend along the columns of the cylindrical batteries 1 and may be regularly bent in a zigzag pattern.

The plurality of first busbar terminals 152 may protrude and extend from one side of the body portion 151 toward the terminal 50 of each cylindrical battery 1 and may be electrically coupled to the terminal 50. The electrical coupling between the first busbar terminal 152 and the terminal 50 may be made by laser welding and ultrasonic welding. In addition, the plurality of second busbar terminals 153 may be electrically coupled to the outer surface 20a of each cylindrical battery 1 from the other side of the body portion 151. The electrical coupling between the second busbar terminal 153 and the outer surface 20a may be made by laser welding and ultrasonic welding.

Preferably, the body portion 151, the plurality of first busbar terminals 152 and the plurality of second busbar terminals 153 may be made of a single conductive metal plate. The metal plate may be, for example, an aluminum plate or a copper plate, but the present disclosure is not limited thereto. In a variation, the body portion 151, the plurality of first busbar terminals 152 and the second busbar terminals 153 may be separately manufactured by the unit of a piece and then coupled to each other, for example, through welding.

The cylindrical battery 1 according to the present disclosure includes the terminal 50 having the positive polarity and the outer surface 20a of the closed portion of the housing 20 having the negative polarity are disposed in the same direction, and thus it is possible to easily establish the electrical connection of the cylindrical batteries 1 using the busbar 150.

In addition, the terminal 50 of the cylindrical battery 1 and the outer surface 20a of the closed portion of the housing 20 have large areas, and thus it is possible to sufficiently reduce the resistance of the battery pack including the cylindrical battery 1 due to a sufficient coupling area of the busbar 150.

Preferably, the cylindrical battery may be, for example, a cylindrical battery with the form factor ratio (defined as a value obtained by dividing the diameter of the cylindrical battery by height, or a ratio of height H to diameter Φ) of more than about 0.4.

Here, the form factor refers to a value indicating the diameter and height of the cylindrical battery. The cylindrical battery according to an embodiment of the present disclosure may include, for example, 46110 battery, 4875 battery, 48110 battery, 4880 battery and 4680 battery. In the numbers indicating the form factor, first two numbers indicate the diameter of the battery, next two numbers indicate the height of the battery, and the last number 0 indicates that the battery is circular in cross section. When the cylindrical battery is 100 mm or more in height, three digit numbers are necessary to indicate the height of the cylindrical battery, so the last number may be omitted.

The cylindrical battery according to an embodiment of the present disclosure may be a cylindrical battery having an approximately cylindrical shape, with the diameter of approximately 46 mm, the height of approximately 110 mm and the form factor ratio of approximately 0.418.

The cylindrical battery according to another embodiment may be a cylindrical battery having a substantially cylindrical shape, with the diameter of approximately 48 mm, the height of approximately 75 mm and the form factor ratio of approximately 0.640.

The battery according to still another embodiment may be a cylindrical battery having an approximately cylindrical shape, with the diameter of approximately 48 mm, the height of approximately 110 mm and the form factor ratio of approximately 0.436.

The battery according to further another embodiment may be a cylindrical battery having an approximately cylindrical shape, with the diameter of approximately 48 mm, the height of approximately 80 mm and the form factor ratio of approximately 0.600.

The battery according to yet another embodiment may be a cylindrical battery having an approximately cylindrical shape, with the diameter of approximately 46 mm, the height of approximately 80 mm and the form factor ratio of approximately 0.575.

Conventionally, batteries having the form factor ratio of about 0.4 or less have been used. That is, conventionally, for example, 1865 batteries and 2170 batteries have been used. The 1865 battery has the diameter of approximately 18 mm, the height of approximately 65 mm, and the form factor ratio of approximately 0.277. The 2170 battery has the diameter of approximately 21 mm, the height of approximately 70 mm and the form factor ratio of approximately 0.300.

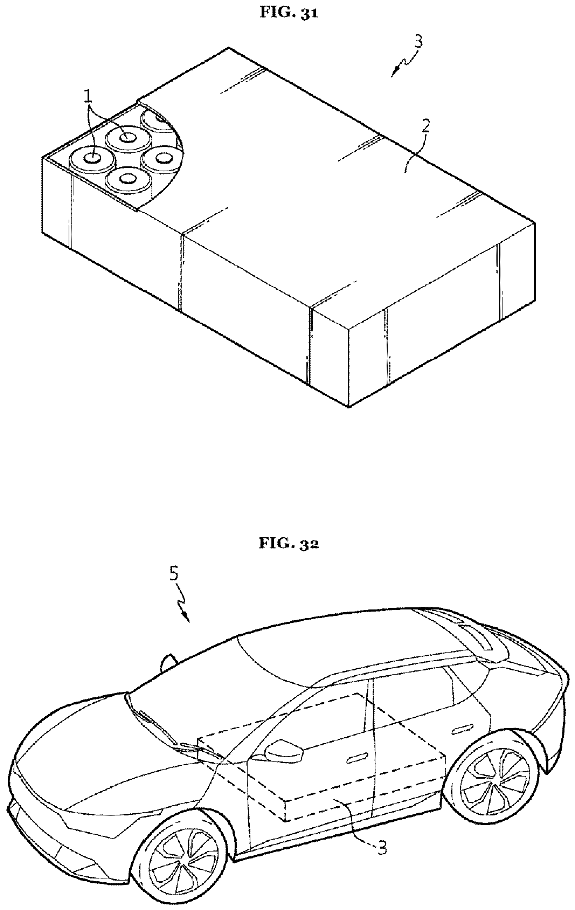

Referring to FIG. 31, the battery pack 3 according to an embodiment of the present disclosure includes a secondary battery assembly including the plurality of cylindrical batteries 1 according to an embodiment of the present disclosure as described above, electrically connected to one another, and a pack housing 2 which accommodate the same. The illustration of the component for electrical connection such as the busbar, a cooling unit and a power terminal is omitted from the drawings of the present disclosure for convenience of illustration. The electrical connection structure of the plurality of batteries 1 for manufacturing the battery pack 3 is described above with reference to FIG. 30 for illustrative purposes.

Referring to FIG. 32, a vehicle 5 according to an embodiment of the present disclosure may be, for example, an electric vehicle, a hybrid electric vehicle or a plug-in vehicle, and includes the battery pack 3 according to an embodiment of the present disclosure. The vehicle 5 may be a four-wheeled vehicle or a two-wheeled vehicle. The vehicle 5 works using the power supplied from the battery pack 3 according to an embodiment of the present disclosure.

In view of the above, it will be appreciated that the present invention also relates to the following itemized embodiments:

ITEM 1. A battery, comprising:

an electrode assembly which defines a core and an outer circumferential surface by winding a first electrode, a second electrode and a separator interposed between the first electrode and the second electrode around a winding axis, wherein the first electrode includes a first uncoated region at an end of a long side along a winding direction, the first uncoated region in which an active material layer is not coated is exposed to outside of the separator, and at least part of the first uncoated region itself is used as an electrode tab;

a housing including an open portion on one side, and configured to receive the electrode assembly through the open portion;

a first current collector including an edge portion positioned on the electrode assembly, a first uncoated region coupling portion extending inward from the edge portion and coupled with the first uncoated region, and a terminal coupling portion spaced apart from the first uncoated region coupling portion; and

a terminal which is coupled with the terminal coupling portion.

ITEM 2. The battery according to item 1, wherein the edge portion has a shape of a rim having an empty internal space.

ITEM 3. The battery according to item 1 or 2, wherein the first uncoated region coupling portion and the terminal coupling portion are electrically connected by the edge portion.

ITEM 4. The battery according to any one of the preceding items, wherein the terminal coupling portion is disposed at a center of the internal space of the edge portion.

ITEM 5. The battery according to any one of the preceding items, wherein the first current collector further includes a connecting portion extending inward from the edge portion and connected to the terminal coupling portion.

ITEM 6. The battery according to any one of the preceding items, wherein at least part of the connecting portion is smaller in cross-sectional area than the first uncoated region coupling portion.

ITEM 7. The battery according to any one of the preceding items, wherein at least part of the connecting portion is smaller in at least one of width or thickness than the first uncoated region coupling portion.

ITEM 8. The battery according to any one of the preceding items, wherein the connecting portion includes a taper portion in which width of the connection portion is continuously or gradually reduced along a direction from an inner surface of the edge portion toward the terminal coupling portion.

ITEM 9. The battery according to any one of the preceding items, wherein a plurality of first uncoated region coupling portions is provided.

ITEM 10. The battery according to any one of the preceding items, wherein the plurality of first uncoated region coupling portions is regularly arranged along an extension direction of the edge portion.

ITEM 11. The battery according to any one of the preceding items, wherein an extended length of each of the plurality of first uncoated region coupling portions is substantially equal to each other.

ITEM 12. The battery according to any one of the preceding items, wherein a cross-sectional area of each of the plurality of first uncoated region coupling portions is substantially equal.

ITEM 13. The battery according to any one of the preceding items, wherein a width and thickness of each of the plurality of first uncoated region coupling portions is substantially equal.

ITEM 14. The battery according to any one of the preceding items, wherein the terminal coupling portion is positioned such that the terminal coupling portion is surrounded by the plurality of first uncoated region coupling portions.

ITEM 15. The battery according to any one of the preceding items, wherein the connecting portion is disposed between a pair of adjacent first uncoated region coupling portions.

ITEM 16. The battery according to any one of the preceding items, wherein a distance from the connecting portion to one of the pair of adjacent first uncoated region coupling portions along an extension direction of the edge portion is substantially equal to a distance to the other one.

ITEM 17. The battery according to any one of the preceding items, wherein a plurality of connecting portions is provided.

ITEM 18. The battery according to any one of the preceding items, wherein each of the plurality of connecting portions is positioned between a pair of adjacent first uncoated region coupling portions.

ITEM 19. The battery according to any one of the preceding items, wherein the plurality of connecting portions is regularly arranged along an extension direction of the edge portion.

ITEM 20. The battery according to any one of the preceding items, wherein a distance from each of the plurality of connecting portions to one of the pair of adjacent first uncoated region coupling portions along an extension direction of the edge portion is substantially equal to a distance to the other one.

ITEM 21. The battery according to any one of the preceding items, wherein the connecting portion includes a current interruption portion configured to reduce a cross-sectional area of the connecting portion.

ITEM 22. The battery according to any one of the preceding items, wherein the current interruption portion is an region which is smaller in at least one of width or thickness than a remaining region of the connecting portion.

ITEM 23. The battery according to any one of the preceding items, wherein the current interruption portion includes at least one of a notch, a groove or a through-hole formed on at least one surface of the connecting portion.

ITEM 24. The battery according to any one of the preceding items, wherein the terminal coupling portion is disposed at a location corresponding to a hole formed at a winding center of the electrode assembly.

ITEM 25. The battery according to any one of the preceding items, wherein the terminal coupling portion is configured to cover a hole formed at a winding center of the electrode assembly to prevent the hole formed at the winding center of the electrode assembly from being exposed to outside of the terminal coupling portion.

ITEM 26. The battery according to any one of the preceding items, wherein a diameter of the terminal coupling portion is equal to or larger than a diameter of the hole formed at the winding center of the electrode assembly.

ITEM 27. The battery according to any one of the preceding items, wherein the first uncoated region extends toward a closed portion disposed on a side opposite to the open portion of the housing.

ITEM 28. The battery according to any one of the preceding items, wherein the first uncoated region coupling portion is coupled onto a coupling surface formed by bending an end of the first uncoated region along a direction parallel to the first current collector.

ITEM 29. The battery according to any one of the preceding items, further comprising: a cap to seal the open portion of the housing.

ITEM 30. The battery according to any one of the preceding items, wherein the cap is not electrically connected to the electrode assembly and has no polarity.

ITEM 31. The battery according to any one of the preceding items, wherein the housing includes:

a beading portion formed adjacent to the open portion and press-fit toward an inner side of the housing; and a crimping portion formed below the beading portion, and extended and bent such that the crimping portion surrounds circumferential edges of the cap.

ITEM 32. The battery according to any one of the preceding items, further comprising:
a sealing gasket positioned in the crimping portion, and interposed between the housing and the cap.

ITEM 33. The battery according to any one of the preceding items, wherein the terminal passes through a closed portion disposed on a side opposite to the open portion of the housing.

ITEM 34. The battery according to any one of the preceding items, wherein the terminal passes through a center of the closed portion.

ITEM 35. The battery according to any one of the preceding items, wherein the terminal is insulated from the housing.

ITEM 36. The battery according to any one of the preceding items, wherein an insulation gasket is interposed between the housing and the terminal.

ITEM 37. The battery according to any one of the preceding items, further comprising: an insulator interposed between a closed portion disposed on a side opposite to the open portion of the housing and the first current collector.

ITEM 38. The battery according to any one of the preceding items, wherein the insulator has a thickness corresponding to a distance between an inner surface of the closed portion of the housing and the first current collector.

ITEM 39. The battery according to any one of the preceding items, wherein the terminal is coupled with the terminal coupling portion of the first current collector through a hole formed in the insulator.

ITEM 40. The battery according to any one of the preceding items, wherein a lower end of the terminal coupled with the terminal coupling portion is disposed at a height that is equal to or higher than a lower surface of the insulator.

ITEM 41. The battery according to any one of the preceding items, wherein the insulator is interposed between the first uncoated region and a sidewall of the housing.

ITEM 42. The battery according to any one of the preceding items, wherein an upper surface of the insulator contacts an inner surface of the closed portion disposed on the side opposite to the open portion of the housing, and a lower surface of the insulator contacts an upper surface of the first current collector.

ITEM 43. The battery according to any one of the preceding items, wherein the second electrode further includes a second uncoated region in which the active material layer is not coated at the end of the long side along the winding direction, and the second uncoated region extends in a direction opposite to the first uncoated region and is exposed to the outside of the separator.

ITEM 44. The battery according to any one of the preceding items, wherein the housing is electrically connected to the second uncoated region.

ITEM 45. The battery according to any one of the preceding items, further comprising:
a second current collector coupled to each of the second uncoated region and the housing to electrically connect the second uncoated region to the housing.

ITEM 46. The battery according to any one of the preceding items, wherein the second current collector has a second current collector hole formed in an area corresponding to a hole formed at a winding center of the electrode assembly.

ITEM 47. The battery according to any one of the preceding items, wherein the second current collector hole has a diameter that is equal to or larger than the hole formed at the winding center of the electrode assembly not to cover the hole formed at the winding center of the electrode assembly.

ITEM 48. The battery according to any one of the preceding items, wherein the second current collector includes:

a second uncoated region coupling portion coupled with the second uncoated region; and
a housing coupling portion coupled with the housing.

ITEM 49. The battery according to any one of the preceding items, wherein the second uncoated region and the second uncoated region coupling portion are coupled to each other by welding.

ITEM 50. The battery according to any one of the preceding items, wherein the housing and the housing coupling portion are coupled to each other by welding.

ITEM 51. The battery according to any one of the preceding items, wherein the housing includes a beading portion which is formed adjacent to the open portion and press-fit inward.

ITEM 52. The battery according to any one of the preceding items, wherein the housing coupling portion is electrically coupled to a lower surface of the beading portion.

ITEM 53. The battery according to any one of the preceding items, wherein a distance from a center of the first current collector to an outermost side of the edge portion is longer than a distance from a center of the second current collector to an outermost side of the second uncoated region coupling portion.

ITEM 54. The battery according to any one of the preceding items, wherein the distance from the center of the second current collector to the outermost side of the second uncoated region coupling portion is equal to or shorter than one half of an inner diameter at an area in which the beading portion of the housing is formed.

ITEM 55. The battery according to any one of the preceding items, wherein at least part of the first uncoated region includes a plurality of segments split along the winding direction of the electrode assembly, and
the plurality of segments is bent along a radial direction of the electrode assembly.

ITEM 56. The battery according to any one of the preceding items, wherein the plurality of bent segments overlaps in multiple layers.

ITEM 57. The battery according to any one of the preceding items, wherein the electrode assembly has a welding target area in which the number of overlaps of the segments of the first uncoated region is uniformly maintained along the radial direction of the electrode assembly.

ITEM 58. The battery according to any one of the preceding items, wherein at least part of the second uncoated region includes a plurality of segments split along the winding direction of the electrode assembly, and
the plurality of segments is bent along a radial direction of the electrode assembly.

ITEM 59. The battery according to any one of the preceding items, wherein the plurality of bent segments overlaps in multiple layers.

ITEM 60. The battery according to any one of the preceding items, wherein the electrode assembly has a welding target area in which the number of overlaps of the segments of the second uncoated region is uniformly maintained along the radial direction of the electrode assembly.

ITEM 61. The battery according to any one of the preceding items, wherein the first current collector further includes a bridge portion connecting at least one of the following: between the adjacent first uncoated region coupling portions, between the first uncoated region coupling portion and the connecting portion adjacent to each other, and between the adjacent connecting portions.

ITEM 62. The battery according to any one of the preceding items, wherein the bridge portion is disposed at an inner position than the edge portion.

ITEM 63. The battery according to any one of the preceding items, wherein the first current collector has an impregnation hole between the edge portion and the bridge portion.

ITEM 64. The battery according to any one of the preceding items, wherein the impregnation hole has a shape of a slit extending along an extension direction of the edge portion.

ITEM 65. The battery according to any one of the preceding items, wherein a ratio of a non-contact area between the first current collector and an upper surface of the electrode assembly to an area of a circle having an outer diameter of the electrode assembly as a diameter is 20% or more and less than 100%.

ITEM 66. The battery according to any one of the preceding items, wherein the number of connecting portions is one or two.

ITEM 67. The battery according to any one of the preceding items, wherein the cross-sectional area of the connecting portion in an area in which the current interruption portion is formed is 0.6 to 0.9 compared to the cross-sectional area of the connecting portion in an area adjacent to the area in which the current interruption portion is formed.

ITEM 68. The battery according to any one of the preceding items, wherein the cross-sectional area of the connecting portion is 0.2 to 1.0 compared to a cross-sectional area of the first uncoated region coupling portion.

ITEM 69. The battery according to any one of the preceding items, wherein an outer diameter of the first current collector ranges from 33% to 98.5% compared to an inner diameter of the housing.

ITEM 70. The battery according to any one of the preceding items, wherein the welding target area is an area in which the number of overlapping layers of the plurality of bent segments is maintained at a maximum.

ITEM 71. The battery according to any one of the preceding items, wherein the first current collector is welded to the first uncoated region by at least 50% overlap with the welding target area.

ITEM 72. The battery according to any one of the preceding items, wherein the welding target area is an area in which the number of overlapping layers of the plurality of bent segments is maintained at a maximum.

ITEM 73. The battery according to any one of the preceding items, wherein the second current collector is welded to the second uncoated region by at least 50% overlap with the welding target area.

ITEM 74. The battery according to any one of the preceding items, wherein a resistance measured between a positive electrode and a negative electrode of the battery is 4 mohm or less.

ITEM 75. The battery according to any one of the preceding items, wherein the current interruption portion is formed 40% to 90% away from the core of the electrode assembly on the basis of a radius of the electrode assembly along a radial direction.

ITEM 76. The battery according to any one of the preceding items, wherein at least part of the first uncoated region includes a plurality of segments split along the winding direction of the electrode assembly, and the plurality of segments is bent along a radial direction of the electrode assembly and overlaps in multiple layers, and the current interruption portion is provided in an area corresponding to the welding target area in which the number of overlaps of the segments of the first uncoated region is uniformly maintained along the radial direction of the electrode assembly.

ITEM 77. The battery according to any one of the preceding items, wherein a tape is coupled to the current interruption portion.

ITEM 78. The battery according to any one of the preceding items, wherein the tape is made of polyimide.

ITEM 79. The battery according to any one of the preceding items, wherein the tape surrounds the connecting portion in an area in which the current interruption portion is formed.

ITEM 80. The battery according to any one of the preceding items, wherein when an outer diameter of the first current collector is T, an outer diameter of the electrode assembly is JR, and a height of the segment disposed on an outermost side in the radial direction of the electrode assembly is F,
JR - 2*F $\leq$ T < JR is satisfied.

ITEM 81. The battery according to any one of the preceding items, wherein a welding pattern formed by a welding bead formed on one surface of the terminal coupling portion of the first current collector runs around a center of a bottom surface of the terminal.

ITEM 82. The battery according to any one of the preceding items, wherein the welding pattern is continuously or discontinuously formed.

ITEM 83. The battery according to any one of the preceding items, wherein a tensile strength of a welded portion formed between the terminal coupling portion of the first current collector and a bottom surface of the terminal is 2 kgf or more.

ITEM 84. The battery according to any one of the preceding items, wherein a converted diameter of a welding pattern formed by a welding bead formed on one surface of the terminal coupling portion of the first current collector is 2 mm or more.

ITEM 85. The battery according to any one of the preceding items, wherein a flat portion formed on the bottom surface of the terminal is 3 mm to 14 mm in diameter.

ITEM 86. The battery according to any one of the preceding items, wherein a ratio of an area of a welding pattern formed by a welding bead formed on the surface of the terminal coupling portion of the first current collector compared to an area of a flat portion formed on a bottom surface of the terminal is 2.04% to 44.4%.

ITEM 87. The battery according to any one of the preceding items, wherein the second current collector hole is smaller in diameter than the hole formed at the winding center of the electrode assembly.

ITEM 88. The battery according to any one of the preceding items, wherein when the diameter of the winding hole is $R_3$, the diameter of the second current collector hole is $0.5*R_3$ or more and less than $R_3$.

ITEM 89. The battery according to any one of the preceding items, wherein when the diameter of the winding hole is $R_3$, the diameter of the second current collector hole is $0.7*R_3$ or more and less than $R_3$.

ITEM 90. The battery according to any one of the preceding items, wherein a form factor ratio obtained by dividing a diameter of the battery by a height is larger than 0.4.

ITEM 91. The battery according to any one of the preceding items, wherein a length of the welded portion extended along the radial direction of the electrode assembly in the coupling between the first uncoated region coupling portion and the first uncoated region, is longer than a length of the welded portion extended along the radial direction of the electrode assembly in the coupling between the second uncoated region coupling portion and the second uncoated region.

ITEM 92. The battery according to any one of the preceding items, wherein with respect to the core of the electrode assembly, a distance to a start point of the welded portion which couples the first uncoated region coupling portion and the first uncoated region and a distance to a start point of the welded portion which couples the second uncoated region coupling portion and the second uncoated region are substantially equal.

ITEM 93. The battery according to any one of the preceding items, wherein a plurality of current interruption portions is provided along a lengthwise direction of the connecting portion.

ITEM 94. The battery according to any one of the preceding items, wherein a connected portion between the edge portion and the terminal does not have a welded portion.

ITEM 95. A battery pack, comprising:

a plurality of batteries according to any one of the preceding items; and
a pack housing to accommodate the plurality of batteries.

ITEM 96. The battery pack according to item 95, wherein a plurality of batteries is arranged in a predetermined number of columns, and
the terminal of each battery and the outer surface of the closed portion of the housing disposed on the side opposite to the open portion of the housing are positioned upward.

ITEM 97. The battery pack according to item 95 or 96, wherein the battery pack includes a plurality of busbars connecting the plurality of batteries in series and in parallel, and

the plurality of busbars is positioned on the plurality of batteries, and
each busbar includes:

a body portion extending between the terminals of the adjacent batteries;
a plurality of first busbar terminals extending in one direction of the body portion and electrically coupled to the terminal of the battery disposed in the said direction; and
a plurality of second busbar terminals extending in the other direction of the body portion and electrically coupled to the outer surface of the closed portion of the housing of the battery disposed in the other direction.

ITEM 98. A vehicle comprising the battery pack according to any one of items 95 to 97.

ITEM 99. A current collector which is applied to a battery including an electrode assembly having a first uncoated region and a second uncoated region, a housing which accommodates the electrode assembly through an open portion formed on one side, and is electrically connected to the second uncoated region, and a terminal electrically connected to the first uncoated region,

wherein the current collector is interposed between the closed portion of the housing disposed on a side opposite to the open portion and the electrode assembly, and is coupled onto one surface of the electrode assembly, and the current collector comprises:

an edge portion positioned on one surface of the electrode assembly;
a first uncoated region coupling portion extending inward from the edge portion and coupled with the first uncoated region; and
a terminal coupling portion spaced apart from the first uncoated region coupling portion and coupled with the terminal.

ITEM 100. The current collector according to item 99, wherein the edge portion has a shape of a rim having an empty internal space.

ITEM 101. The current collector according to item 99 or 100, wherein the first uncoated region coupling portion and the terminal coupling portion are electrically connected by the edge portion.

ITEM 102. The current collector according to any one of items 99 to 101, wherein the terminal coupling portion is disposed at a center of the internal space of the edge portion.

ITEM 103. The current collector according to any one of items 99 to 102, further comprising:
a connecting portion extending inward from the edge portion and connected to the terminal coupling portion.

ITEM 104. The current collector according to any one of items 99 to 103, wherein at least part of the connecting portion is smaller in cross-sectional area than the first uncoated region coupling portion.

ITEM 105. The current collector according to any one of items 99 to 104, wherein at least part of the connecting portion is smaller in at least one of width or thickness than the first uncoated region coupling portion.

ITEM 106. The current collector according to any one of items 99 to 105, wherein the connecting portion includes a taper portion in which width of the connection portion is continuously or gradually reduced along a direction from an inner surface of the edge portion toward the terminal coupling portion.

ITEM 107. The current collector according to any one of items 99 to 106, wherein a plurality of first uncoated region coupling portions is provided.

ITEM 108. The current collector according to any one of items 99 to 107, wherein the plurality of first uncoated region coupling portions is regularly arranged along an extension direction of the edge portion.

ITEM 109. The current collector according to any one of items 99 to 108, wherein an extended length of each of the plurality of first uncoated region coupling portions is substantially equal to each other.

ITEM 110. The current collector according to any one of items 99 to 109, wherein a cross-sectional area of each of the plurality of first uncoated region coupling portions is substantially equal.

ITEM 111. The current collector according to any one of items 99 to 110, wherein a width and thickness of each of the plurality of first uncoated region coupling portions is substantially equal.

ITEM 112. The current collector according to any one of items 99 to 111, wherein the terminal coupling portion is positioned such that the terminal coupling portion is surrounded by the plurality of first uncoated region coupling portions.

ITEM 113. The current collector according to any one of items 99 to 112, wherein the connecting portion is disposed between a pair of adjacent first uncoated region coupling portions, and

a distance from the connecting portion to one of the pair of first uncoated region coupling portions along an extension direction of the edge portion is substantially equal to a distance to the other one.

ITEM 114. The current collector according to any one of items 99 to 113, wherein a plurality of connecting portions is provided.

ITEM 115. The current collector according to any one of items 99 to 114, wherein each of the plurality of connecting portions is positioned between a pair of adjacent first uncoated region coupling portions.

ITEM 116. The current collector according to any one of items 99 to 115, wherein the plurality of connecting portion is regularly arranged along an extension direction of the edge portion.

ITEM 117. The current collector according to any one of items 99 to 116, wherein a distance from each of the plurality of connecting portions to one of the pair of adjacent first uncoated region coupling portions along an extension direction of the edge portion is substantially equal to a distance to the other one.

ITEM 118. The current collector according to any one of items 99 to 117, wherein the connecting portion includes a current interruption portion configured to reduce a cross-sectional area of the connecting portion.

ITEM 119. The current collector according to any one of items 99 to 118, wherein the current interruption portion is area reion which is smaller in at least one of width or thickness than a remaining region of the connecting portion.

ITEM 120. The current collector according to any one of items 99 to 119, wherein the current interruption portion includes at least one of a notch, a groove or a through-hole formed on at least one surface of the connecting portion.

ITEM 121. The current collector according to any one of items 99 to 120, further comprising:
a bridge portion connecting at least one of the following: between the adjacent first uncoated region coupling portions, between the first uncoated region coupling portion and the connecting portion adjacent to each other, and between the adjacent connecting portions.

ITEM 122. The current collector according to any one of items 99 to 121, wherein the bridge portion is disposed at an inner position than the edge portion.

ITEM 123. The current collector according to any one of items 99 to 122, wherein an impregnation hole is formed between the edge portion and the bridge portion.

ITEM 124. The current collector according to any one of items 99 to 123, wherein the impregnation hole has a shape of a slit extending along an extension direction of the edge portion.

ITEM 125. The current collector according to any one of items 99 to 124, wherein the number of connecting portions is one or two.

ITEM 126. The current collector according to any one of items 99 to 125, wherein the cross-sectional area of the connecting portion in an area in which the current interruption portion is formed is 0.6 to 0.9 compared to the cross-sectional area of the connecting portion in an area adjacent to the area in which the current interruption portion is formed.

ITEM 127. The current collector according to any one of items 99 to 126, wherein a cross-sectional area of the connecting portion is 0.2 to 1.0 compared to a cross-sectional area of the first uncoated region coupling portion.

ITEM 128. The current collector according to any one of items 99 to 127, wherein a tape is coupled to the current interruption portion.

ITEM 129. The current collector according to any one of items 99 to 128, wherein the tape is made of polyimide.

ITEM 130. The current collector according to any one of items 99 to 129, wherein the tape is configured to surround the connecting portion in the area in which the current interruption portion is formed.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the appended claims and their equivalent scope.

DESCRIPTION OF REFERENCE NUMERALS

5: Vehicle
3: Battery pack
2: Pack housing
1: battery
150: Busbar
151: Body portion
152: First busbar terminal
153: Second busbar terminal
10: Electrode assembly
11: First uncoated region
11a: Segment
12: Second uncoated region
C: Winding center
20: Housing
20a: Outer surface (Second electrode terminal)
21: Beading portion
21a: Upper beading portion
21b: Lower beading portion
22: Crimping portion
30: Cap
31: Venting portion

$G_1$: Sealing gasket
40: Current collector (first current collector)
41: Edge portion
42: First uncoated region coupling portion
43: Terminal coupling portion
44: Connecting portion
45: Bridge portion
40a: Impregnation hole
44a: Taper portion
N: Notch (Current interruption portion)
G: Groove (Current interruption portion)
T: Through-hole (Current interruption portion)
46: Cover member
50: Terminal (First electrode terminal)
51: Terminal exposure portion
52: Terminal insert portion
52a: Electrical connection portion
52b: Flange portion
$G_2$: Insulation gasket
GA: Gasket exposure portion
GB: Gasket insert portion
60: Insulator
70: Current collector (Second current collector)
70a: Second current collector hole
71: Support portion
72: Second uncoated region coupling portion
72a: Injection hole
73: Housing coupling portion
73a: Contact portion
73b: Extension portion

**Claims**

1.  A battery, comprising:

    an electrode assembly formed by winding a first electrode, a second electrode and a separator interposed between the first electrode and the second electrode around a winding axis, wherein the first electrode includes a first uncoated region free of an active material layer, the first uncoated region being disposed adjacent to an edge of the first electrode extending along a winding direction of the electrode assembly, wherein the first uncoated region is exposed from the separator and at least a part of the first uncoated region itself is used as an electrode tab;
    a housing in which the electrode assembly is arranged;
    a first current collector including an edge portion arranged on the electrode assembly, a first uncoated region coupling portion extending inward from the edge portion towards the winding axis and coupled with the first uncoated region, and a terminal coupling portion spaced apart from the first uncoated region coupling portion; and
    a terminal which is coupled with the terminal coupling portion.

2.  The battery according to claim 1, wherein:

    the edge portion has a shape of a rim extending around an inner space, in particular wherein the terminal coupling portion is disposed at a center of the inner space of the edge portion; and/or
    the first uncoated region coupling portion and the terminal coupling portion are electrically connected by the edge portion.

3.  The battery according to claim 1 or 2, wherein the first current collector further includes a connecting portion extending inward from the edge portion towards the winding axis and connected to the terminal coupling portion.

4. The battery according to claim 3, wherein:

at least a part of the connecting portion has a smaller cross-sectional area than the first uncoated region coupling portion, in particular wherein at least a part of the connecting portion has a smaller width and/or a smaller thickness than the first uncoated region coupling portion; and/or
the connecting portion includes a tapered portion in which a width of the connecting portion decreases continuously or gradually along a direction from the edge portion toward the terminal coupling portion; and/or
the connecting portion between the edge portion and the terminal coupling portion does not have a welded portion.

5. The battery according to any one of the preceding claims, wherein the first current collector comprises a plurality of first uncoated region coupling portions, each of which extends inward from the edge portion towards the winding axis.

6. The battery according to claim 5, wherein:

the plurality of first uncoated region coupling portions is arranged equidistantly along the edge portion; and/or
a length of each of the plurality of first uncoated region coupling portions is substantially equal; and/or
a cross-sectional area of each of the plurality of first uncoated region coupling portions is substantially equal; and/or
a width and a thickness of each of the plurality of first uncoated region coupling portions is substantially equal.

7. The battery according to claim 5 or 6, wherein:

the terminal coupling portion is arranged such that the terminal coupling portion is surrounded by the plurality of first uncoated region coupling portions; and/or
the connecting portion is disposed between a pair of adjacent first uncoated region coupling portions, in particular wherein the connecting portion is arranged at a substantially same distance to each of the pair of adjacent first uncoated region coupling portions along the edge portion.

8. The battery according to any one of the preceding claims, wherein the first current collector comprises a plurality of connecting portions, each of which extends inward from the edge portion towards the winding axis.

9. The battery according to claim 8, wherein:

the first current collector comprises a plurality of first uncoated region coupling portions extending inward from the edge portion towards the winding axis and each of the plurality of connecting portions is arranged between a respective pair of adjacent first uncoated region coupling portions, in particular wherein a distance along the edge portion from each of the plurality of connecting portions to one of the respective pair of adjacent first uncoated region coupling portions is substantially equal to a distance to the other one of the respective pair of adjacent first uncoated region coupling portions; and/or
wherein the plurality of connecting portions is arranged equidistantly along the edge portion.

10. The battery according to any one of claims 3 to 9, wherein the connecting portion includes a current interruption portion having a smaller cross-sectional area than adjacent portions of the connecting portion.

11. The battery according to claim 10, wherein:

the current interruption portion is a portion of the connecting portion which has a smaller width and/or a smaller thickness than adjacent portions of the connecting portion; and/or
the current interruption portion includes at least one of a notch, a groove or a through-hole formed on at least one surface of the connecting portion; and/or
the connecting portion includes a plurality of current interruption portions arranged along a length of the connecting portion.

12. The battery according to any one of the preceding claims, wherein the terminal coupling portion is aligned with a hole extending through the electrode assembly along the winding axis, in particular wherein:

the terminal coupling portion covers an opening of the hole extending through the electrode assembly to prevent the hole from being exposed; and/or
a diameter of the terminal coupling portion is equal to or larger than a diameter of the hole extending through the electrode assembly.

13. The battery according to any one of the preceding claims, wherein the first uncoated region coupling portion is coupled onto a coupling surface formed by bending the first uncoated region such that a distal end of the first uncoated region extends along a direction parallel to a sideface of the first current collector.

14. The battery according to any one of the preceding claims, wherein the housing comprises a first end face and a second end face opposite to the first end face, the second end face having an opening for inserting the electrode assembly into the housing.

15. The battery according to claim 14, wherein the first uncoated region extends from the electrode assembly toward the first end face.

16. The battery according to claim 14 or 15, further comprising:
a cap to seal the opening for inserting the electrode assembly into the housing, in particular wherein the cap is not electrically connected to the electrode assembly and has no polarity.

17. The battery according to claim 16, wherein the housing includes:

a beading portion adjacent to the second end face, wherein the beading portion protrudes inward toward an inside of the housing; and
a crimping portion arranged between the beading portion and the second end face, wherein the crimping portion surrounds circumferential edges of the cap,

in particular wherein the battery further comprises:
a sealing gasket arranged in the crimping portion and interposed between the housing and the cap.

18. The battery according to any one of claims 14 to 17, wherein the terminal passes through the first end face of the housing, in particular wherein the terminal passes through a center of the first end face.

19. The battery according to any one of the preceding claims, wherein the terminal is insulated from the housing, in particular wherein an insulation gasket is interposed between the housing and the terminal.

20. The battery according to any one of claims 14 to 19, further comprising an insulator interposed between the first end face and the first current collector, in particular wherein:

the insulator has a thickness equal to a distance between an inner surface of the first end face of the housing and the first current collector; and/or
the terminal is coupled with the terminal coupling portion of the first current collector through a hole formed in the insulator; and/or
an inner end of the terminal coupled with the terminal coupling portion is disposed at a distance from the first end face that is equal to or smaller than a distance from the first end face to an inner surface of the insulator; and/or
the insulator is interposed between the first uncoated region and a sidewall of the housing; and/or
an outer surface of the insulator contacts an inner surface of the first end face of the housing and an inner surface of the insulator contacts an outer surface of the first current collector.

21. The battery according to any one of the preceding claims, wherein the second electrode further includes a second uncoated region free of the active material layer, the second uncoated region being disposed adjacent to an edge of the second electrode that extends along the winding direction and is arranged opposite to the edge of the first electrode adjacent to which the first uncoated region is disposed, wherein the second uncoated region is exposed from the separator.

22. The battery according to claim 21, wherein the housing is electrically connected to the second uncoated region.

23. The battery according to claim 22, further comprising a second current collector coupled to each of the second uncoated region and the housing to electrically connect the second uncoated region to the housing, in particular wherein the second current collector has a second current collector hole aligned with a hole extending through the electrode assembly along the winding axis, in particular wherein:

the second current collector hole has a diameter that is equal to or larger than a diameter of the hole extending through the electrode assembly to not cover the hole extending through the electrode assembly; or

the second current collector hole has a diameter that is smaller than the diameter of the hole extending through the electrode assembly, in particular wherein when the diameter of the hole extending through the electrode assembly is $R_3$, the diameter of the second current collector hole is $0.5*R_3$ or more and less than $R_3$, preferably $0.7*R_3$ or more and less than $R_3$.

24. The battery according to claim 23, wherein the second current collector includes:

a second uncoated region coupling portion coupled with the second uncoated region; and
a housing coupling portion coupled with the housing, in particular wherein:

the second uncoated region and the second uncoated region coupling portion are coupled to each other by welding; and/or
the housing and the housing coupling portion are coupled to each other by welding; and/or
the housing includes a beading portion adjacent to a second end face of the housing having an opening for inserting the electrode assembly into the housing, wherein the beading portion protrudes inward toward an inside of the housing, wherein preferably the housing coupling portion is electrically coupled to a lower surface of the beading portion facing the second end face of the housing; and/or
a distance from a center of the first current collector to an outermost side of the edge portion of the first current collector is longer than a distance from a center of the second current collector to an outermost side of the second uncoated region coupling portion, wherein preferably the distance from the center of the second current collector to the outermost side of the second uncoated region coupling portion is equal to or shorter than one half of an inner diameter of the housing in an area in which the beading portion of the housing is formed.

25. The battery according to any one of the preceding claims, wherein at least a part of the first uncoated region and/or at least a part of the second uncoated region each includes a respective plurality of segments that are spaced apart from each other along the winding direction of the electrode assembly with the plurality of segments being bent inward such that distal ends of the plurality of segments extend along a radial direction of the electrode assembly towards the winding axis.

26. The battery according to claim 25, wherein, for the first uncoated region and/or for the second uncoated region, the plurality of bent segments overlaps with each other to form multiple overlapping layers, in particular wherein the electrode assembly has a first welding target area in which the number of overlapping layers formed by the plurality of bent segments of the first uncoated region is uniformly maintained along the radial direction of the electrode assembly and/or the electrode assembly has a second welding target area in which the number of overlapping layers formed by the plurality of bent segments of the second uncoated region is uniformly maintained along the radial direction of the electrode assembly.

27. The battery according to any one of the preceding claims, wherein the first current collector further includes a bridge portion connecting at least one of the following: a pair of adjacent first uncoated region coupling portions, a first uncoated region coupling portion and a connecting portion adjacent to each other, and a pair of adjacent connecting portions.

28. The battery according to claim 27, wherein:

the bridge portion is disposed closer to the winding axis than the edge portion; and/or
the first current collector has an impregnation hole between the edge portion and the bridge portion, in particular wherein the impregnation hole has a slit-like shape extending along a portion of the edge portion.

29. The battery according to any one of the preceding claims, wherein a ratio of a noncontact area between the first current collector and a surface of the electrode assembly facing the first current collector to an area of a circle having a diameter equal to an outer diameter of the electrode assembly is 20% or more and less than 100%.

**30.** The battery according to any one of claims 5 to 29, wherein:

the number of connecting portions of the first current collector is one or two; and/or
the cross-sectional area of the connecting portion in an area in which the current interruption portion is formed is 0.6 to 0.9 compared to the cross-sectional area of the connecting portion in an area adjacent to the area in which the current interruption portion is formed; and/or
the cross-sectional area of the connecting portion is 0.2 to 1.0 compared to a cross-sectional area of the first uncoated region coupling portion.

**31.** The battery according to any one of the preceding claims, wherein an outer diameter of the first current collector is between 33% and 98.5% of an inner diameter of the housing.

**32.** The battery according to any one of claims 26 to 31, wherein:

the first welding target area is an area in which the number of overlapping layers formed by the plurality of bent segments of the first uncoated region is maintained at a maximum and/or the second welding target area is an area in which the number of overlapping layers formed by the plurality of bent segments of the second uncoated region is maintained at a maximum; and/or
the first current collector is welded to the first uncoated region having at least 50% overlap with the first welding target area; and/or
the second current collector is welded to the second uncoated region having at least 50% overlap with the second welding target area.

**33.** The battery according to any one of the preceding claims, wherein a resistance measured between a positive electrode and a negative electrode of the battery is 4 milliohm or less.

**34.** The battery according to any one of claims 10 to 33, wherein:

a distance between the current interruption portion and the winding axis is between 40% and 90% of a radius of the electrode assembly along the radial direction; and/or
at least a part of the first uncoated region includes a plurality of segments that are spaced apart from each other along the winding direction of the electrode assembly, the plurality of segments is bent inward such that distal ends of the plurality of segments extend along the radial direction of the electrode assembly towards the winding axis and the plurality of bent segments overlaps with each other to form multiple overlapping layers, and the current interruption portion is arranged such that the current interruption portion, when viewed along the winding axis, overlaps with the first welding target area in which the number of overlapping layers formed by the plurality of bent segments of the first uncoated region is uniformly maintained along the radial direction of the electrode assembly; and/or
a tape is coupled to the current interruption portion, in particular wherein the tape is made of polyimide and/or wherein the tape surrounds the connecting portion in the area in which the current interruption portion is formed.

**35.** The battery according to any one of claims 26 to 34, wherein when an outer diameter of the first current collector is T, an outer diameter of the electrode assembly is JR, and a length of the outermost segment in the first uncoated region is F,
JR - 2*F $\leq$ T < JR is satisfied.

**36.** The battery according to any one of the preceding claims, wherein:

a welding bead formed on a surface of the terminal coupling portion of the first current collector extends around a center of the inner surface of the terminal, in particular wherein the welding bead is continuously or discontinuously formed; and/or
a tensile strength of a welded portion formed between the terminal coupling portion of the first current collector and the inner surface of the terminal is 2 kgf or more; and/or
a diameter of a welding bead formed on a surface of the terminal coupling portion of the first current collector is 2 mm or more; and/or

the inner surface of the terminal comprises a flat portion, in particular wherein a diameter of the flat portion is between 3 mm and 14 mm and/or a ratio of an area enclosed by a welding bead formed on the surface of the terminal coupling portion of the first current collector compared to an area of the flat portion of the inner surface of the terminal is between 2.04% and 44.4%.

37. The battery according to any one of the preceding claims, wherein a form factor ratio obtained by dividing a diameter of the battery by a height is larger than 0.4.

38. The battery according to any one of claims 24 to 37, wherein:

a radial extent of a welded portion coupling the first uncoated region coupling portion and the first uncoated region is longer than a radial extent of a welded portion coupling the second uncoated region coupling portion and the second uncoated region; and/or
a distance from the winding axis to a start point of the welded portion which couples the first uncoated region coupling portion and the first uncoated region and a distance from the winding axis to a start point of the welded portion which couples the second uncoated region coupling portion and the second uncoated region are substantially equal.

39. A battery pack, comprising:

a plurality of batteries according to any one of claims 1 to 38; and
a pack housing to accommodate the plurality of batteries.

40. The battery pack according to claim 39, wherein a plurality of batteries is arranged in one or more columns, and

the terminal of each battery and a first end face of the housing are positioned upward, wherein the first end face is opposite to a second end face of the housing having an opening for inserting the electrode assembly into the housing,
in particular wherein the battery pack includes a plurality of busbars connecting the plurality of batteries in series and in parallel, and
the plurality of busbars is arranged on the plurality of batteries, and
each busbar includes:

a body portion extending in a space between the terminals of adjacent batteries;
a plurality of first busbar terminals extending in a first direction from the body portion and electrically coupled to the terminal of a respective battery disposed in said first direction from the body portion; and
a plurality of second busbar terminals extending in a second direction from the body portion opposite to the first direction and electrically coupled to the first end face of the housing of a respective battery disposed in said second direction from the body portion.

41. A vehicle comprising the battery pack according to claim 39 or 40.

42. A current collector for electrically connecting an electrode assembly of a battery to a terminal of the battery,

wherein the current collector is configured to be interposed between the electrode assembly and a first end face of a housing of the battery accommodating the electrode assembly, the current collector is configured to be coupled with a first electrode tab on a surface of the electrode assembly facing the first end face, and
the current collector comprises:

an edge portion configured to be arranged on the surface of the electrode assembly facing the first end face;
a first electrode tab coupling portion extending inward from the edge portion towards a center of the current collector and configured to be coupled with the first electrode tab; and
a terminal coupling portion spaced apart from the first electrode tab coupling portion and configured to be coupled with the terminal.

43. The current collector according to claim 42, wherein:
the edge portion has a shape of a rim extending around an inner space, in particular wherein the terminal coupling portion is disposed at a center of the inner space of the edge portion; and/or
the first electrode tab coupling portion and the terminal coupling portion are electrically connected by the edge portion.

**44.** The current collector according to claim 42 or 43, further comprising:
a connecting portion extending inward from the edge portion towards the center of the current collector and connected to the terminal coupling portion, in particular wherein

at least a part of the connecting portion has a smaller cross-sectional area than the first electrode tab coupling portion, in particular wherein at least a part of the connecting portion has a smaller width and/or a smaller thickness than the first electrode tab coupling portion; and/or
the connecting portion includes a tapered portion in which a width of the connection portion decreases continuously or gradually along the direction from the edge portion toward the terminal coupling portion; and/or
the current collector comprises a plurality of connecting portions; and/or
the number of connecting portions is one or two.

**45.** The current collector according to any one of claims 42 to 44, wherein the current collector comprises a plurality of first electrode tab coupling portions, each of which extends inward from the edge portion towards the center of the current collector and is configured to be coupled with the first electrode tab, in particular wherein:

the plurality of first electrode tab coupling portions is arranged equidistantly along the edge portion; and/or
a length of each of the plurality of first electrode tab coupling portions is substantially equal; and/or
a cross-sectional area of each of the plurality of first electrode tab coupling portions is substantially equal; and/or
a width and a thickness of each of the plurality of first electrode tab coupling portions is substantially equal; and/or
the terminal coupling portion is arranged such that the terminal coupling portion is surrounded by the plurality of first electrode tab coupling portions; and/or

the connecting portion is disposed between a pair of adjacent first electrode tab coupling portions, in particular wherein the connecting portion is arranged at a substantially same distance to each of the pair of adjacent first electrode tab coupling portions along the edge portion.

**46.** The current collector according to claim 45, wherein the current collector comprises a plurality of connecting portions and wherein:
each of the plurality of connecting portions is arranged between a pair of adjacent first electrode tab coupling portions, in particular wherein a distance along the edge portion from each of the plurality of connecting portions to one of the respective pair of adjacent first electrode tab coupling portions is substantially equal to a distance to the other one of the respective pair of adjacent first electrode tab coupling portions; and/or
the plurality of connecting portions is arranged equidistantly along the edge portion.

**47.** The current collector according to any one of claims 44 to 46, wherein the connecting portion includes a current interruption portion having a smaller cross-sectional area than adjacent portions of the connecting portion, in particular wherein:

the current interruption portion is a portion of the connecting portion which has a smaller width and/or a smaller thickness than adjacent portions of the connecting portion; and/or
the current interruption portion includes at least one of a notch, a groove or a through-hole formed on at least one surface of the connecting portion.

**48.** The current collector according to any one of claims 42 to 47, further comprising:
a bridge portion connecting at least one of the following: a pair of adjacent first electrode tab coupling portions, a first electrode tab coupling portion and a connecting portion adjacent to each other, and a pair of adjacent connecting portions, in particular wherein:

the bridge portion is disposed closer to a center of the current collector than the edge portion; and/or
an impregnation hole is formed between the edge portion and the bridge portion, in particular wherein the impregnation hole has a slit-like shape extending along a portion of the edge portion.

**49.** The current collector according to claim 47 or 48, wherein:

the cross-sectional area of the connecting portion in an area in which the current interruption portion is formed is 0.6 to 0.9 compared to the cross-sectional area of the connecting portion in an area adjacent to the area in which the current interruption portion is formed; and/or

a cross-sectional area of the connecting portion is 0.2 to 1.0 compared to a cross-sectional area of the first electrode tab coupling portion.

50. The current collector according to any one of claims 47 to 49, wherein a tape is coupled to the current interruption portion, in particular wherein:

the tape is made of polyimide; and/or
the tape surrounds the connecting portion in the area in which the current interruption portion is formed.

FIG. 1

EP 4 325 652 A2

WINDING DIRECTION

211 210 212

Y
X

FIG. 2

EP 4 325 652 A2

54

**FIG. 3**

**FIG. 4**

FIG. 5

**FIG. 6**

**FIG. 7**

**FIG. 8**

## FIG. 9

**FIG. 10**

50(52a)

40(43)

•P

W

**FIG. 11**

50(52a)

40(43)

•P

W

FIG. 12

FIG. 13

**FIG. 14**

**FIG. 15**

## FIG. 16

## FIG. 17

**FIG. 18**

**FIG. 19**

## FIG. 20

## FIG. 21

FIG. 22

## FIG. 23

## FIG. 24

**FIG. 25**

**FIG. 26**

**FIG. 27**

**FIG. 28**

**FIG. 29**

## FIG. 30

## FIG. 31

## FIG. 32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6677082 B

- US 6680143 B